Europäisches Patentamt

(19) European Patent Office

Office européen des brevets

(11) EP 0 815 745 A1

(12) EUROPEAN PATENT APPLICATION

(43) Date of publication:
07.01.1998 Bulletin 1998/02

(51) Int. Cl.$^6$: **A23L 3/3445**, A23L 3/3409, A23B 7/152, A23B 4/16, A23G 1/02, A23G 1/18, A23C 19/10, A23C 19/05, A23C 9/152

(21) Application number: 97201846.9

(22) Date of filing: 31.03.1993

(84) Designated Contracting States:
CH DE ES FR GB IT LI

(30) Priority: 03.04.1992 US 863172
27.11.1992 US 982464
27.11.1992 US 982492

(62) Document number(s) of the earlier application(s) in accordance with Art. 76 EPC:
93908882.9 / 0 586 690

(71) Applicant:
L'AIR LIQUIDE, SOCIETE ANONYME POUR L'ETUDE ET L'EXPLOITATION DES PROCEDES GEORGES CLAUDE
75321 Paris Cédex 07 (FR)

(72) Inventors:
• Spencer, Kevin
  Hinsdale, Illinois 60521 (US)
• Bojak, Patricia
  Wheaton, Illinois 60187 (US)

(74) Representative:
Vesin, Jacques et al
L'AIR LIQUIDE, S.A.,
Service Propriété Industrielle,
75 quai d'Orsay
75321 Paris Cédex 07 (FR)

Remarks:
This application was filed on 17 - 06 - 1997 as a divisional application to the application mentioned under INID code 62.

(54) **Method of preserving foods using noble gases**

(57)  A method of processing and/or preserving a food which comprises contacting the food with a noble gas, a mixture of noble gases or a gas mixture containing at least one noble gas and a carrier.

**Description**

BACKGROUND OF THE INVENTION

Field of the Invention

The present invention relates to a method of preserving foods using noble gases.

Description of the Background

The ability of the noble gases helium (He), neon (Ne), argon (Ar), krypton (Kr), xenon (Xe) and radon (Ra) to enter into chemical combination with other atoms is extremely limited. Generally, only krypton, xenon and radon have been induced to react with other atoms, which are highly reactive such as fluorine and oxygen, and the compounds thus formed are explosively unstable. See Advanced Inorganic Chemistry, by F.A. Cotton and G. Wilkinson (Wiley, Third Edition). However, while the noble gases are, in general, chemically inert, xenon is known to exhibit certain physiological effects, such as anesthesia. Other physiological effects have also been observed with other inert gases such as nitrogen, which, for example, is known to cause narcosis when used under great pressure in deep-sea diving.

It has been reported in U.S. 3,183,171 to Schreiner that argon and other inert gases can influence the growth rate of fungi and argon is known to improve the preservation of fish or seafood. U.S. 4,946,326 to Schvester, JP 52105232, JP 80002271 and JP 77027699. However, the fundamental lack of understanding of these observations clearly renders such results difficult, if not impossible, to interpret. Moreover, the meaning of such observations is further obscured by the fact that mixtures of many gases, including oxygen, were used in these studies. Further, some of these studies were conducted at hyperbaric pressures and at freezing temperatures. At such high pressures, it is likely that the observed results were caused by pressure damage to cellular components and to the enzymes themselves.

For example, from 1964 to 1966, Schreiner documented the physiological effects of inert gases particularly as related to anesthetic effects and in studies relating to the development of suitable containment atmospheres for deep-sea diving, submarines and spacecraft. The results of this study are summarized in three reports, each entitled: "Technical Report. The Physiological Effects of Argon, Helium and the Rare Gases," prepared for the Office of Naval Research, Department of the Navy. Contract Nonr 4115(00), NR: 102-597. Three later summaries and abstracts of this study were published.

One abstract, "Inert Gas Interactions and Effects on Enzymatically Active Proteins," Fed. Proc. 26:650 (1967), restates the observation that the noble and other inert gases produce physiological effects at elevated partial pressures in intact animals (narcosis) and in microbial and mammalian cell systems (growth inhibition).

A second abstract, "A Possible Molecular Mechanism for the Biological Activity of Chemically Inert Gases," In: Intern. Congr. Physiol. Sci., 23rd, Tokyo, restates the observation that the inert gases exhibit biological activity at various levels of cellular organization at high pressures.

Also, a summary of the general biological effects of the noble gases was published by Schreiner in which the principal results of his earlier research are restated. "General Biological Effects of the Helium-Xenon Series of Elements," Fed. Proc. 27:872-878 (1968).

However, in 1969, Behnke et al refuted the major conclusions of Schreiner. Behnke et al concluded that the effects reported earlier by Schreiner are irreproducible and result solely from hydrostatic pressure, i.e., that no effects of noble gases upon enzymes are demonstrable. "Enzyme-Catalyzed Reactions as Influenced by Inert Gases at High Pressures." J. Food Sci. 34:370-375.

In essence, the studies of Schreiner were based upon the hypothesis that chemically inert gases compete with oxygen molecules for cellular sites and that oxygen displacement depends upon the ratio of oxygen to inert gas concentrations. This hypothesis was never demonstrated as the greatest observed effects (only inhibitory effects were observed) were observed with nitrous oxide and found to be independent of oxygen partial pressure. Moreover, the inhibition observed was only 1.9% inhibition per atmosphere of added nitrous oxide.

In order to refute the earlier work of Schreiner, Behnke et al independently tested the effect of high hydrostatic pressures upon enzymes, and attempted to reproduce the results obtained by Schreiner. Behnke et al found that increasing gas pressure of nitrogen or argon beyond that necessary to observe a slight inhibition of chymotrypsin, invertase and tyrosinase caused no further increase in inhibition, in direct contrast to the finding of Schreiner.

The findings of Behnke et al can be explained by simple initial hydrostatic inhibition, which is released upon stabilization of pressure. Clearly, the findings cannot be explained by the chemical-$O_2$/inert gas interdependence as proposed by Schreiner. Behnke et al concluded that high pressure inert gases inhibit tyrosinase in non-fluid (i.e., gelatin) systems by decreasing oxygen availability, rather than by physically altering the enzyme. This conclusion is in direct contrast to the findings of Schreiner.

In addition to the refutation by Behnke et al, the results reported by Schreiner are difficult, if not impossible, to interpret for other reasons as well.

First, all analyses were performed at very high pressure, and were not controlled for hydrostatic pressure effects.

Second, in many instances, no significant differences were observed between the various noble gases, nor between the noble gases and nitrogen.

Third, knowledge of enzyme mode of action and inhibition was very poor at the time of these studies, as were the purities of enzymes used. It is impossible to be certain that confounding enzyme activities were not present or that measurements were made with a degree of resolution sufficient to rank different gases as to effectiveness. Further, any specific mode of action could only be set forth as an untestable hypothesis.

Fourth, solubility differences between the various gases were not controlled, nor considered in the result.

Fifth, all tests were conducted using high pressures of inert gases superimposed upon 1 atmosphere of air, thus providing inadequate control of oxygen tension.

Sixth, all gas effects reported are only inhibitions.

Seventh, not all of the procedures in the work have been fully described, and may not have been experimentally controlled. Further, long delays after initiation of the enzyme reaction precluded following the entire course of reaction, with resultant loss of the highest readable rates of change.

Eighth, the reported data ranges have high variability based upon a small number of observations, thus precluding significance.

Ninth, the levels of inhibition observed are very small even at high pressures.

Tenth, studies reporting a dependence upon enzyme concentration do not report significant usable figures.

Eleventh, all reports of inhibitory potential of inert gases at low pressures, i.e., <2 atm., are postulated based upon extrapolated lines from high pressure measurements, not actual data.

Finally, it is worthy of reiterating that the results of Behnke et al clearly contradict those reported by Schreiner in several crucial respects, mainly that high pressure effects are small and that hydrostatic effects, which were not controlled by Schreiner, are the primary cause of the incorrect conclusions made in those studies.

Additionally, although it was reported by Sandhoff et al, FEBS Letters, vol. 62, no. 3 (March, 1976) that xenon, nitrous oxide and halothane enhance the activity of particulate sialidase, these results are questionable due to the highly impure enzymes used in this study and are probably due to inhibitory oxidases in the particles.

To summarize the above patents and publications and to mention others related thereto, the following is noted.

Behnke et al (1969), disclose that enzyme-catalyzed reactions are influenced by inert gases at high pressures. J. Food Sci. 34: 370-375.

Schreiner et al (1967), describe inert gas interactions and effects on enzymatically, active proteins. Abstract No. 2209. Fed. Proc. 26:650.

Schreiner, H.R. 1964, Technical Report, describes the physiological effects of argon, helium and the rare gases. Contract Nonr 4115 (00), NR: 102-597. Office of Naval Research, Washington, D.C.

Schreiner, H.R. 1965, Technical Report, describes the physiological effects of argon, helium and the rare gases. Contract Nonr 4115 (00), NR: 102-597. Office of Naval Research, Washington, D.C.

Schreiner, H.R. 1966, Technical Report, describes the physiological effects of argon, helium and the rare gases. Contract Nonr 4115 (00), NR: 102-597. Office of Naval Research, Washington, D.C.

Doebbler, G.F. et al, Fed. Proc. Vol. 26, p. 650 (1967) describes the effect of pressure or of reduced oxygen tension upon several different enzymes using the gases Kr, Xe, $SF_6$, $N_2O$, He, Ne, Ar and $N_2$. All gases were considered equal in their effect.

Colten et al, Undersea Biomed Res. 17(4), 297-304 (1990) describes the combined effect of helium and oxygen with high pressure upon the enzyme glutamate decarboxylase. notably, only the hyperbaric inhibitory effect of both helium and oxygen and the chemical inhibitory effect of oxygen was noted.

Nevertheless, at present, it is known that enzyme activities can be inhibited in several ways. For example, many enzymes can be inhibited by specific poisons that may be structurally related to their normal substrates. Alternatively, many different reagents are known to be specific inactivators of target enzymes. These reagents generally cause chemical modification at the active site of the enzyme to induce loss of catalytic activity, active-site-directed irreversible inactivation or affinity labeling. See Enzymatic Reaction Mechanisms by C. Walsh (W. H. Freeman & Co., 1979). Alternatively, certain multi-enzyme sequences are known to be regulated by particular enzymes known as regulatory or allosteric enzymes. See Bioenergetics, by A.L. Leninger (Benjamin/Cummings Publishing Co., 1973).

Gas packaging of foods for preservation is well known, and a general description of this technique may be found in A. L. Brody, Controlled/Modified Atmosphere/Vacuum Packaging of Foods, Food & Nutrition Press, Trumbull, CT 01989. A description of important consumer quality perception parameters is presented in J.J. Jen, Quality Factors of Fruits and Vegetables, Chemistry and Technology, ACS Symposium Series No. 405, American Chemical Society, Washington, D.C., 1989, and a description of the biochemical and chemical reactions important in foods may be found in N. A. Michael Eskin, Biochemistry of Foods, second ed., Academic Press, New York NY, 1990.

It is evident from these sources that a large preponderance of modern and past gas packaging methodologies have relied primarily upon the use of carbon dioxide, nitrogen, and oxygen, alone or in mixtures. Generally, nitrogen is used as an inerting ;or non-reactive gas, to displace oxygen in order to prevent oxidation or limit respiration. Generally, carbon dioxide is used as a microbiocidal or microbiostatic agent, or as in the case of certain beverages, to provide an effervescent effect. Carbon dioxide is also often used as an inerting gas. Generally, oxygen is used as such or as the active component in the inclusion of air to permit aerobic respiration or to prevent the development of anaerobic conditions which might permit the growth of pathogenic microorganisms.

For example, U.S. 4454723 describes a refrigerated trailer cooled by sprinkler water with concomitant release of inerting nitrogen from a cryogenic source, for inerting the respiration of produce.

CH 573848 also describes the inerting activity of nitrogen in the preparation of coffee packages.

Irisawa, 1974, describes the use of a nitrogen atmosphere or liquid in the preservation of strawberries, salmon, and fish.

Kocys and Veskevicius, 1970, describe the storage in nitrogen.

Lapin and Koburger, 1974 describe the storage of shrimp in N2, showing improved control of bacteria.

Moor, 1984 describe storage of malting barley in a N2 atmosphere.

Niu and Su, 1969, describe effective storage of bananas in N2.

Lebedeva et al., 1984, describe the utility of nitrogen in storage of sunflower seeds preserved in a nitrogen atmosphere as due to a change in oxidative metabolism, that is, respiratory rates.

U.S. 4515266 exemplifies the importance of package type in gas packaging applications. A modified atmosphere packaging high barrier film is used in the packaging, and a preservative atmosphere is introduced into the package. The essence of the packaging process is that it allows preservative gases, such as nitrogen gas for inerting, to be introduced, but at the same time prevents air from getting into the package which would allow oxygen to contact the food and which would then cause degradative oxidation of the food product.

U.S. 4522835 shows that gases whose molecules contain oxygen can often be reactive in food systems, herein including oxygen, carbon dioxide and carbon monoxide. Preservation of color in poultry, fish is claimed by reducing oxygen content to produce myoglobin/hemoglobin versus the ordinary oxidized states of oxymyoglobin/hemoglobin, and finally adding carbon monoxide to produce carboxymyoglobin/carboxyhemoglobin, then storing under carbon dioxide to maintain the thus improved color. Storage under inert nitrogen is possible, as is further reoxidation using oxygen.

EP 354337 claims the use of carbon dioxide as an antibacterial agent in the preservation of foods.

SU 871363 illustrates the complexity of gas packaging methodologies, as specific regimes of preparation and gas applications are often recommended. This patent describes the storage of plums in nitrogen, oxygen and carbon dioxide mixtures in three separate steps. 1st, 2-2.5 wks at 0°C in 78-82% nitrogen + 10-12% oxygen + 8-10% carbon dioxide; 2nd, for next 2.5-3 wks at -1°C in 93-95% nitrogen + 3-5% oxygen + 2-4% carbon dioxide; 3rd, remainder of storage period at -2°C in 90-92% nitrogen + 2.5-3.5% oxygen + 4.5-5.5% carbon dioxide. The method claims 99.4 vs 91-94% good condition after 151 days. This marginal increase may be considered to be due primarily to more effective regulation of the respiratory gas exchange between oxygen and carbon dioxide, where nitrogen plays no real part except as an inert bond non-reactive carrier gas.

SU 1245284 reinforces such concepts of treatment. Here cherries are better kept under a limiting respiratory mixture of carbon dioxide 5-8% + oxygen 4.5-5.5% + nitrogen bal. It is important that the fruit be picked at the correct maturation stage, and kept chilled at 0 to -1°C, also to lower respiration.

WO 9015546, CA 2019602, AU 9059469 each describes the importance of the climacteric state of foods, that is the ethylene-induced maturation phase of the product. Each discloses improved preservation of food in a process using two gas separators, where first, unwanted gases, such as ethylene, oxygen, carbon dioxideand water vapor are removed, second, the preservative (inert or respiratory mix) gas is supplied.

JP 55029426 use a complex mixture of 20-99.5% nitrogen and/or carbon dioxide + 80-0.5% ethanol vapor where residual oxygen is 10%. In an impermeable package, this is claimed to prevent sticky-substance forming fungi growth.

Burgheimer et al., 1967 provides evidence of the chemical changes which occur during exposure to oxygen, here spinach in air versus in a controlled atmosphere of nitrogen undergoes considerable degradative changes in vitamin C and ascorbic acid contents.

Similarly, Consignado et al. 1976 compare the sugar content of stored coconuts under air versus nitrogen, and find that sugar content is not surprisingly correlated with availability of oxygen for respiration.

Thus, it is evident that the gases oxygen, carbon dioxide, and nitrogen alone or in mixtures have the well-established effects of oxidation, antimicrobial activity, and inerting, repectively. It is also evident that the balance of such gases in an atmosphere superimposed upon living systems may depress respiration and the resulting production or maintenance of chemical and other food quality parameters in basic and well-understood ways. It is also evident that oxidative and reactive gases will have destructive effects upon chemical and biological systems.

Although literature has appeared describing the use of argon for packaging, this literature generally describes the gas to be completely inert and equivalent to nitrogen or the other noble gases in their non-reactivity.

It is also clear from the following literature citations that argon is typically described or used as an inert o;r non-reac-

4

tive gas equivalent not only to nitrogen and the other noble gases, but that carbon dioxide, nitrous oxide and hydrogen and other gases are considered inert as well. This is particularly the case for food gas packaging systems.

For example, JP 2010077 describes the use of a mixed gas source to supply a gas packaged product with a mixture of nitrogen:carbon dioxide:ethylene 60:30:1 where the small amount of argon present is inert.

Also, JP 3058778 (89192663) describes storage and maturation of alcoholic drinks in an argon headspace. Deterioration can be prevented and maturation can be promoted or delayed by regulating the packaging density of argon. The utility of the argon lies in its displacement of oxygen, i.e., inerting.

JP 58101667 (88019147) describes sealing of citrus drink in vessels under pressure using an inert gas such as argon, so that bubbles are released upon opening which then cling to pulp.

JP 60134823 discloses a process whereby packaging of liquid food by is accomplished by feeding sterile liquid into the package under pressure with an inert gas, either nitrogen or argon.

JP 62069947 (88051660) discloses long term preservation of shiitake mushrooms in the dark in a container in a mixture of nitrogen: carbon dioxide:argon:nitrous oxide. Argon is described therein as an inert gas.

JP 63273435 describes preserving roasted chestnuts in a permeable container in a mixture of argon, carbon dioxide, nitrogen and nitrous oxide. The container is permeable to argon, therefore, it can have no utility.

JP 7319947 (730618) claims fruit juice preservation with noble gases. However, argon, helium and nitrogen are described as inert gases.

JP 77027699 describes a process for freezing and storing under pressure, the pressure being applied as carbon dioxide or nitrogen or argon or hydrogen, all being considered equally inert.

U.S. 4054672 (JP 7169757) describes the defrosting of frozen foods under a pressure of 2-5 atmospheres, preferably under carbon dioxide or nitrogen or helium or argon, all being inert, non-reactive and non-oxidizing.

JP 89192663 claims preservation of alcoholic beverages with argon, specifically sake and wine in containers, wherein argon is considered as a superior inerting agent due to its higher solubility than nitrogen.

U.S. 3096181 describes a food processing method and apparatus used in gas-packaging of tomato juice or liquid food products or vegetable concentrates, wherein any inert gas from the group of nitrogen, argon, krypton, helium, or mixtures thereof, are equally inert and useful at or above ambient pressure, after steam sterilization.

U.S. 3128188 describes lagering Ruh beer under an inert atmosphere.

U.S. 3442657 claims the preservation of hops in an inert atmosphere.

U.S. 3498798, CA 867629 describe a package for potato crisps which is impermeable and in which an inert gas is used to displace oxygen as the functionally useful step. It is disclosed that any of nitrogen or carbon dioxide or argon or neon may be used equivalently.

U.S. 3535124 discloses a process for fresh fruit juice preservation in a dispenser using carbon dioxide, wherein preferably the juice is sprayed through an inert atmosphere.

U.S. 3587203 describes the gas packaging of tossed salad cut and prepared ready to eat, where it is stored in an inert atmosphere in order to prevent oxidative discoloration.

U.S. 3715860 describes a method of gas packaging wherein inert fluid passage through an impermeable container functions to remove oxygen and prevent spoilage.

U.S. 4152464 describes a method and apparatus to sterilize packages which includes applying sterile any inert gas into an enclosed space.

U.S. 4205132 describes the storage of lyophilized bacteria. Storage requires the complete absence of oxygen, preferably using argon inerting because argon commercially contains very low levels of oxygen.

U.S. 4229544 describes the storage of dormant living microorganisms by gas packaging in nitrogen, argon or helium, where all are equivalent.

U.S. 4391080 describes a gas packaging machine in which the essence of the invention is the filling of the package through the machine with sterile inert gas.

U.S. 4524082 describes the preparation of concentrated egg white or salted whole egg product under inert atmospheres.

U.S. 4627336 also describes a gas packaging apparatus which requires the flushing of inert gases to replace air.

In U.S. 4803090, which concerns the preparation of cheese puffs in hot oil, it was not noticed that different inert gases produce any difference in the product.

Also, U.S. 4835937 describes a food packaging process involving flushing and filling with inert gas.

A similar process is claimed in U.S. 4870801.

U.S. 4901887 claims a beverage dispenser which is pressurized with an inert gas.

In U.S. 4919955 a gas packaging method for meat is described wherein inert gas is used to package and store the meat, and at a later stage oxygen is added to the package to permit oxygenation of the myoglobin to produce a red color.

Cooling of foods by direct injection of gases is described in DE 2147880, ZA 7106193, FR 2107946, GB 1371027, where any of nitrogen, oxygen, argon, or even Air may be used equivalently.

DE 2736282, WO 7900092, HU H2477, GB 2021070, DD 137571, DD 137571, EP 6888 describe a beer tank road tanker charging system which uses inert gas constituting any of carbon dioxide, nitrogen, or noble gas.

A process is claimed in EP 146510, SE 8306164, NO 8404468, FI 8404402, DK 8405347 for extrusion of porous foodstuffs by compression, heating and extrusion in an inert atmosphere, e.g. nitrogen or carbon dioxide.

EP 289777, AU 8814003, JP 1020056, US 4895729 claim the packaging of cut or segmented fresh fruit pieces by flushing with O2-containing gas, sealing, cold shocking, refrigerating, wherein the preferred mixture is 5-50% oxygen and the balance is any inert gas from the group nitrogen, helium, argon or hydrogen.

BE 881368, DE 2903300, NL 8000353, GB 2042320, FR 2447155, US 4289148, CA 1127037, CH 642519, NL 177974, IT 1130237 describe the improvement of packing capacity of tobacco by applying pressure using either nitrogen or argon then heating.

The pressurization of foods by sterile heat, followed by inert gas packaging is claimed in EP 368603, using either nitrogen or carbon dioxide. The factors of importance are water and oxygen content.

ES 8500634 discloses a method of vinification without using preservatives, using inert or non-reactive gas to displace oxygen to prevent aerobic microbial growth. Any of nitrogen, carbon dioxide, or the noble gases are deemed equally useful.

GB 1331533, FR 2089899, BE 765637, DE 2031068, CH 522734 describe a method of improving the keeping properties of alcoholic beverages produced by fermentation which prevents the destructive action of oxygen by displacing oxygen during or after fermentation and/or at any process stage and/or during storage under preferably nitrogen, but Ar or other noble gases may be used, all being equivalently inert.

IT 1190200 describes the use of an inert gas atmosphere upon agricultural products to prevent attack by aerobic microorganisms.

SU 249965 describes storage of brined meat e.g. ham under e.g. Ar as an inerting process.

SU 825619 describes a tank for storing wine in inert gas atm with filling controls. First the tank is filled with carbon dioxide, then wine is fed by pump or inert gas sprayer.

WO 8600503, DE 3425088, AU 8546026, EP 189442, DE 3448380 each disclose use of gas in the heating of liquid food products while maintaining pressure to prevent loss of aroma and prevent boiling. For milk and coffee prods, especially an inert gas and non-reactive such as nitrogen or a noble gas.

FR 2225095 describes the gas packaging of roasted coffee where the coffee is degassed in inert and non-reactive gas, preferably carbon dioxide, for 12-48 hrs, impermeable packets are filled with the coffee, a 50-90% partial vacuum is drawn, followed by injection of a preservative gas, where either argon or nitrogen at preferably less than <1 atm may be used equivalently. The effectiveness of such inerting is claimed as a ten-fold improvement in shelf life.

In FR 2621224 for avocado pulp or other, the grinding in inert gas, followed by adding other flavoring food product liquids is claimed.

Storage of refrigerated butter under an inert atmosphere is claimed in FR 2642275, where the gas may be nitrogen or others.

Rzhavskaya 1967 describes the utility of nitrogen in preventing oxidation of whale fats due to displacement of oxygen.

Shejbal, 1979a,b describes the use of nitrogen in preservation of cereals and oilseeds by inerting.

Terebulina et al., 1983 describes lipid oxidation of rice in air as controllable by displacement of oxygen to prevent repiration and oxidation.

Corey et al., 1983, in addressing storage issues, measured nitrogen and carbon dioxide diffusion rates through cucumber and found carbon dioxide was three times as soluble as nitrogen. Solubility was determined to be the critical factor in storage atmosphere choice. Argon was used as an inert gas control.

Fullerton et al., 1982 show improvement in storage of animal feeds under argon as inerting agent because of its solubility and lack of oxygen content.

Pichard et al., 1984 tested the enzymes of bacteria, specifically Pseudomanas proteases under carbon monoxide, carbon dioxide and nitrogen. Air and Ar as mixers and controls. Only carbon dioxide was found to have effects, which conflicted depending upon which protease was measured, and argon was specifically found not to have an effect on these enzymes.

Zee et al., 1984 studied the effects of carbon monoxide, carbon dioxide and nitrogen on bacterial growth on meat under gas packaging. They used argon as a fully inert control. It was found that argon and nitrogen were equivalent in inhibition of anaerobes, and acted as inerting agents in inhibiting aerobes. Specifically, 4 strict aerobes, 3 anaerobes, and 12 facultative anaerobes isolated from meat were grown under carbon dioxide, argon, nitrogen, carbon monoxide, where argon was "inert" containing 10-70% nitrogen, carbon dioxide or carbon monoxide. Ar effect was found to be due strictly due to the gases in which it was admixed.

In the medical area, the noble gases are described as being useful in the preservation of living organs, cells, and tissues, primarily due to the high solubility and penetrability of the gases. For example, Ikegami et al., 1979, compare sperm motility and viability in nitrogen, argon, helium and carbon dioxide, where thermal factors are most important.

SU 507187 discloses improved preservation of bone transplants in a mixture of argon and formalin. The function of the argon is claimed as inerting.

In U.S. 4008754, preservation of isolated organs is described wherein helium or nitrogen or helium + xenan or helium + xenan + sulfur hexafluoride function equally well in preserving tissues in cooling. Similar results are described in Voss et al., 1970; SU 1289437; Ruile et al., 1971; Braun et al., 1973 (for freezing); Poppert et al., 1973. In the latter, organ preservation in hyperbaric xenon is described.

Thus, it is evident from the above that argon is perceived of and has been clearly described in both patent and in literature citations to be an inert and non-reactive gas, capable of affecting biological systems, such as food products, medical tissues, chemical reactions, enzymes, and food storage parameters only by means of displacing more active gases, such as oxygen. Thus, argon has been conventionally considered to be the equivalent of nitrogen as an inert and non-reactive gas, and is presently differentiated for use in the food industry solely based upon such commercial factors as cost, availability, and purity.

While a few literature citations are known in which it has been even suggested that argon and other noble gases may have properties unique for application to biological systems or food, each of these citations are different and clearly fail to teach or even suggest the conclusion upon which the present invention is premised.

For example, JP 52105232, (80002271), 1059647 describe the use of a gas mixture containing argon for preserving roasted chestnuts by retarding the growth of anaerobic molds, and extends this preservation to include rice cakes, bread, cakes in 80-20:30:70 argon:carbon dioxide, describing that this prevents growth of molds and anaerobic microorganisms. However, the data provided are self-conflicting, holding that neither high nor low levels of argon have effects, but that intermediate values do, in a simple experiment in which significant data are not presented, no tests or controls for oxygen levels were conducted, and no demonstration of the described anaerobicity of the molds tested was made. In fact, the data do not show an improvement for argon, and may be interpreted as simply proposing the substitution of argon for nitrogen as an inert and non-reactive gas.

JP 55111755 describes the preservation of cereals or vegetables in nitrogen + carbon dioxide, optimally containing also helium or argon (1-10 preferably 4-6% in the mixture) in 5-70% carbon dioxide in 95-30% nitrogen. This description is made to allow for the inclusion of noble gases as contaminants in other gases, however, the disclosed benefit of the noble gases is demonstrably impossible as reducing the content of the noble gas in the mixture cannot and does not improve the possible benefit. Further, described improvement in storage of cereals and vegetables (rice, onions, potatoes) preserved for long periods manifested itself by the suppression of budding. Argon and helium are described specifically to help color and glossiness. At the levels described, no improvement is possible, and even repetition of these experiments can show no effect.

Further, Manchon, 1978 studied preservation of bread and pastry in controlled atmosphere packaging. Poor results were obtained using nitrogen or argon or nitrogen + carbon dioxide. Good results were obtained using nitrous oxide or ethylene oxide + carbon dioxide. However, nitrous oxide is a reactive gas, and experiments carried out as described could only have substantiated argon to be inert and non-reactive.

U.S. Patent 3183171 describes the control of fungal growth by noble gases. In particular, mixtures of carbon dioxide, carbon monoxide, oxygen, water vapor, or nitrogen with helium, xenon, krypton, neon, argon or a mixture of these, or a noble gas fraction constituting between three and ninety-five percent were used. Inhibition of growth rate is described for most mixes containing argon, xenan, krypton, or neon, while enhancement of growth rate is claimed when helium is added to certain mixtures. The very limited data were obtained solely for Neurospora crassa, as hyphal length increase over time.

U.S. Patent 3,183,171 is based upon data presented Neurospora crassa. This patent did not demonstrate that hypha growth is equivalent to growth of the organism. By contrast, in accordance with the present invention; as will be described hereinafter, it has been discovered that enzymes responsible for fugal growth are inhibited and it is evident that the data of U.S. Patent 3,183,171 describes effects for the control of hypha growth and not for the enzymatic control of microorganism growth. Thus, it is not possible from U.S. Patent 3,183,171 for the artisan to comprehend that effective control of microbial growth is possible with noble gases.

As proof thereof, it is noted tha no application of practical utility in the control of microbial growth with noble gases has been made in the intervening twenty-five years.

Helium and high pressure application of various noble gases have been described as affecting the growth of bacteria (Fenn and Marquis, 1968, Thom and Marquis, 1979, Hegeman and Featherstone, 1969); protozoa (Sears et al., 1964), mammalian cells (Bruemmer et al.; 1967; Schreiner 1964, 1965, 1966 Nonr) and bacterial spore germination (Enfors and Molin, 1977). These results are cited in Schreiner, 1968 and Behnke et al., 1969). However, all of these reports provide inconclusive results and are difficult to interpret.

The use of nitrous oxide is described in US 3398001, where during preparation and packaging of frozen avocados, freezing in nitrous oxide or nitrogen, followed by packaging in nitrogen using and oxygen level of <2%, gave good preservational results.

A two-step treatment process for fresh fruits and vegetables is disclosed in EP 0422995 whereby nitrous oxide (10-100%) in admixture with oxygen and/or carbon dioxide is applied to vegetables for a time period in a first phase of treatment, followed by a separate second phase application of a gas mixture which contains nitrous oxide (10-99%) admixed with oxygen or carbon dioxide or nitrogen, which by action of the nitrous oxide then confers preservation. It is clearly described that nitrogen or argon are equally inert and non-reactive gases which may be freely used to complement in bulk any given gas mixture without effect.

Nitrous oxide has been shown to prevent ethylene formation and to provide significant fungistatic activity. For example, data are clearly presented in FR 2191850 proving the effective dissolution of nitrous oxide into the fruit/vegetable whereby it may be present to have an effect.

EP 0422995, AU 9063782, CA 2026847, ZA 9005704, FR 2652719, BR 9004977, JP 03206873, PT 95514 each describes a two-step treatment for preserving fresh vegetables by exposure at refrigeration temperature to an atmosphere of nitrous oxide and/or argon (other noble gases are specifically claimed to be inert) and optimally oxygen. Mixtures used variously include high titers of nitrous oxide, oxygen, carbon dioxide or nitrogen.

For packaging, a semipermeable membrane is described which has poor ability to retain argon. No controls were made, however, in the experiments for carbon dioxide or oxygen or nitrogen or argon, and no apparent action can be attributed to any gas except nitrous oxide.

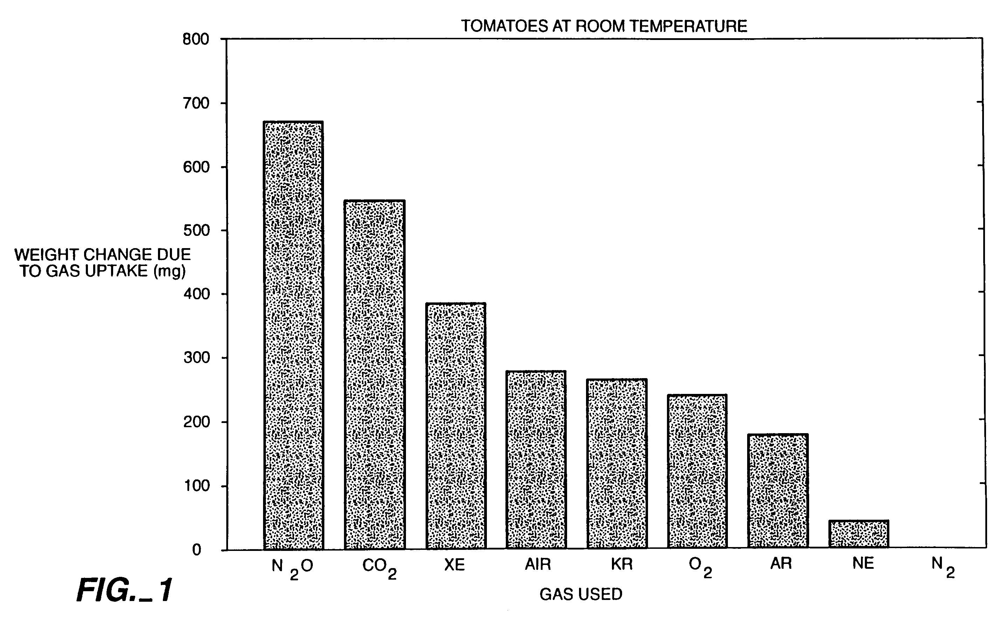

The essence of each of these disclosures pertains to a two-step treatment process, not simple gas packaging, in which applied nitrous oxide or argon directly interferes with the production of ethylene by the fruit (tomatoes were tested). Argon is claimed to have specific utility in this regard, however, it is obvious from the data presented that the only effect of argon is to displace oxygen from the tissues of the fruit and thereby to limit respiration and thus ethylene production. The essential data presented in the figure purport to show a difference in ethylene production of air, nitrogen, argon and nitrous oxide which is precisely identical to their differences in solubility in the fruit (data given in EP 0422995 and below). In fact, this has been proven by duplicating the above experiment wherein adequate controls for solubility were made by inclusion of other gases, and finding that depression of ethylene is completely explained by oxygen displacement. Data are presented in Figure 1 of the present specification.

Thus, the above descriptions of uses of argon in food treatment demonstrate only the inertness or non-reactivity of argon and merely confirm its ability as a non-reactive gas to displace air.

Addition of argon to a known mixture of carbon dioxide + oxygen is claimed in Schvester & Saunders. US 4946326, EP 346201, PT 90762, AU 8936152, DK 8902755, BR 8902636, JP 2053435, ZA 8904258 to be effective in preservation of seafood and fish at 4°C. The mixture comprises in partial pressure 5-68% carbon dioxide + 5-20% oxygen + 27-45% argon (preferably 50:20:30 carbon dioxide:oxygen:argon). The text describes the mixture as slowing down enzymatic and chemical reactions at the surface and inside fish and seafood products, as well as growth of some microorganisms such as fungus. No such data are presented, and no claim is made thereto. Other studies on such mixtures and such products find opposite results.

The results disclosed are not generally reproducible, and, in fact, are due entirely to careful control of processing hygiene, and the effects of carbon dioxide on microbes. The results presented are generally not significant and do not control for the known effects of carbon dioxide, oxygen and nitrogen alone or in mixtures without noble gases. It is clearly not apparent from the data disclosed that any observed effect is in fact due to argon or to the specific mixture claimed. The effects may be rationally be concluded to be due to the other components alone or in partial combination.

Moreover, EP 354337 describes an effect of carbon dioxide upon bacterial systems. Such effects are widely known and understood as being caused by the depressive effect of carbon dioxide upon ordinary repiratory processes, which cannot be interpreted as being specifically antienzymatic. The observed results in US 4946326 can be largely attributed to the simple depression of respiration by carbon dioxide.

Additionally, JP 89/192663 describes the use of argon as an inert gas in the storage of liquors, while JP 88/51660 discloses the use of argon as an inert gas in the storage of mushrooms.

JP 87/108025 describes the use of a mixed gas including nitrogen, carbon dioxide, argon and nitrous oxide to store roasted chestnuts.

JP 70/66269 discloses a method of processing orange, lemon, group and pineapple juice and for preserving such juices by dissolving inert or non-reactive gases, such as nitrogen, argon and helium in the juice to a saturation level.

Thus, a considerable volume of literature exists generally relating to the gas packaging or gas saturation of foods. Some of this literature relates to the use of noble gases and inert gases in food packaging, using such gases as inerting or non-reacting agents equivalent to nitrogen. However, it would be extremely advantageous if a means were attained by which food substances could be preserved directly and not indirectly by mere oxygen displacement.

It would be particularly advantageous if a means were attained by which certain widely used and particularly aromatic food substances such as cheese and chocolate could be preserved directly, and not indirectly by mere oxygen displacement, in order to improve the aroma and flavor thereof.

SUMMARY OF THE INVENTION

Accordingly, it is an object of the present invention to provide a method of preserving foods using at least one noble gas.

It is also an object of the present invention to provide various gas mixtures for effecting the above method.

It is further, an object of the present invention to provide a method for inhibiting enzymes which cause microbial organisms to grow in food and/or on food.

It is also an object of the present invention to provide a method for inhibiting enzymes produced by food which cause degradation thereof.

Moreover, it is an object of the present invention to provide a method for inhibiting enzymes secreted by spoilage microorganisms and/or on food.

Further, it is an object of the present invention to provide a method for inhibiting enzymes in and/or on food.

It is also an object of the present invention to provide a method for preserving color and/or appearance of a food product.

Also, it is an object of the present invention to provide a method for inhibiting non-enzymatic chemical oxidation reactions of a food product.

Moreover, it is an object of the present invention to provide a method for inhibiting chemical oxidative degradative reactions in food.

It is also an object of the present invention to inhibit oxidative degration of color in foods.

Moreover, it is also an object of the present invention to provide a method for preserving foods without using technologies which result in undesired changes in a food product, such as organoleptic, rheological, microbiological and nutritional changes.

Accordingly, the above objects and others which will become more apparent in view of the following disclosure are provided by a method of preserving a food by contacting the same with a noble gas, a mixture of noble gases or a gaseous mixture containing at least one noble gas.

BRIEF DESCRIPTION OF THE DRAWINGS

Figure 1 illustrates weight change in tomatoes at room temperature due to gas uptake for different gases.

Figure 2 illustrates the effect of different gases as indicated on the enzyme tyrosinase at 25°C.

Figure 3 illustrates the effect of noble gas atmospheres upon the growth of *A. alternata*.

Figure 4 illustrates the effect of noble gas atmospheres upon the growth of *E. coli*.

Figure 5 illustrates the effect of different atmospheres as indicated upon the shelf-life of apples.

Figure 6 illustrates the effect of different atmospheres as indicated upon the microbial load for carrots stored at room temperature.

Figure 7 illustrates the effect of different atmospheres as indicated upon the microbial load for carrots stored at room temperature.

Figure 8 illustrates the effect of different atmospheres as indicated upon the microbial load for carrots stored at room temperature.

Figure 9 illustrates the effect of different atmospheres as indicated on the microbial load for refrigerated fish fillets.

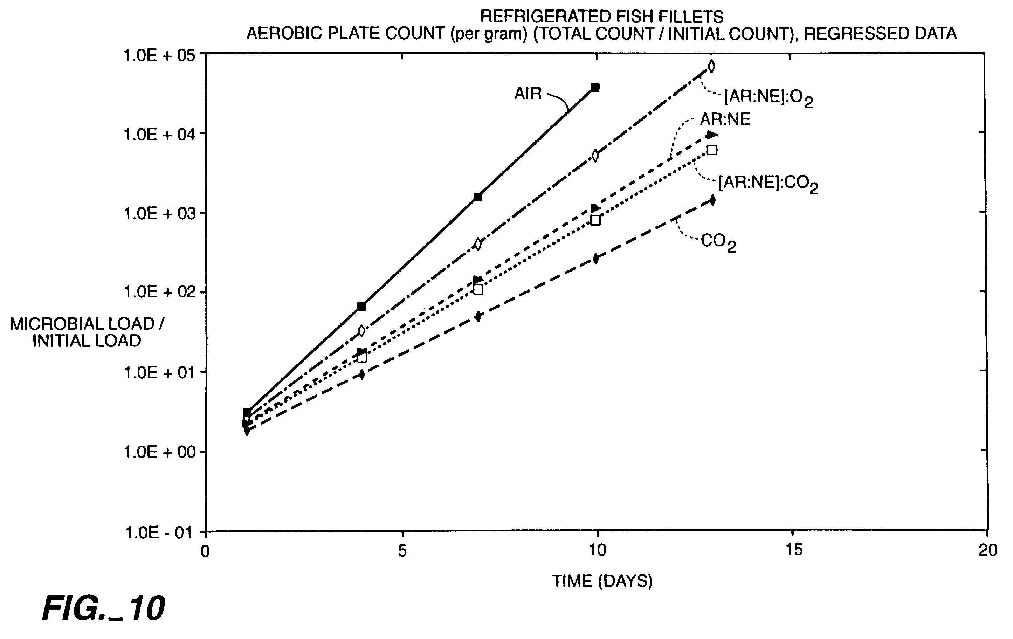

Figure 10 illustrates the effect of different atmospheres as indicated on the microbial load for refrigerated fish fillets.

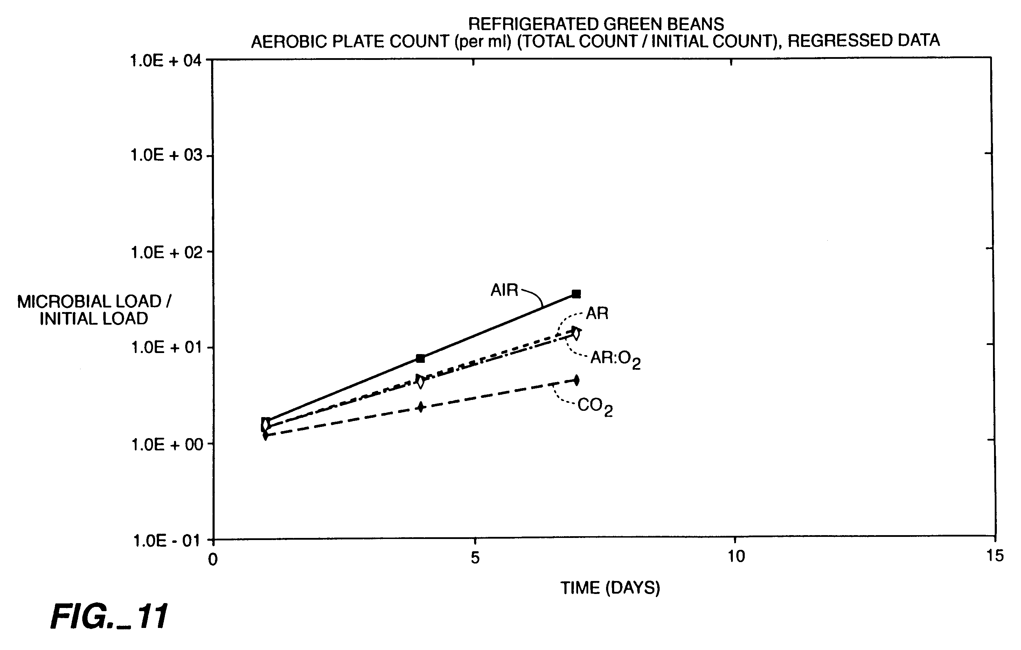

Figure 11 illustrates the effect of different atmospheres as indicated on the microbial load for refrigerated green beans.

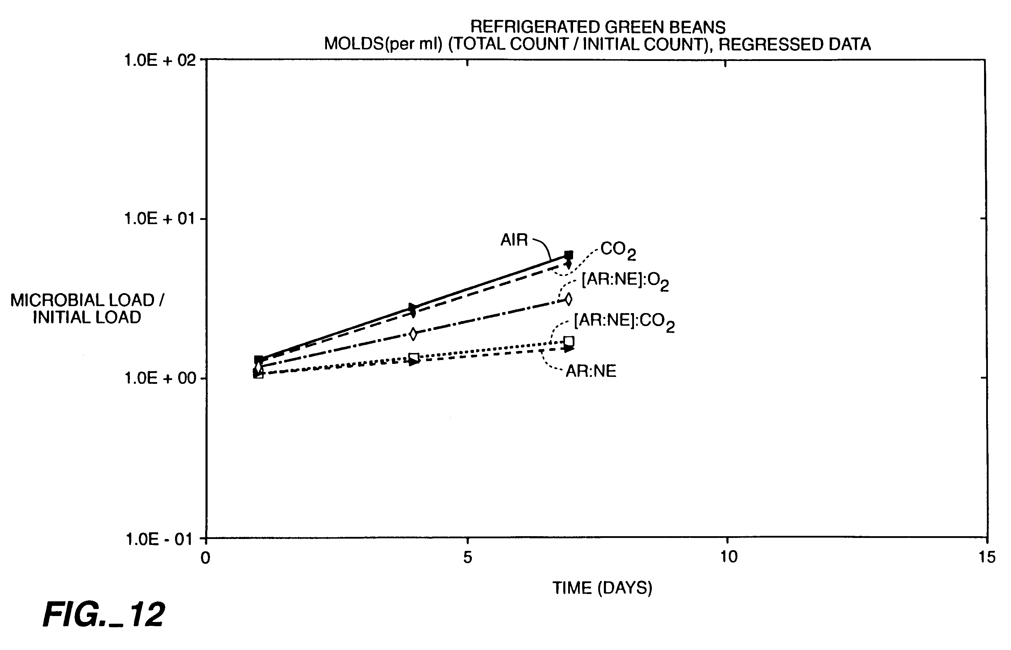

Figure 12 illustrates the effect of different atmospheres as indicated on the microbial load for refrigerated green beans.

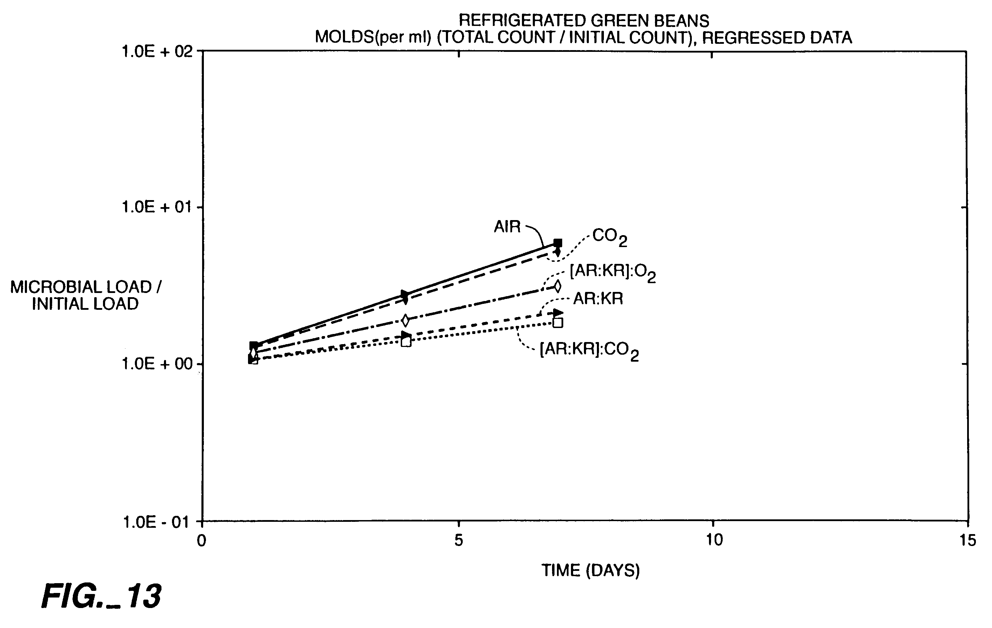

Figure 13 illustrates the effect of different atmospheres as indicated on the microbial load for refrigerated green beans.

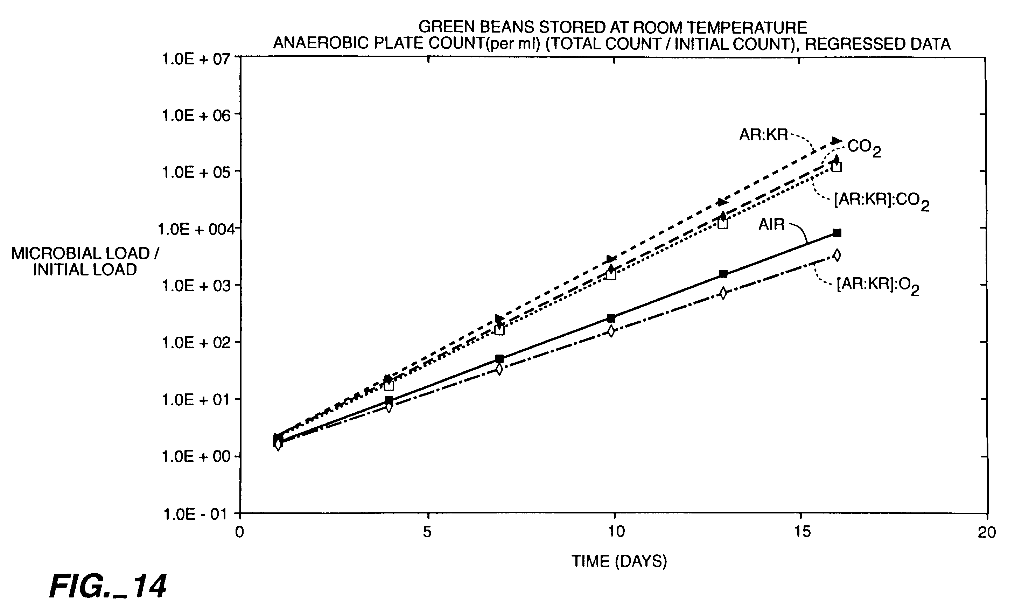

Figure 14 illustrates the effect of different atmospheres as indicated on the microbial load for green beans stored at room temperature.

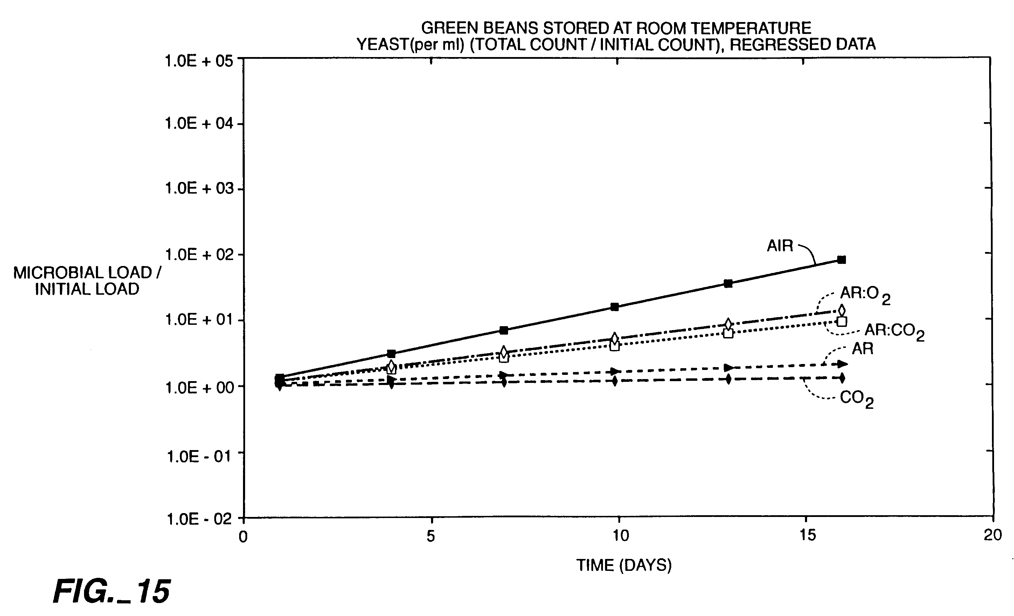

Figure 15 illustrates the effect of different atmospheres as indicated on the microbial load for green beans at room temperature.

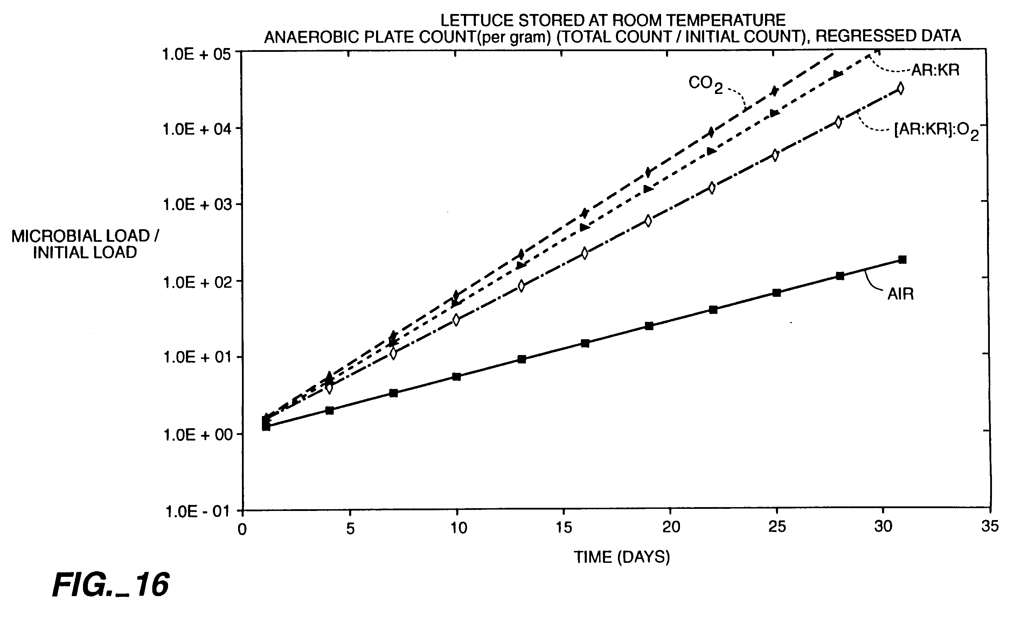

Figure 16 illustrates the effect of different atmospheres as indicated on the microbial load for lettuce at room temperature.

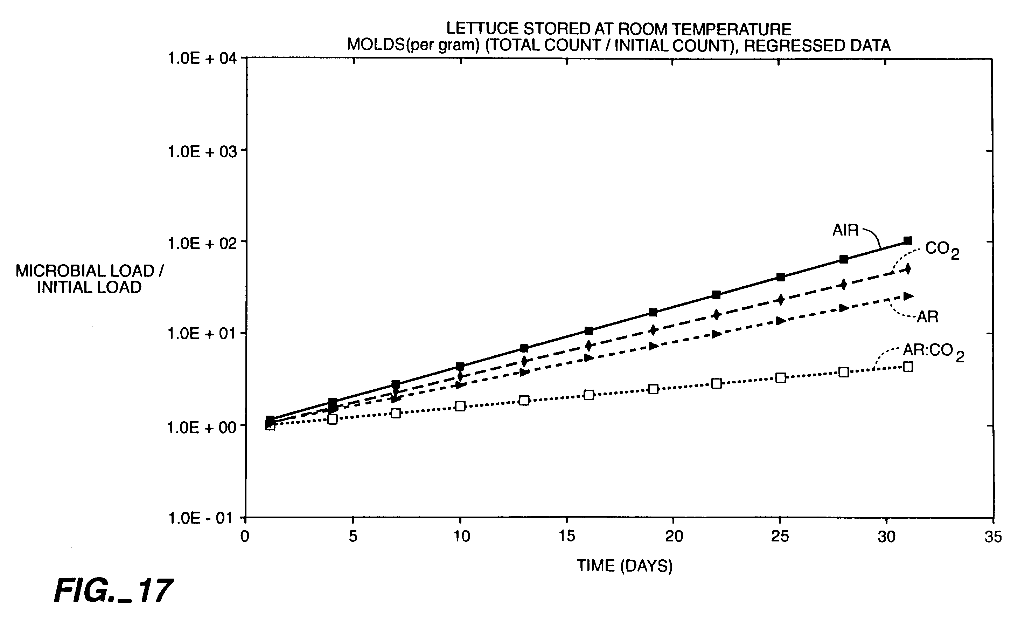

Figure 17 illustrates the effect of different atmospheres as indicated on the microbial load for lettuce stored at room temperature.

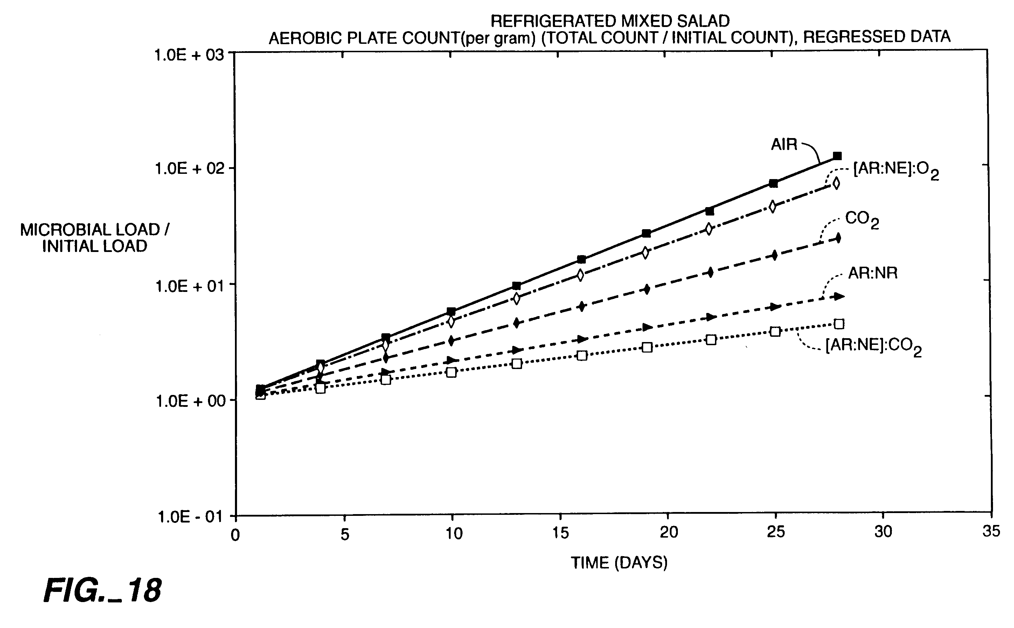

Figure 18 illustrates the effect of different atmospheres as indicated on the microbial load for refrigerated mixed salad.

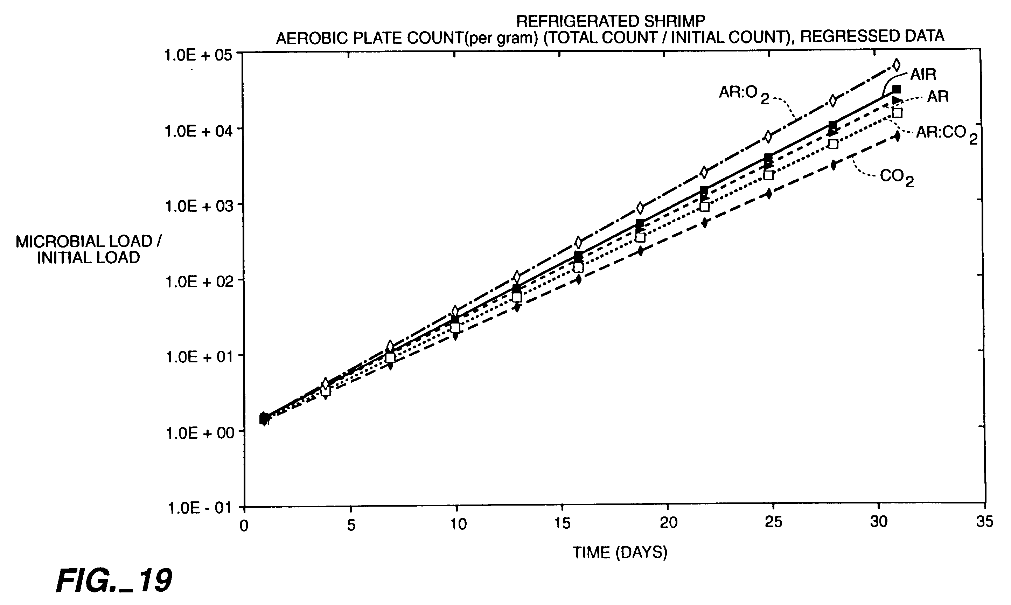

Figure 19 illustrates the effect of different atmospheres as indicated on the microbial load for refrigerated shrimp.

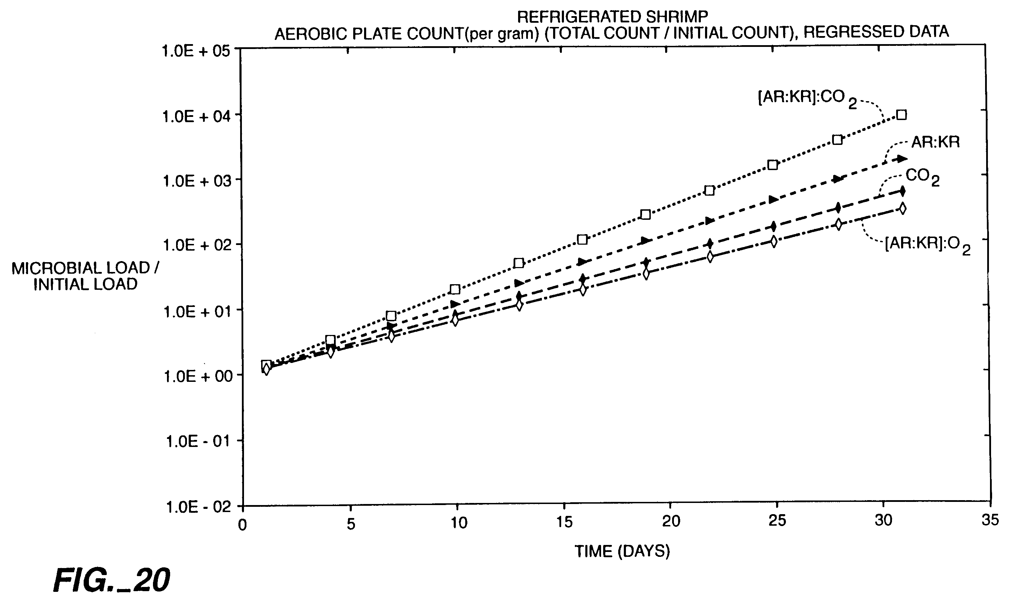

Figure 20 illustrates the effect of different atmospheres as indicated on the microbial load for refrigerated shrimp.

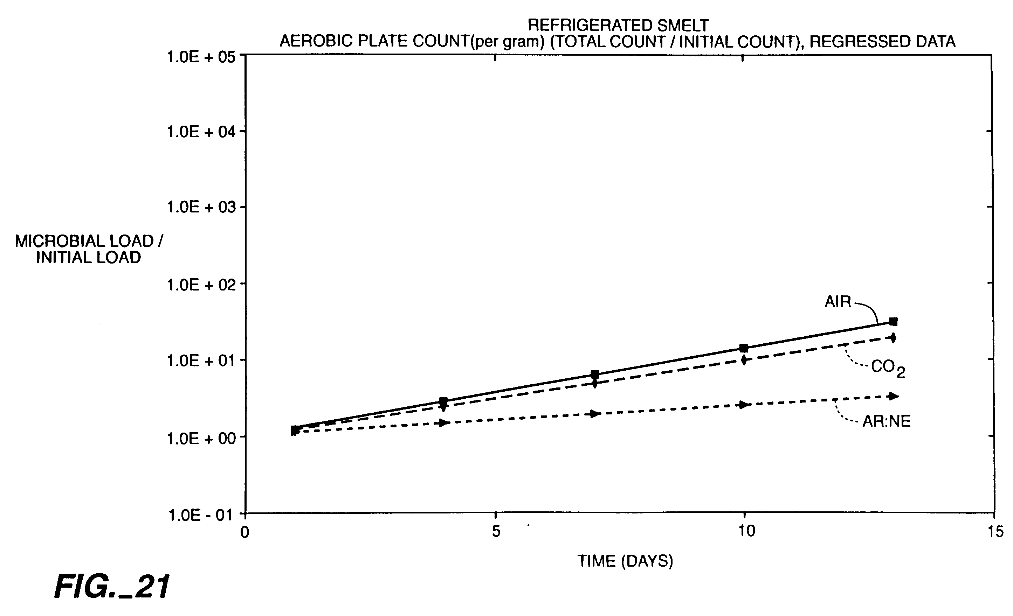

Figure 21 illustrates the effect of different atmospheres as indicated on the microbial load for refrigerated smelt.

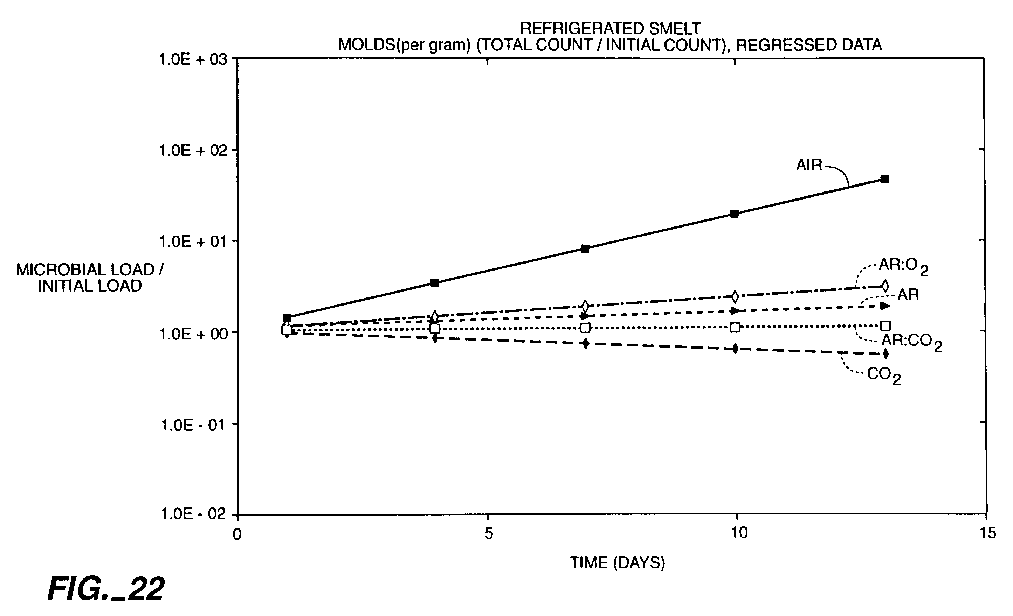

Figure 22 illustrates the effect of different atmospheres as indicated on the microbial load for refrigerated smelt.

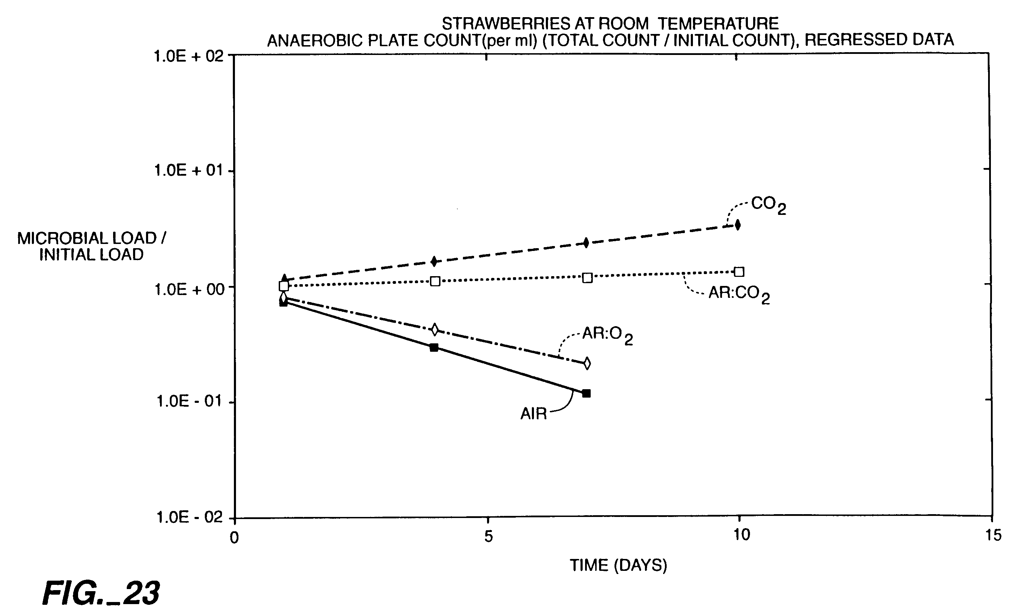

Figure 23 illustrates the effect of different atmospheres as indicated on the microbial load for strawberries at room temperature.

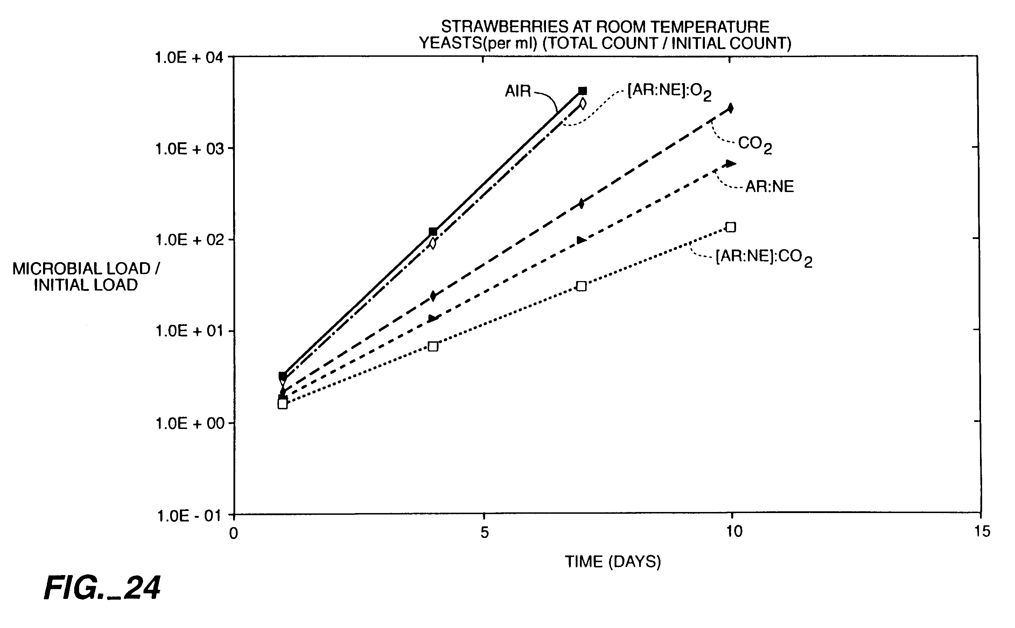

Figure 24 illustrates the effect of different atmospheres as indicated on the microbial load for strawberries at room temperature.

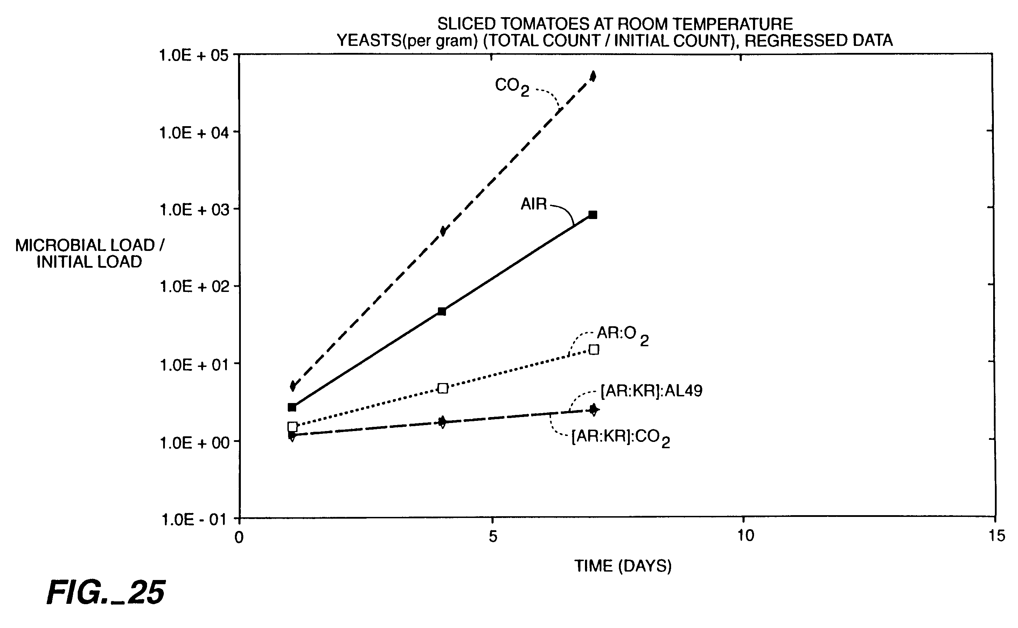

Figure 25 illustrates the effect of different atmospheres as indicated on the microbial load for strawberries at room temperature.

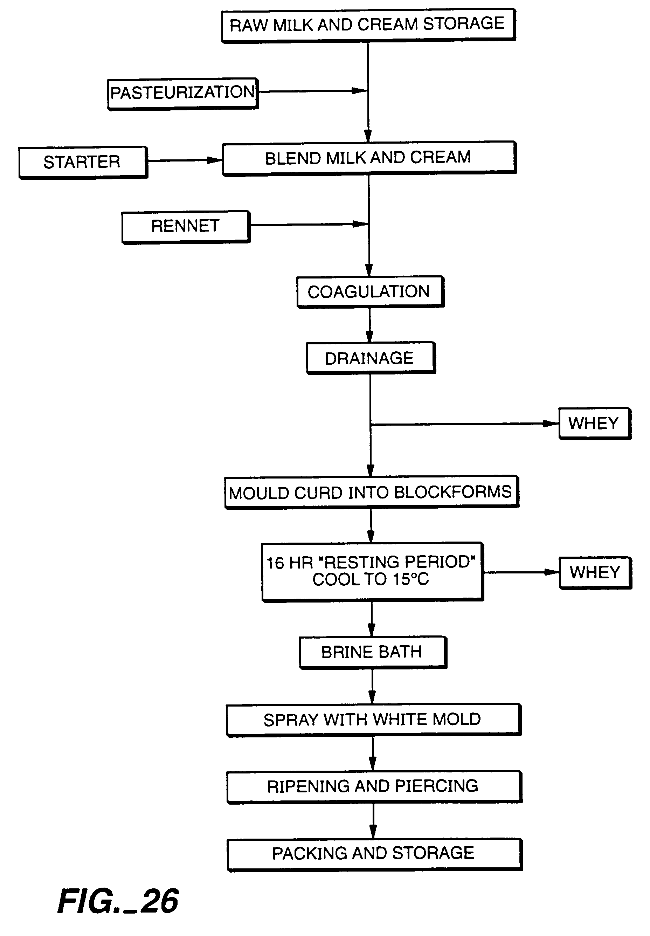

Figure 26 illustrates a process for making blue cheese.

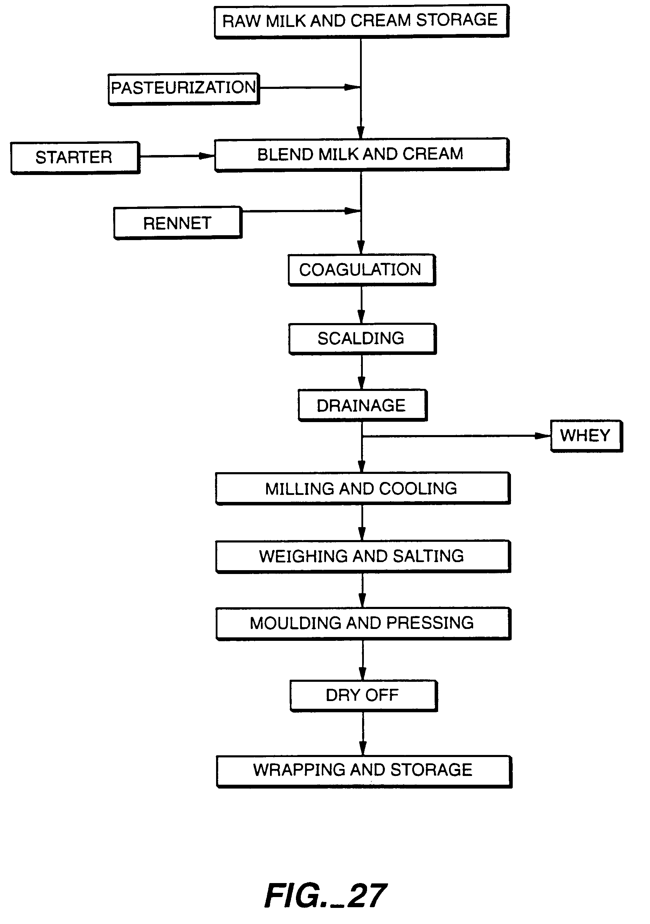

Figure 27 illustrates a method of making cheddar cheese.

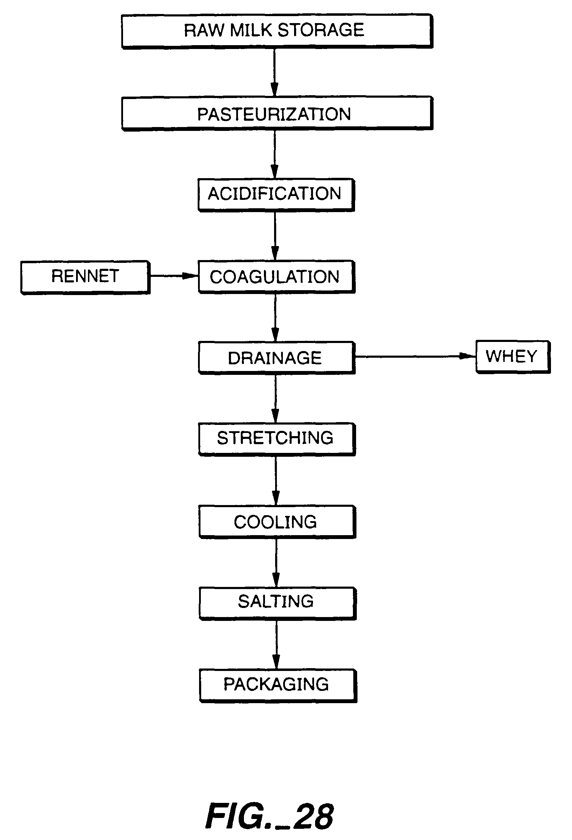

Figure 28 illustrates a process of making mozzerella cheese.

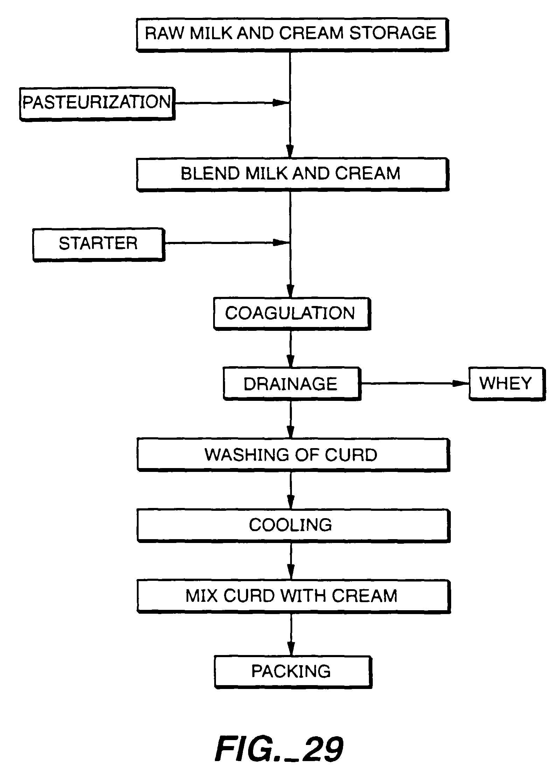

Figure 29 illustrates a process of making cottage cheese.

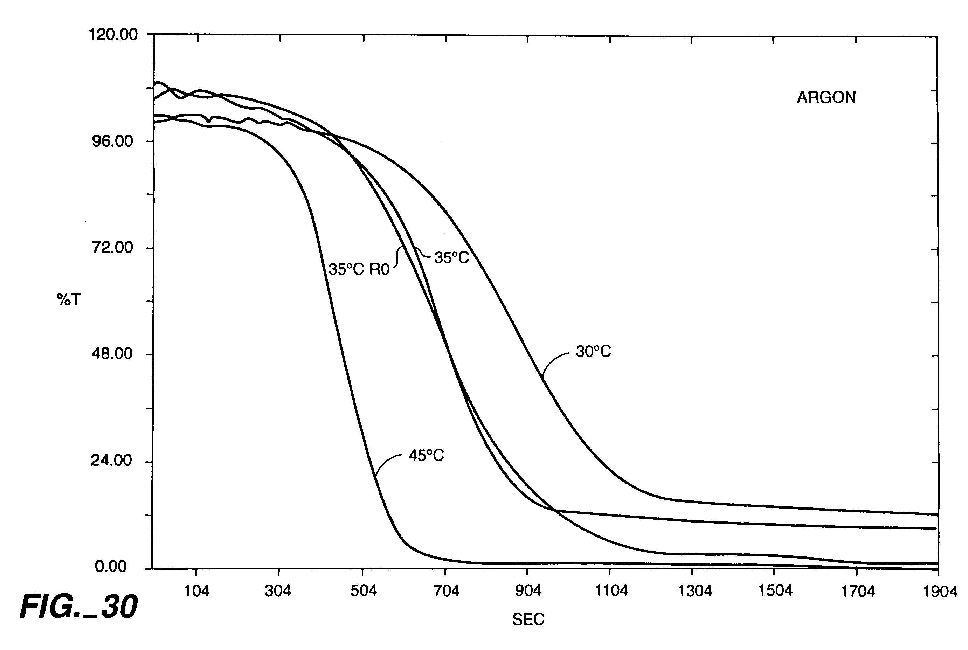

Figure 30 illustrates the effect of argon at different temperatures on the rennet/skim milk system.

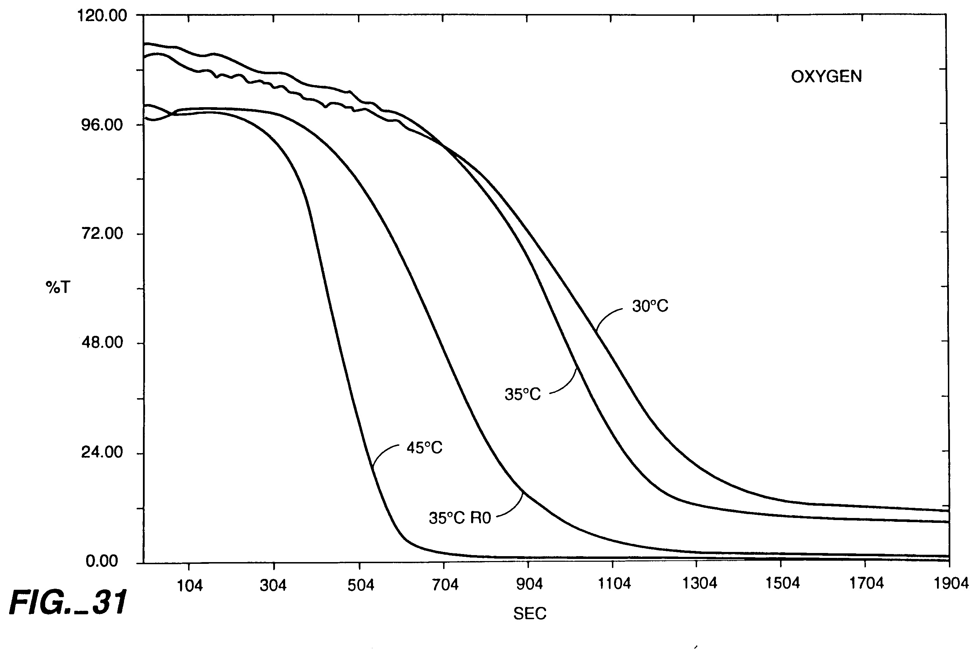

Figure 31 illustrates the effect of oxygen at different temperatures on the rennet/skim milk system.

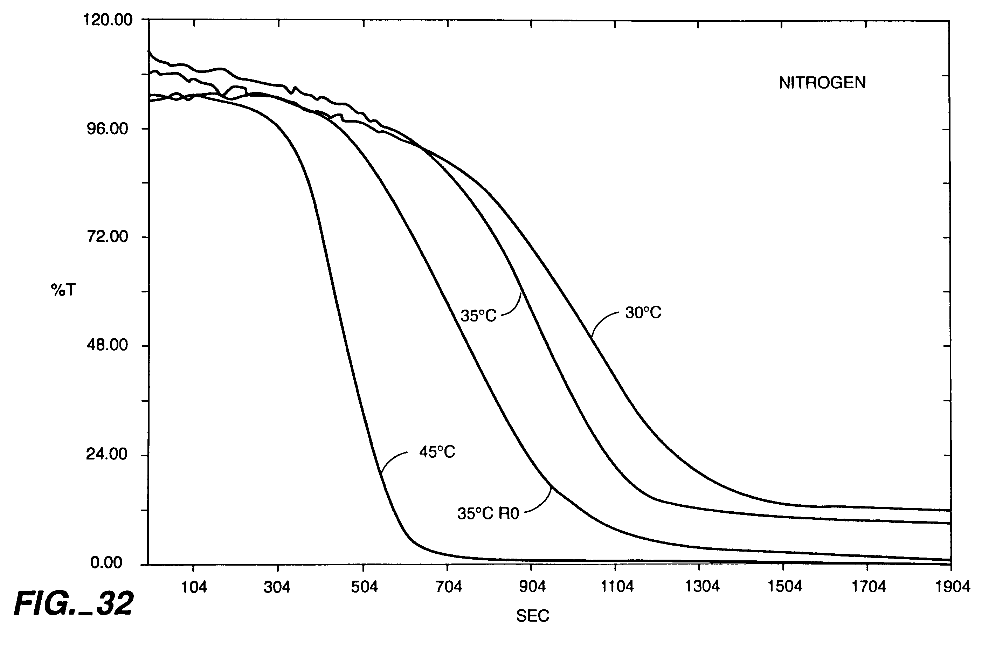

Figure 32 illustrates the effect of nitrogen on the rennent/skim milk system at different temperatures.

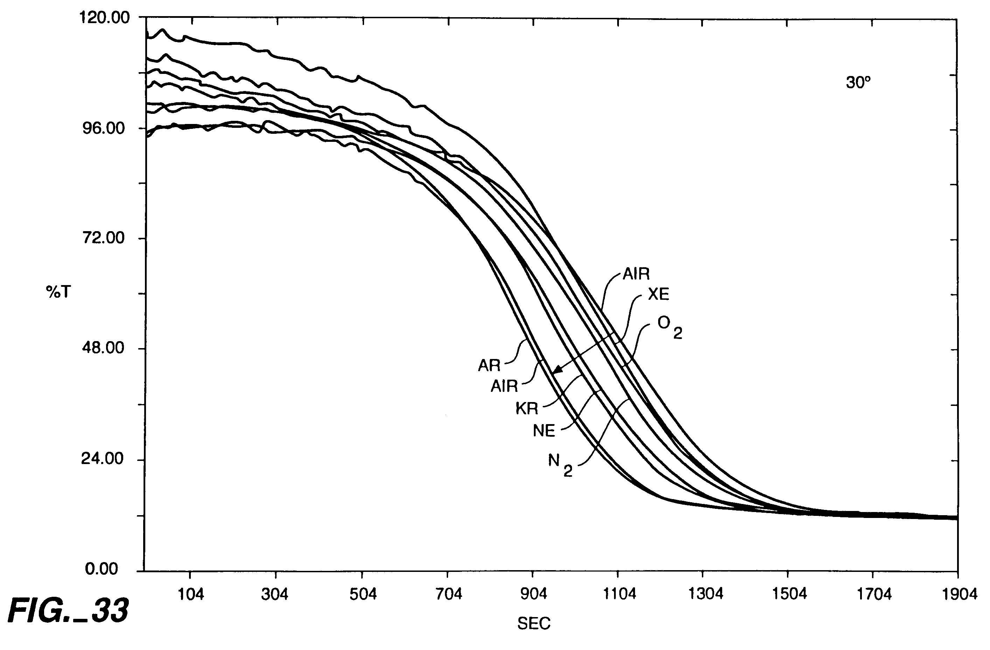

Figure 33 illustrates the effect of the present invention in enhancing the rennet/skim milk system at 30°C.

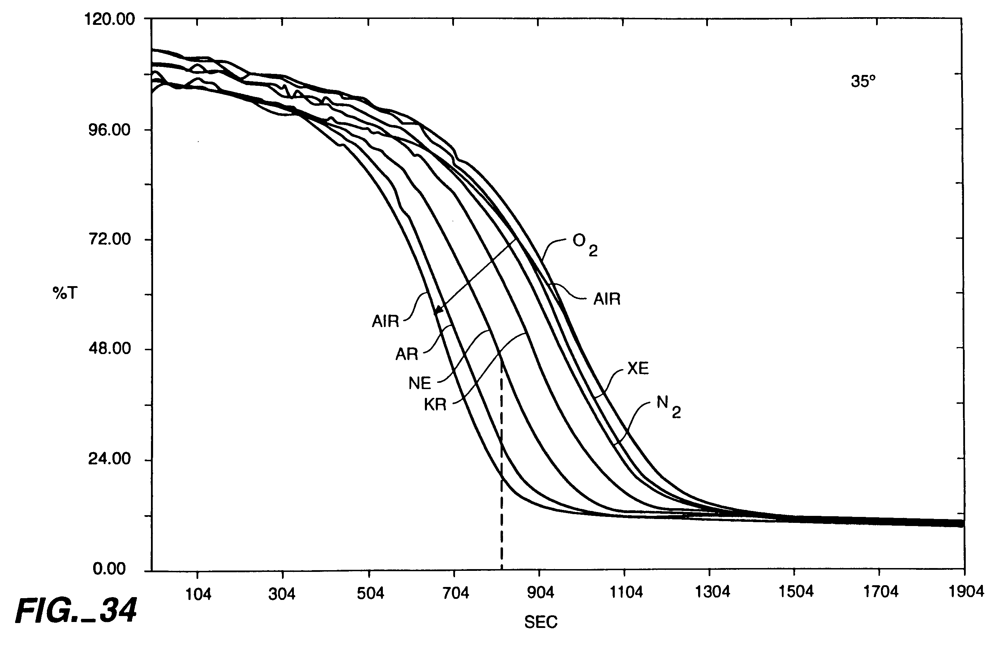

Figure 34 illustrates the effect of the gases of the present invention in enhancing the rennet/skim milk system at 35°C.

## DETAILED DESCRIPTION OF THE PREFERRED EMBODIMENTS

In accordance with the present invention, it has been surprisingly discovered that argon and the other noble gases, xenon, krypton, neon and helium, possess profound and significant properties in improving the preservation of foodstuffs in gas-packaging applications. These improvements are manifested at all levels, including the chemical, enzymatic, microbiological and consumer quality perception levels. In view of the following disclosure, it will now be clear to the artisan that the present invention has wide utility and application in preserving food.

When compared to the use of conventional nitrogen/oxygen/carbon dioxide modified atmospheres, introduction of noble gases in the gaseous environment of packaged food products affords the extension of the shelf-life of those perishable products in a surprising manner. The gases and gas mixtures of the present invention act in at least three ways: 1) by controlling of endogenous (product origin) and exogenous (process origin and microbial origin) enzymes responsible for food degradation, 2) by controlling of the growth of spoilage microorganisms, and 3) by controlling chemical oxidations and other chemical reactions.

What is described hereinafter represents a fundamental advancement in controlling microbial growth germane to the preservation of foods and secondary to a comprehensive demonstration of inhibition of growth regulating enzymes.

The present invention provides a method whereby any food may be contacted with any of argon and the other noble gases xenon, krypton, neon and helium during packaging or storage, preferably gas packaging or controlled atmosphere storage. The present method provides a surprisingly superior method of preservation as evidenced by superior control of degradative chemical and oxidative reactions, control of degradative and oxidative enzymatic reactions, and control of degradation of important consumer quality perception parameters.

The present invention provides the first demonstration that noble gases and noble gas-based mixtures significantly and quite surprisingly increase the shelf-life of a wide variety of food products through concerted action upon chemical, biochemical and microbial degradation parameters. Through the extensive empirical assay of numerous degradation parameters, including enzyme activity from within the food product, from external application during processing, from microbial secretion, and including microbial growth rate, and including oxidative chemical processes and certain other processes, it has been surprisingly discovered that noble gases or noble gas-containing mixtures can inhibit all of the above. It has further been discovered that noble gases or noble gas-containing mixtures can inhibit all of the above, even when applied at low pressures or in solution.

The present invention thus provides, in part, a method of gas packaging food using noble gases or of storing of food under noble gases, alone or in mixtures. It also provides a method for improved preservation of foods.

The present invention thus has broad applicability to any problem or condition arising from food product storage or processing where the limitation of degradation, oxidation, food spoilage or deterioration is desirable.

In accordance with the present invention, the term "noble gas" means neon, krypton, argon or xenon. Each of these gases may be used singly or in combination with each other. Because of its low solubility in water and its high volatility, however, helium is not preferably used. Radon is not generally useable because it is dangerously radioactive. However, any gas or gas mixture, including nitrogen, oxygen, carbon dioxide, nitrous oxide, carbon monoxide, or combinations of these gases may be used as supplementing gases or "carrier gases" in the atmosphere used. Notably, helium may be used as either a noble gas or a carrier gas. The composition of the appropriate gas mixture to use is determined by the nature of the product or process to be regulated, its most common spoilage flora and the packaging material of choice.

Depending on their concentration levels and on their physical properties, the present gases and gas mixtures can inhibit microbial enzymes, both endogenous and exogenous. The present gases and gas mixtures also inhibit the other enzymes present in the product, that is endogenous enzymes and enzymes introduced during the processing of the product. The present gases and gas mixtures also inhibit chemical oxidation and certain other degradative chemical processes. The combination of the above mentioned inhibitions surprisingly improves the shelf-life of the product.

In the case of living products, such as fresh horticultural commodities, a minimum level of oxygen is necessary to allow respiration and avoid anaerobic fermentation of product, responsible for the generation of off-flavors. In other products, oxygen significantly causes oxidative degradation to produce undesirable color changes and other substantive changes. Addition of noble gases to oxygen-containing atmospheres significantly alters the resultant effect of oxygen.

Additionally, however, the present invention also may be used to control the growth of microorganisms on foods.

The present invention also provides method of maintaining or improving the flavor, texture, color or appearance of food.

In particular, the present invention provides a method of specifically maintaining or improving the color of food, such as foods having vivid colors such as red, yellow, green, orange and purple. For example, the red color of red shrimp or radishes or the green color of beans or broccoli may be preserved in accordance with the present invention.

Moreover, the present invention also provides a method of preserving or maintaining pigmented compounds, such as caretenoids, flavenoids, anthocyanins or chlorophyll, whether in naturally occurring foods, synthetic foods or foods pigmented with these compounds or the compounds themselves.

Additionally, the present invention provides a method of inhibiting aerobic and anaerobic bacteria, yeast, mold and/or fungi growth on foods.

Generally, in accordance with the present invention, pressures are used of from near vacuum, i.e., about $10^{-8}$ torr, to about 100 atmospheres. However, it is generally preferred that a pressure be used between about 0.001 to about 3 atmospheres. Further, a range of temperatures may be used from about 0°C to about 120°.

Generally, the present invention may be used to preserve all types of food, including but not limited to meats such as processed meats or poultry, vegetables, fruits and various types of baked goods, and, in particular cheese and chocolate.

DETAILED EXAMPLES OF THE INVENTION

I. Preliminary Assay Protocols and Results:

Control of Enzymatic Activity Assay

Sealed cuvettes containing enzymes representative of and in fact important in food product degradation processes were thoroughly purged and filled with assay gases. Injection of gassed substrate solutions started the reactions, which were generally conducted under optimal conditions. These were monitored colorimetrically by scanning uv/vis spectrophotometry. All controls were conducted for oxygen, nitrogen and carbon dioxide. A range of temperatures and pressures were employed. An example protocol is appended. Results were expressed in real-time, and transformed to calculate yield and rate differences for the reaction. Over 50 exemplary enzymes were so assayed. Enzymes selected for examination from various products are assayed in precisely the same manner, but always in terms of relative activity in comparison with that product in air or another control gas or gas mixture.

The result below shows the inhibitory effect of noble gases upon tyrosinase.

Product Testing: Enzymes, Chemical Oxidation, Micobiral Growth and Consumer Preference Parameter

Many different products were assayed under a wide variety of temperatures and pressures, packaging treatments, and post-packaging handling. In the general experiment, sterile pouches of impermeable film were filled with freshly-obtained food products under recommended handling regimes. Each was then purged thoroughly with the gas mixture to be tested. Then sealed, the pouch was further treated by cooking, cold storage, or other parameter, or else was not. The sealed pouch was stored at room, cold, or freezing temperature, and periodically sampled for microorganism counts (total, aerobic, anaerobic, Pseudomonas, Lactobacilli). It was also studied for observable deterioration and scored. Some samples were subjected to appropriate chemical analysis. Others were sampled for specific enzyme activities as above. All told, the average experiment consisted of replicate samples of product being assayed for microbial counts, microbial identifications, enyzme activities, chemical oxidation, discoloration, odor and/or taste changes, and final carbon dioxide and oxygen concentrations.

Microbes and enzymes known to be important in the degradation of each individual product were selected for examination and scoring from the literature.

The results below show simple vacuum-formed pouch gas-packaging results as expressed for 11 parameters of observable degradation. Gases tested are: I-IX and identified in the key. In addition, microbial samples were taken and plated, and exemplary enzyme activities were scored. In this particular experiment, replicate packages of apportioned apples, bananas, carrots, tomatoes, green beans, strawberries, steak cuts, and whole fresh fish were prepared. Each product was cleaned in water under standard food-preparation conditions, was packaged in a vacuum-gas packaging machine, and was tested as above. A summary sheet of noble gas effects is given for this experiment in view of the observable parameters. A summary graph for apples and one for steak are also provided, showing clearly that both apple and steak shelf-life can be extended by noble gases.

Microbial Growth Rate Assay

26 microorganisms were assayed under at least 105 mixtures containing noble gases, and under 8 controls. The controls were 100% air, 100% carbon dioxide, 100% nitrogen, 100% oxygen, and commonly used gas-packaging mixtures made up of various fractions of nitrogen, oxygen, and carbon dioxide. These latter bracket the range of common application gas mixtures. The assay mixtures consisted of series of two-component ("A" + "B" ) mixtures of Ar, Xe, Kr, and Ne wherein each gas was made to constitute 0.1, 1.0, 5.0, or 100% of component "A", then another noble gas was used to constitute the rest of component "A", and then this first "A" component mixture was added to a base gas which constituted the second component "B" in the proportions 100:0, 95:5, 90:10, or 50:50. Base gases were various, but were most often argon; oxygen; nitrogen; or mixtures of nitrogen, carbon dioxide and oxygen in proportions commonly used in gas-packaging. Thus, one typical gas mixture would be Ar:Xe 99:1 (component "A") 95% of total, with air (component "B") 5% of total. Thus, a very large number of gas mixes were assayed for activity against microorganisms.

Each of the microorganisms was plated after dilution series to result in growth of single-colonies under sterile conditions. Standard ATCC cultures were employed and maintained as reccomended. Assays were conducted by inoculating 125 cc serum vials prepared with 25 cc of appropriate media after that vial had been gently evacuated and thoroughly purged with nitrogen to remove all residual gases, then thoroughly purged with the test gas. Appropriate controls were run for sterility and optimum growth conditions. Daily growth plate area coverage measurements were made, backed up by less frequent total cell counts. Results were interpreted as growth/day vs. air, overall growth/air for aerobic microorganisms, and vs. appropriate atmospheres for anaerobes. Periodic measurement of carbon dioxide and oxygen levels in the vials were also made.

Results below show daily counts for one vial of Alternaria alternata, and graphed growth area comparisons for one set of gases for A. alternata and one set for of Escherichia coli. The results clearly demonstrate selective effects of different gazes in inhibiting the growth of each species. The results are generalizable across gases, but each species varies in its tolerance of quantitative amounts of gas. Gases are also clearly differentially effective depending upon their fractional composition in a mix, that is different mixes of gases show different effects upon the same microorganism. These mixes show effects that are synergistic with respect to the additive activity of their components.

It is important to realize that many parameters contribute to the variance in the obtained results of these assays including the concentration of oxygen, carbon dioxide, water vapor temperature and salt concentrations, for example.

DETAILED EXAMPLES OF THE INVENTION

Large-Scale Empirical Assay Results:

CHEMICAL REACTIONS

For chemical oxidation reactions it has been found that noble gases strongly inhibit oxidation, generally in the order Xe>Kr>Ar>Ne>He, having positive and unique utility in preventing oxidation even in the presence of oxygen, whereas nitrogen has no such ability excepting in the simple displacement of oxygen. Other oxygenated species, such as carbon dioxide are reactively destructive.

DETAILED DESCRIPTION OF THE PREFERRED EMBODIMENTS

Generally, in accordance with the present invention, it has been surprisingly discovered that it is possible to directly affect the rate of oxidation of chemicals or chemical preparations. That is, in accordance with the present invention, it has been discovered that certain gases can directly affect the oxidation rate of chemicals and not merely slow oxidation only as function of physical and inert displacement of oxygen. Generally, the present invention is effected by contacting the chemicals or chemical preparations during at least a protion of storage thereof to a noble gas, a mixture of noble gases or a gaseous mixture containing at least one noble gas.

EFFECT OF GASES ON ENZYMES

Enzymes, both endogenous to the product or secreted by the microorganisms found in the product are often strongly inhibited by noble gases. The effect of the noble gases are summarized by class below. An example of this inhibition is in the very strong inhibition of oxidases.

The follwing Table summarizes the maximum inhibition of enzymes activity realized with various noble gases under various storage conditions.

Class I. Oxidoreductase (EC 1)

Tyrosinase EC 1.14.18.1

• at 25° and optimal reaction conditions, simple saturation of solution with gas:

| Gas | Result |
|---|---|
| Xe | -73% (inhibition vs air) |
| Kr | -73% |
| Ar | -60% |
| Ne | -46.7% |
| 90:10 Xe:Kr mix | -50% |
| Ar:Xe 99:1 | -70% |
| N2 | 0% |
| CO2 | 0% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class II. Transferases (EC2)
Inhibited by noble gases depending upon active site characteristics.

Gamma-glutamyl transpeptidase EC 2.3.2.2

| Gas | Result |
|---|---|
| Xe | -7% (inhibition) |
| Kr | -8% |
| Ar | -5% |
| Ne | -3% |

Aspartate aminotransferase (EC 2.6.1.1)

| Gas | Result |
|-----|--------|
| Xe | -17% (inhibition) |
| Kr | -82% |
| Ar | -17% |
| Ne | -12% |

## Class III. Hydrolases (EC3)

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

With Lipase

| Gas | Result |
|-----|--------|
| Xe | -25.6% |
| Kr | -25% |
| Ne | -15% |
| Ar | -18% |

## Class IV. Lyases (EC4)

Citrate synthase EC 4.1.3.7
Showed maximum inhibition of -27% at 25°C when measured as a coupled reaction with all gases.

## Class V. Isomerases (EC 5)

| Ar | -37% |
|-----|------|
| 90:10 Xe:Kr mix | -6.3% |

Phosphoglucose isomerase

| Gas | Result |
|-----|--------|
| Xe | -61% |
| Ne | -45% |

## Class VI. Ligases (Synthetases) (EC 6)

Acetyl-CoA synthetase EC 6.2.1.1

| Gas | Result |
|-----|--------|
| Xe | -18% |
| Kr | -16% |
| Ar | -75% |
| Ne | -15% |

QUALITY FACTORS OF FRUITS AND VEGETABLES

I. LIGHTLY PROCESSED FRUITS AND VEGETABLES:

Examples are fresh apple slices and shredded lettuce.

- Quality factors:

    color
    flavor
    texture
    appearance

- Relative importance of these 3 factors vary between products.
- microbiological quality
- Nutritional quality

    a. Flavor: most difficult quality factor to maintain.

    . Maintain the original aroma quality
    . avoid off-flavor development

The enzymes involved in off-flavor formation in fruits and vegetables seem to be peroxidases and lipoxygenases.
b. Texture: quality factor that differentiates fresh from processed foods.

    . Fresh fruits and vegetables: "crisp", "firm": high "turgor"
    . Processed foods: "soft", "chewy". Processing stress results in loss of turgor. Enzyme catalyzed reactions cause depolymerization of cell membranes and cell walls.
    Loss of texture:

    . pectinesterase
    . polygalacturonase
    . pectine methyl esterase
    . galacturonase

c. Appearance:
Discoloration of lightly processed fruits and vegetables is often the factor that determines their shelf-life. Enzyme catalyzed reactions which convert phenolic compounds, such as flavonoids, and derivatives of chlorogenic acid to brown melanins are the main causes of discoloration of lightly processed fruits and vegetables. When products are peeled, cut, cellular compartmentation is lost, enzymes and substrates come in contact with each other, and discoloration occurs. carbon dioxide can influence phenolic metabolism.
Breakdown of chlorophyll: loss of appealing green color. As the chlorophyll is broken down, the carotenoids are exposed, giving rise to a yellowing of the products. The importance of color in green vegetables is demonstrated by USDA quality standards where as much as 60% of the total quality score is assigned to color.
The naturally existing chlorophyllases can convert chlorophylls to water-soluble chlorophyllides, but do not significantly alter the green color. Acidic conditions can make the chlorophylls into pheophytins. The pheophytins are brown in color and are normally undesirable in most foods. The loss of green color in green vegetables is an important problem in certain thermal processing operations.

The carotenoids most important in imparting color to fruits and vegetables are derivatives of $\alpha$- and $\beta$-carotenes and lycopene. Due to their unsaturated nature, they are generally susceptible to oxidation. Carotenes are important to nutrition, flavor and appearance as precursors of vitamin A, precursors of some flavor volatiles and as pigments. Lipoxygenase appears to catalyze the direct oxidation of certain unsaturated fatty acids with the concurrent bleaching of carotenoids.

Carotenoids are also sensitive to nonenzymatic oxidations with concurrent loss of color. Low oxygen and high relative humidity can be expected to preserve carotenes.

Carotenoids are extremely susceptible to nonenzymatic oxidation in dehydrated fruits and vegetables as water acts as a barrier to oxygen diffusion.

Anthocyanins: flavonoid, phenolic-based, water-soluble compounds.

low pH red

intermediate pH colorless

higher pH blue

Polyphenol oxidases can degrade anthocyanins in the presence of other phenolic compounds such as catechol or chlorogenic acid.

d. Nutritional quality:

Ascorbic acid degradation

1 to 4% oxygen generally slows ascorbic acid degradation, presumably through prevention of oxidation (lettuce, green beans, apples).

Elevated carbon dioxide can accelerate ascorbic acid degradation.

e. Microbial quality:

- Plant pathogens:

  Botrytis (strawberries)
  Monolinia
  Geotrichum candidum
  Aspergillus
  Aspergillus flavus
  Penicillium

- Human pathogens:

  Clostridium botulinum (packaged mushrooms)
  Listeria monocytogenes (enhanced by elevated $CO_2$) on fresh vegetables
  Aeromonas hydrophila (MA chilled products)

It is important to note that on oxygen level which low oxygen or excessive carbon dioxide can cause fermentative metabolism leading to accumulation of ethanol and acetaldehyde.

Respiratory activity:

- Climacteric fruits:

  - Apples
  - Banana

- Nonclimacteric fruits:

  - Strawberries

Generally, in the following section, various products an the parameters of their preservation are analyzed. Sections A-D represent the four parameters of spoilage: microbes, enzymes, chemical, reactions and quality parameters for customer perception: Sections E-H are the responses provided for each of sections A-D, respectively.

1. Product: Apples

A. List of Microorganisms:

Spoilage microorganisms

Botrytis cinerea Pers. ex Fr.
gray mold rot
Cryptosporiopsis malicorticis (= Gloeosporium perennans)
lenticel rot
C. malicorticis (Codl.) Nannf. (= G. perennans Zeller and Childs)
lenticel rot
Penicillium expansum Thom
blue mold rot
Phlyctaena vagabunda Desm. (= Gloeosporium album Osterw.)
lenticel rot

B. List of Enzymes:

Endogenous enzymes:

Polygalacturonases EC 3.2.1.15
[fruit softening]. The softening observed in ripening fruits derives from the synthesis and transport to the cell wall of wall degrading glycosidases. Fruit softening is characterized by an increase in the concentration of soluble pectic polysaccharide.

- Exopoloygalacturonases EC 3.2.1.67

De-esterification of cell wall galacturonans followed by polygalacturonase action.
Pectinesterase
Involoves in the preparation of the substate for polygalacturonases
Cytochrome oxidase EC 1.9.3.1
A process other than pectin degradation is also involved in fruit softening. Softening is in some way dependent upon the operation of the respiratory enzyme cytochrome oxidase. It may involve an active ion pump regulating the ionic status of the cell wall.
$\beta$-Galactosidase EC 3.2.1.23
The softening of apples is accompanied by not only pectin solubilization but also by the loss of galactose residues from the cell wall.
Loss of galactose from cell walls during ripening. Incease in this activity in apples during storage causes loss of firmness.
Peroxidases EC 1.11.1.7
Decolorizing anthocyanins
Polyphenol oxidase (PPO) EC 1.14.18.1
Direct correlation between PPO activity and degree of browning. High correlation between total phenolics and degree of browning.
Decolorizing anthocyanins
Anthocyanase
Decolorizing anthocyanins
ACC synthase
prime factor controlling the rate of ethylene biosynthesis
Lipoxygenase EC 1.13.11.12
activity can increase ethylene production
cellulase complex:

- EC 3.2.1.4
- EC 3.2.1.21

degradation of cellulose

enzymatic browning reaction:

- Tyrosinase EC 1.14.18.1
  initiates browning reaction
- Catechol oxidase EC 1.10.3.2

Laccase EC 1.10.3.1

<u>Microorganism enzymes:</u>

Laccase EC 1.10.3.2

C. List of Chemical Reactions of Importance:

$$\text{phenolic compounds} \xrightarrow{\text{air}} \text{brown melanins}$$

D. Quality Parameters of Importance:

Certain varities of apples contain water-soluble flavonoid pigments.
pH is the most important factor affecting the stability of anthocyanins.
Enzymatic Browning: Tyrosinase then Catechol oxidase

E. Table I. Effect of Gases on Microbes:

Ernvinia carotovora: Aerobes, facultative anaerobes
Pseudomonas marginales: Aerobes
Acinetobacter calcoaceticus: Aeorbes
Alteromonas putrefacions: Aerobes
Serratia liquefaciens: Facultative anaerobes
Escherichia coli: Facultative anaerobes
Yersinia enterocolitica: Facultative
Listeria monocytogenes: Facultative
Penicillium italicum: Molds
Aspergillus niger: Molds
Alternaria alternata: Molds

1. Microassays

a. Penicillium italicum (ATCC 48114)

| 95% GAS MIXES IN AIR | |
|---|---|
| 95% $CO_2$ | 100% (all in % inhibition) |
| 95% $N_2$ | 74% |
| 95% Ar | 80% |
| 3 best gas mixes: | |
| 95% Ar:Ne 99.9:0.1 | 89% |
| most other noble gas mixtures | 84% |
| 90% GAS MIXES IN AIR | |
| 90% $CO_2$ | 100% |
| 90% $N_2$ | 70% |
| 90% Ar | 78% |
| 3 best gas mixes: | |
| 90% Xe/Kr | 83% |
| 90% Ar:Xe 99:1 | 83% |
| 90% Ar:Kr 99.9:0.1 | 83% |
| 50% GAS MIXES IN AIR | |
| 50% $CO_2$ | 92% |
| 50% $N_2$ | 50% |
| 50% Ar | 55% |
| 3 best gas mixes: | |
| 50% Ar:Kr 99.9:0.1 | 59% |
| 50% Ar:Xe/Kr 95:5 | 59% |
| Kr and Ar+Xe mixes | 50% |

F. Table II. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|-----|--------|
| Xe | -91.6% (inhibition) |
| Kr | -92.7% |
| Ar | -85.8% |
| Ne | -61.7% |

G. Effect of Gases on Chemical Reactions:

For apples, oxidation of color components is inhibited and degrative chemical oxidations are also strongly inhibited.
For example:

1. Color: one of the color changes in apples (red and green/yellow) is due to the oxidation of phenolic compounds to brown melanins. It has been found that noble gases effect oxidation in the order Xe>Kr>Ar>Ne>He in having a positive and unique utility in preventing oxidation even in the presence of oxygen.

$$\text{phenolic compounds} \xrightarrow{\text{air}} \text{brown melanins}$$

The carotenoids that are most important in imparting color to fruits are derivatives of $\alpha$-and $\beta$-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.
Carotenoids are extremely susceptible to nonenzymatic oxidation in dehydrated fruits and vegetables (water acts as a barrier to oxygen diffusion).
Red apples also undergo a color change due to the oxidation of anthocyanins from purplish-red to off-white. It has been found that noble gases effect oxidation of anthocyanins in the order Xe>Kr>Ar>Ne>He in having a positive and unique utility in preventing oxidation even in the presence of oxygen.
Green/yellow apples undergo a color change due to the oxidation of flavanoids. It has been found that noble gases effect oxidation of flavanoids in the order Xe>Kr>Ar>Ne>He in having a positive and unique utility in preventing oxidation even in the presence of oxygen.
It has been found that color can be maintained well beyond the point where the product becomes microbiologically unexceptable.
Ascorbic acid degradation
1 to 4% $O_2$ generally slows ascorbic acid degradation, presumably through prevention of oxidation.
Elevated $CO_2$ can accelerate ascorbic acid degradation.
2. Degradation chemical oxidations:

Enzymatic browning reaction:

Tyrosinase EC 1.14.18.1
initiates browning reaction
Catechol oxidase EC 1.10.3.2

Decolorizing anthocyanins:

Peroxidases EC 1.11.1.7

Polyphenol oxidase (PPO) EC 1.14.18.1
Direct correlation between PPO activity and degree of browning. High correlation between total phenolics and degree of browning.
Decolorizing anthocyanins

H. Summary:

Generally, apples may be well preserved in gaseous mixtures containing about 80% by volume of Ar to about 80% by volume of Ar to about 99% by volume of Ar with the remainder being about 1% by volume to about 20% by volume of any one of Xe, Kr or Ne or a combination thereof. However, it is preferable to use a mixture of about 85% by volume to about 95% by volume of Ar with the remainder being about 5% by volume to about 15% by volume of any one of Xe, Kr or Ne.

Most preferably, a mixture of about 90% by volume of Ar and about 10% by volume of Xe, Kr or Ne is used.

$O_2$ and $CO_2$ may also be present, but not in large amounts. For example, if a mixture of Ar to Xe, Kr or Ne is used in a ratio of about 9:1, it is acceptable to have $O_2$ or $CO_2$ present in the amounts up to about 20 volume %, preferably no more than about 10 volume %, based on the total gas mixture.

Further, the presence of nitrogen is acceptable, as it appears to have little detrimental effect.

2. Product: Bananas

A. List of Microorganisms:

Spoilage microorganisms

Colletotrichum musae (= Gloeosporium musarum)
(anthracnose (bitter rot), crown rot)
C. musae (Berk. and Curt.) Arx (= G. musarum Cke. and Mass.)
(anthracnose (bitter rot), crown rot)
Fusarium roseum
(crown rot)
F. roseum Link emend. Snyd. and Hans
(crown rot)

B. List of Enzymes:

endogenous enzymes

Polygalacturonases EC 3.2.1.15

• Exopoloygalacturonases EC 3.2.1.67

De-esterification of cell wall galacturonans followed by polygalacturonase action.
Pectinesterase
Involoves in the preparation of the substate for polygalacturonases
Polyphenol oxidase (PPO) EC 1.14.18.1
Widely responsible for enzymatic browning in many fruits and vegetables and particularly in bananas.
Darkening of banana pulp.
Lipoxygenase EC 1.13.11.12
Involved in flavor biogenesis: production of short-chain unsaturated aldehydes and alcohols.
Activity can increase ethylene production
ACC synthase
prime factor controlling the rate of ethylene biosynthesis
cellulase complex:

• EC 3.2.1.4
• EC 3.2.1.21

degradation of cellulose
amylase
starch-sugar conversion
phosphorylase
starch-sugar conversion
enzymatic browning reaction:

- Tyrosinase EC 1.14.18.1
  initiates browning reaction
- Catechol oxidase EC 1.10.3.2

Laccase EC 1.10.3.1

C. List of Chemical Reactions of Importance:
Pigments as above.
D. Quality Parameters of Importance:

Starch-sugar conversion: phosphorylase and amylase
Enzymatic Browning: Tyrosinase then Catechol oxidase

E. Table I. Effect of Gases on Microbes:

As for other vegetables.

F. Table II. Effect of Gases on Enzymes:

Class I. Oxioreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

G. Effect of Gases on Chemical Reactions:

For bananas, oxidation of color components is inhibited and degrative chemical oxidations are also strongly inhibited.
For example:

1. Color: The carotenoids that are most important in imparting color to fruits are derivatives of $\alpha$- and $\beta$-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.

It has been found that color can be maintained well beyond the point where the product becomes microbiologically unexceptable.

2. Degrative chemical oxidations:

enzymatic browning reaction:

<u>Tyrosinase EC 1.14.18.</u>1
initiates browning reaction
<u>Catechol oxidase EC 1.10.3.2</u>

<u>Polyphenol oxidase (PPO) EC 1.14.18.1</u>
Widely responsible for enzymatic browning in many fruits and vegetables and particularly in bananas. Darkening of banana pulp.
Note: See Effect of Gases on Enzymes above for quantification of the inhibitory effect of noble gases on enzymes.

H. Summary:
Generally, the same description may be provided, and is incorporated at this point, as for apples. This is, the same gases, gas mixtures and relative amounts of each may be used to advantage.

3. Product: Bread

A. List of Microorganisms:

Molds and yeasts.

B. List of Enzymes:

Generally not important.

C. List of Chemical Reactions of Importance:

Simple oxidations.

D. Quality Parameters of Importance:

Softness (moist)

E. Table I. Effect of Gases on Microbes:
Yeasts and molds are effectively depressed by all the noble gases with respect to nitrogen or air. CO2 may be superior, but imparts color degradation and off-flavors to the bread.
F. Table II. Effect of Gases on Enzymes:

No negative effect of noble gases.

G. Effect of Gases on Chemical Reactions:

Noble gases enhance moisture retention in the bread.

H. Summary:
For bread, it is generally acceptable to use Ar and other lnoble gases in amounts of from about 70 to 100 volume %. It is acceptable to use up to about 30% $CO_2$, and up to about 20% of air or $O_2$. Thus, mixtures of about 80 to about 100% by volume of noble gas or gases may be used with about 0 to about 20% by volume of air or oxygen.
All noble gases are useful in bread preservation, due primarily to prevention of moisture loss, inhibition of mold and yeast growth, and prevention of oxidation reactions.

4. Product: Carrots

A. List of Microorganisms:

Spoilage microorganisms

Erwinia carotovora
(bacterial soft rot)
Erwinia carotovora (Jones) Holland
Pseudomonads similar to Pseudomonas marginalis
(bacterial soft rot)
Botrytis cinerea
(gray mold rot)
B. cinerea Pers. ex Fr.
Geotrichum candidum
(sour rot (watery soft rot))
Rhizopus stolonifer
(Rhizopus soft rot)
Sclerotinia sclerotiorum
(watery soft rot)
S. sclerotiorum (Lib.) de Bary

B. List of Enzymes:

Endogenous enzymes:

Peroxidase EC 1.11.1.7
Carrot has a medium peroxidase activity.
Catalase EC 1.11.1.6
Causes off-flavor. A correlation exists between the storage stability of the vegetables and the activity of catalase and peroxidase. Carrot has a high catalase activity.
Phenolase EC 1.10.3.1
ACC synthase
prime factor controlling the rate of ethylene biosynthesis
Lipoxygenase EC 1.13.11.12
Activity can increase ethylene production Oxidation by lipoxygenase can bleach carotenoids.
cellulase complex:

• EC 3.2.1.4
• EC 3.2.1.21

degradation of cellulose
Microorganism enzymes:

Laccase EC 1.10.3.2
Endopolygalacturonase EC 3.2.1.15 (extracellular)

C. List of Chemical Reactions of Importance:

Carotenoid degradation during processing and storage:

unsaturated nature → susceptible to isomerization and oxidation.

D. Quality Parameters of Importance:

Ethylene induced formation of bitter isocoumarins in carrots.
α-carotenes
β-carotenes

E. Table I. Effect of Gases on Microbes:

1. Microassays

a. Erwinia carotovora (ATCC 15713)

| 95% GAS MIXES IN AIR | |
|---|---|
| 95% $CO_2$ | 100% |
| 95% $N_2$ | 0% |
| 95% Ar | 2% |
| 3 best gas mixes: | |
| 95% Ar:Ne 95:5 | 24% |
| 95% Ar:Kr 99:1 | 20% |
| 95% Ar:Ne 99:1 | 18% |
| 90% GAS MIXES IN AIR | |
| 90% $CO_2$ | 100% |
| 90% $N_2$ | 0% |
| 90% Ar | 2% |
| 3 best gas mixes: | |
| 90% Ar:Xe 99:1 | 21% |
| 90% Ar:Kr 99:1 | 20% |
| 90% Ar:Ne 99:1 | 16% |
| 50% GAS MIXES IN AIR | |
| 50% $CO_2$ | 100% |
| 50% $N_2$ | 0% |
| 50% Ar | 0% |
| Other best gas mixes: | |
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

Table 1b

| Effect of Gases on Total Microorganisms from Product Trials. Aerobes: | | |
|---|---|---|
| Gas/Gas Mix: | % | %Inhibition Compared to 100% Air |
| 1. $Co_2$ | 100 | 24% |
| 2. Ar | 100 | 33% |
| 3. (Ar:Kr):$O_2$ | [9:1]:9 | 17% |
| Anaerobes: | | |
| Gas/Gas Mix: | % | %Inhibition Compared to 100% $CO_2$ |
| 1. Air | 100 | 31% |
| 2. Ar | 100 | 9% |
| 3. (Ar:Kr):$O_2$ | [9:1]:9 | 42% |
| 4. (Ar:Ne):$CO_2$ | [9:1]:9 | 32% |
| 5. (Ar:Ne):$O_2$ | [9:1]:9 | 33% |
| Yeasts: | | |
| Gas/Gas Mix: | % | %Inhibition Compared to 100% Air |
| 1. $Co_2$ | 100 | 35% |
| 2. Ar | 100 | 49% |
| Molds: | | |
| Gas/Gas Mix: | % | %Inhibition Compared to 100% Air |
| 1. $Co_2$ | 100 | 3% |
| 2. Ar | 100 | 20% |
| 3. Ar:$CO_2$ | 9:1 | 17% |

F. Effect of Gases on Enzymes:

Class I. Oxidoreductase (EC 1)

Tyrosinase EC 1.14.18.1

• at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

G. Effect of Gases on Chemical Reactions:

For carrots, oxidation of color components is inhibited and degrative chemical oxidations are also strongly inhibited.
For example:

1. Color: The carotenoids that are most important in imparting color to fruits are derivatives of $\alpha$- and $\beta$-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.
Carotenoids are extremely susceptible to nonenzymatic oxidation in dehydrated fruits and vegetables (water acts as a barrier to oxygen diffusion).
2. Degradative chemical oxidation:

Lipoxygenase EC 1.13.11.12
Lipoxygenase appears to catalyze the direct oxidation of certain unsaturated fatty acids with the concurrent bleaching of carotenoids.
Carotenoids are also sensitive to nonenzymatic oxidations with concurrent loss of color.
It has been found that color can be maintained well beyond the point where
the product becomes microbiologically unexceptable.
Peroxidase EC 1.11.1.7
Decolorizing anthocyanins
Note: See Effect of Gases on Enzymes above for quantification of the inhibitory effect of noble gases on enzymes.

H. Summary:

Generally, exposure of carrots to the gases and gas mixtures of the present invention results in the improvement of color. Oxidation reactions and oxidase reactions are controlled.
In general, binary mixtures of Ar:Ne are preferably used in the relative amount of about 80 to 99 volume % Ar and 1 to 20 volumne % Ne. More preferably, about 85 to 97 volume % Ar and about 3 to 15 volume % of Ne is used. Most preferably, about 95 volume % of Ar and about 5 volume % of Ne is used.
Additionally, up to about 10 volume % of $O_2$, air or $CO_2$ may be used.

5. Product: Fish Fillets

A. List of Microorganisms:

I. FISH:

<u>Spoilage microorganisms</u>

Acinetobacter
Aeromonas
(known to occur)
Aeromonas hydrophila
Alcaligenes
(known to occur)
Alteromonas
(32-60% of the initial skin flora of 4 different fish)
Alteromonas putrefaciens
Aspergillus
(known to occur)
Chromobacterium
(known to occur)
Corynebacterium
(known to occur)
Cytophaga
(known to occur)
Enterobacter
(known to occur)
Escherichia
Flavobacterium
(known to occur)
Halobacterium
(known to occur)
Microbacterium
(known to occur)
Micrococcus
Moraxella
Penicillium
(known to occur)
Photobacterium
(known to occur)
Pseudomonas spp.
(32-60% of the initial skin flora of 4 different fish)
Pseudomonas marinoglutinosa
Pseudomonas aeruginosa
Streptococcus
(known to occur)
Oospora
(known to occur)
Scopulariopsis
(known to occur)
Vibrio
(known to occur)
Wallemia (Sporendonema)
(known to occur)
Candida
(most frequently found)
Cryptococcus
(known to occur)

Debaryomyces
(known to occur)
Hansenula
(known to occur)
Pichia
(known to occur)
Pullularia
(known to occur)
Rhodotorula
(most frequently found)
Sporobolomyces
(known to occur)
Torula
(most frequently found)
Torulopsis
(known to occur)
Trichosporon
(known to occur)

FRESH ICED FISH:

Spoilage microorganisms

Acinetobacter
Alteromonas
Alteromonas putrefaciens (= Pseudomonas putrefaciens)
(important fish spoilage organism)
Moraxella
Pseudomonas spp.
Pseudomonas fragi

CHILL STORED ROCK COD FILLETS IN 80% $CO_2$/20% AIR ATMOSPHERE:

Spoilage microorganisms

Lactobacillus
(71-87% of flora after 21 days, plus some tan-colored pseudomonads)

COD MUSCLE:

Spoilage microorganisms

Pseudomonas sp.
Pseudomonas fluorescens
Pseudomonas fragi
Pseudomonas putida
Pseudomonas putrefaciens

HADDOCK:

Spoilage microorganisms

Pseudomonas spp. of Shewan's Group II and III/IV
(particularly active in the spoilage process)

CHILL STORED HADDOCK:

Spoilage microorganisms

Pseudomonas putrefaciens

HERRING FILLETS IN AIR:

Spoilage microorganisms

Alteromonas putrefaciens
(62-95% of the flora after spoilage)
Pseudomonads
(62-95% of the flora after spoilage)

CHILL STORED HERRING FILLETS IN 100% $CO_2$ ATMOSPHERE:

Spoilage microorganisms

Lactobacillus
(almost 100% of spoilage bacterial flora)

CHILL STORED PACIFIC HAKE:

Spoilage microorganisms

Acinetobacter
(Highest % of the initial flora. Not isolated after 14 days)
Moraxella
(Highest % of the initial flora. Not isolated after 14 days)
Pseudomonas spp. of Shewan's Group II
(dominant types of all bacteria after 14 days)

ENGLISH SOLE AT 5°C:

Spoilage microorganisms

Aeromonas spp.
(among the most active spoilers)
Pseudomonas spp. of Shewan's Group I and III/IV
(among the most active spoilers)
Vibrio spp.
(among the most active spoilers)

B. List of Enzymes:

Endogenous enzymes

Phospholipase (hydrolase)
in fish muscle (much of the study of fish muscle lipolysis has been with lean fish in which the primary lipid constituent is phopholipid). Lipolysis occurs extensively in fish muscle post-mortem and is associated with quality deterioration in the frozen tissue. Major cause of quality deterioration.
Lipases EC 3.1.1.3
in fish muscle.
metmyoglobin reductase
Lipoxygenase EC 1.13.11.12
in fish tissues. Fish tissues, which are rich in n-3 polyunsaturated fatty acids, are very susceptible to lipid oxidation. Once lipid oxidation is initiated, very low concentrations of aldehydes with n-3 double bonds cause distinctive oxidative off-flavors. Involved in the initiation of oxidation in fish skin tissue-extracts containing high heme concentrations. Catalyzes the formation of hydroperoxides in Emerald shiner and Rainbow trout. Because of the abundance of long-chain polyunsaturated fatty acids in fish, enzyme-initiated hydroperoxidation can be significant in relation to the flavor quality of fish at a later date. Thus, early control of oxidative enzymes in fish should suppress reactions which promote the development of undesirable, autoxidatively-derived volatile carbonyls later during subsequent processing and storage.

Microsomal Lipid Peroxidation Enzyme System in fish muscle. The fish muscle microsomal fraction is very active at relatively low temperatures and even has significant activity in the frozen state. The exact role of this enzyme system in fish quality is still not fully understood. Since the microsomal lipid peroxidation enzyme system is active at temperatures below the freezing point of fish tissue, it is possible that enzymatic lipid peroxidation activates phospholipase A2 to initiate phospholipids hydrolysis. In frozen fish muscle, increased level of lipid peroxidation correlates with an increasing level of phospholipids hydrolysis. It is possible that an endogenous lipid peroxidizing capacity may play a fundamental role in turnover and metabolism of membrane lipids.

Myleoperoxidase-like enzyme
in fish leukocytes. Capable of initiating lipid oxidation along with concurrent carotenoid degradation when $H_2O_2$ and halide salts are present.

Proteinases

Cathepsin D EC 3.4.23.5
Neutral proteinase
Cathepsin B EC 3.4.22.1
Alkaline proteinase
in fish skeletal muscle. Involved in the breakdown of tissue proteins. Affect quality. Implicated in the textural degradation of minced fish meat.

β-Glucuronidase EC 3.2.1.31
in fish skeletal muscle (lysosomal and microsomal localization). Involved in the hydrolysis of glucose-galactose moieties present in collagen and the mucopolysaccharide-protein complexes of the connective tissue matrix. Also implicated in the cleavage of glucuronidic disaccharide linkages of the protein polysaccharide complex occuring in the connective tissue. Autolytic process leading to early spoilage.

Glycolysis Pathway System
Production of energy, accumulation of lactic acid. The source of most post-mortem energy under anaerobic conditions is glygogen breakdown through glycolysis.

Creatine kinase EC 2.7.3.2
Involved in the regeneration of ATP. Accounts for 13-20% of total sarcoplasmic proteins in fish muscle.

Myofibrillar and sarcoplasmic ATPases
Catalyzes the breakdown of ATP in fish muscle. Onset of rigor-mortis: ATP and creatine phosphate breakdown and lactic acid accumulation in fish muscle.

COD MUSCLE:

Endogenous enzymes

Phospholipase (Hydrolase)
Most of the hydrolysis in cod is autolytic, not bacterial, in nature. Extensive: 75% of cod phospholipid is hydrolyzed in the first month of frozen storage at -7°C. Lipid hydrolysis has been almost exclusively attributed to phospholipid hydrolysis..

Lipoxygenase EC 1.13.11.12
Trans-2, cis-4-heptadienal, cis-4-heptenal, and hexenal increase with the time and temperature of storage. These correspond to the possible oxidation products of n-3 unsaturated fatty acids released primarily from the phospholipids of frozen stored cod.

Microorganism enzymes:

Glycosidases (β-D-Glucosidase EC 3.2.1.21, β-D-Galactosidase EC 3.2.1.23)
Proteases

Fish myosin is the most effective in supporting growth and enzyme secretion by Aeromonas hydrophila.

Protease

Substantial degradation of fish actomyosin even at refrigerated temperatures.

Pseudomonas fluorescens

Endo Pectate Lyase EC 4.2.2.3 (extracellular)
Lipase EC 3.1.1.3 (extracellular)
Glycosidases ($\beta$-D-Glucosidase
EC 3.2.1.21, $\beta$-D-Galactosidase EC 3.2.1.23)

Lipase EC 3.1.1.3 (Aspergillus niger)
Lipase EC 3.1.1.3 (Candida paralipolytica)
Lipase EC 3.1.1.3 (Pseudomonas spp.)
Lipase EC 3.1.1.3 (Pseudomonas sp.)
Glucoamylase EC 3.2.1.3 (extracellular)
$\alpha$-Galactosidase EC 3.2.1.22 (A. oryzae/extracellular)
Proteolytic enzymes (extracellular, Pseudomonas fragi)

C. List of Chemical Reactions of Importance:

$$\text{Oxymyoglobin} \xrightarrow{\text{oxidation}} \text{metmyoglobin}$$

D. Quality Parameters of Importance:

- Bright red color: oxymyoglobin
- Brown color: metmyoglobin
- Reduction of metmyoglobin to myoglobin: succinic dehydrogenase, metmyoglobin reductase
- Greening of tuna (only when cooked):

  - TMAO trimethylamine oxide + heat-denatured metmyoglobin

E. Table I. Effect of Gases on Microbes:
1. Microassays:

a. Acinetobacter calcoaceticus (ATCC 23055)

| 95% GAS MIXES IN AIR | |
|---|---|
| 95% $CO_2$ | 100% |
| 95% $N_2$ | 88% |
| 95% Ar | 93% |
| 3 best gas mixes: | |
| 95% Xe | 94% |
| 95% Ar:Kr 50:50 | 100% |
| 95% Ar:Xe 99:1 | 93% |
| 90% GAS MIXES IN AIR | |
| 90% $CO_2$ | 100% |
| 90% $N_2$ | 84% |
| 90% Ar | 93% |
| Other best gas mixes: | |
| 90% Ar:Ne 50:50 | 90% |
| 50% GAS MIXES IN AIR | |
| 50% $CO_2$ | 90% |
| 50% $N_2$ | 80% |
| 50% Ar | 88% |
| Other best gas mixes: | |
| 50% Ar:Xe 50:50 | 90% |
| 50% Ar:Xe 95:5 | 90% |

b. Alteromonas putrefaciens (ATCC 8071)
All $O_2$ mixes (95%, 90%, and 50%) and all $CO_2$ mixes (95%, 90%, 50%) give 100% inhibition.

| 95% GAS MIXES IN AIR | |
|---|---|
| 95% $CO_2$ | 100% |
| 95% $N_2$ | 100% |
| 95% Ar | 100% |
| Other best gas mixes: | |
| 95% Ne | 49% |
| 95% Xe | 100% |
| 90% GAS MIXES IN AIR | |
| 90% $CO_2$ | 100% |
| 90% $N_2$ | 50% |
| 90% Ar | 63% |
| Other best gas mixes: | |
| 90% Kr | 61% |
| 90% Xe/Kr | 62% |
| 50% GAS MIXES IN AIR | |
| 50% $CO_2$ | 100% |
| 50% $N_2$ and 50% Ar: for all the 50% mixes in air (except for $O_2$ and $CO_2$), slower growth than in air but reaches the same plateau. | |

c. Aspergillus niger (ATCC 16888)

| 95% GAS MIXES IN AIR | |
|---|---|
| 95% $CO_2$ | 100% |
| 95% $N_2$ | 64% |
| 95% Ar | 64% |
| 3 best gas mixes: | |
| 95% Xe | 94% |
| 95% Ar:Kr 99.9:0.1 | 76% |
| 95% Ar:Ne 99.9:0.1 | 76% |
| 90% GAS MIXES IN AIR | |
| 90% $CO_2$ | 100% |
| 90% $N_2$ | 52% |
| 90% Ar | 64% |
| 3 best gas mixes: | |
| 90% Xe | 94% |
| 90% Ar:Kr 95:5 | 81% |
| 90% Ar:Xe/Kr 99.9:0.1 | 70% |
| 50% GAS MIXES IN AIR | |
| 50% $CO_2$ | 100% |
| 50% $N_2$ | 42% |
| 50% Ar | 49% |
| 3 best gas mixes: | |
| 50% Ar:Xe/Kr 99.9:0.1 | 52% |
| 50% Ar:Kr 95:5 | 52% |
| 50% Ar:Ne 99:1 | 52% |

d. Penicillium italicum (ATCC 48114)

| 95% GAS MIXES IN AIR | |
|---|---|
| 95% $CO_2$ | 100% |
| 95% $N_2$ | 74% |
| 95% Ar | 80% |
| 3 best gas mixes: | |
| 95% Ar:Ne 99.9:0.1 | 89% |
| most other noble gas mixtures | 84% |
| 90% GAS MIXES IN AIR | |
| 90% $CO_2$ | 100% |
| 90% $N_2$ | 70% |
| 90% Ar | 78% |
| 3 best gas mixes: | |
| 90% Xe/Kr | 83% |
| 90% Ar:Xe 99:1 | 83% |
| 90% Ar:Kr 99.9:0.1 | 83% |
| 50% GAS MIXES IN AIR | |
| 50% $CO_2$ | 92% |
| 50% $N_2$ | 50% |
| 50% Ar | 55% |
| 3 best gas mixes: | |
| 50% Ar:Kr 99.9:0.1 | 59% |
| 50% Ar:Xe/Kr 95:5 | 59% |
| Kr and Ar+Xe mixes | 50% |

e. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

f. Serratia liquefaciens (ATCC 35551)

| 95% GAS MIXES IN AIR | |
|---|---|
| 95% $CO_2$ | 47% |
| 95% $N_2$ | 0% |
| 95% Ar | 0% |
| Other best gas mixes: | |
| 95% Ar:Xe 99:1 | 15% |
| 95% Ar:Xe 99:5 | 18% |
| 90% GAS MIXES IN AIR | |
| 90% $CO_2$ | 2% |
| 90% $N_2$ | 0% |
| 90% Ar | 0% |
| Other best gas mixes: | |
| 90% Xe | 14% |
| 50% GAS MIXES IN AIR | |
| 50% $CO_2$ | 0% |
| 50% $N_2$ | 0% |
| 50% Ar | 0% |

g. Escherichia coli (ATCC 9637)

| | |
|---|---|
| 95% GAS MIXES IN AIR | |
| 95% $CO_2$ | 100% |
| 95% $N_2$ | 62% |
| 95% Ar | 78% |
| 3 best gas mixes: | |
| 95% Ar:Ne 95:5 | 78% |
| 95% Xe | 82% |
| 95% Ar:Kr 95:5 | 78% |
| 90% GAS MIXES IN AIR | |
| 90% $CO_2$ | 100% |
| 90% $N_2$ | 51% |
| 90% Ar | 65% |
| 3 best gas mixes: | |
| 90% Kr | 78% |
| 90% Xe | 78% |
| 90% Ar:Xe 99:1 | 67% |
| 50% GAS MIXES IN AIR | |
| 50% $CO_2$ | 100% |
| 50% $N_2$ | 12% |
| 50% Ar | 15% |
| Other best gas mixes: | |
| 50% Ar:Kr 99:1 | 16% |
| 50% Ar:Xe/Kr 95:5 | 17% |

Table 1b

| Effect of Gases on Total Microorganisms from Product Trials. | | |
|---|---|---|
| Aerobes: | | |
| Gas/Gas Mix: | % | %Inhibition Compared to 100% Air |
| 1. $Co_2$ | 100 | 14% |
| 2. Ar | 100 | 13% |
| 3. Ar:Ne | 9:1 | 3% |
| 4. [Ar:Ne]:$O_2$ | [9:1]:9 | 1% |
| 5. [Ar:Ne]:$CO_2$ | [9:1]:9 | 4% |
| Anaerobes: | | |
| Gas/Gas Mix: | % | %Inhibition Compared to 100% $CO_2$ |
| 1. Air | 100 | 61% |
| 2. Ar | 100 | 2% |
| Yeasts: | | |
| Gas/Gas Mix: | % | %Inhibition Compared to 100% Air |
| 1. $Co_2$ | 100 | 36% |
| 2. Ar | 100 | 35% |
| 3. Ar:$CO_2$ | 9:1 | 56% |
| Molds: | | |
| Gas/Gas Mix: | % | %Inhibition Compared to 100% Air |
| 1. $Co_2$ | 100 | 18% |
| 2. Ar | 100 | 15% |
| 3. Ar:$CO_2$ | 9:1 | 21% |
| 4. Ar:Kr | 9:1 | 16% |

F. Table II. Effect of Gases on Enzymes:

Class I. Oxdoreductase (EC 1)

Tyrosinase EC 1.14.18.1

• at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)
Generally strongly enhanced by noble gases.

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

G. Effect of Gases on Chemical Reactions:

For fish, oxidation of color components is inhibited and degrative chemical oxidations are also strongly inhibited.
For example:

1. Color:

Bright red color: oxymyoglobin
Brown color: metmyoglobin
Greening of tuna (only when cooked):
TMAO trimethylamine oxide + heat-denatured metmyoglobin

$$\text{Oxymyoglobin} \xrightarrow{\text{oxidation}} \text{metmyoglobin}$$

It has been found that noble gases effect oxidation in the order Xe>Kr>Ar>Ne>He in having a positive and unique utility in preventing oxidation even in the presence of oxygen.
It has been found that color can be maintained well beyond the point where
the product becomes microbiologically unexceptable.

2. Degrative chemical oxidation:

Phospholipase (hydrolase)
in fish muscle (much of the study of fish muscle lipolysis has been with lean fish in which the primary lipid constituent is phopholipid).

Lipolysis occurs extensively in fish muscle post-mortem and is associated with quality deterioration in the frozen tissue. Major cause of quality deterioration.

Lipases EC 3.1.1.3

in fish muscle.

metmyoglobin reductase

succinic dehydrogenase

metmyoglobin reductase

Lipoxygenase EC 1.13.11.12

in fish tissues. Fish tissues, which are rich in n-3 polyunsaturated fatty acids, are very susceptible to lipid oxidation.

Proteinases

Cathepsin D EC 3.4.23.5

Neutral proteinase

Cathepsin B EC 3.4.22.1

Alkaline proteinase

in fish skeletal muscle. Involved in the breakdown of tissue proteins. Affect quality. Implicated in the textural degradation of minced fish meat.

Glycolysis Pathway System Production of energy, accumulation of lactic acid. The source of most post-mortem energy under anaerobic conditions is glygogen breakdown through glycolysis.

Note: See Effect of Gases on Enzymes above for quantification of the inhibitory effect of noble gases on enzymes.

H. Summary:

Generally, mixtures of Ar and Dr or Xe in relative amounts of about 50-95 volume % Ar and about 5-50 volume % Kr work quite well.

However, some $CO_2$ may also be present provided that it does not mask the effects of the binary mixture.

6. Product: Green Beans, Refrigerated

A. List of Microorganisms:

Spoilage microorganisms

Corynebacterium flacuumfaciens
[bacterial wilt]
Corynebacterium michiganese
[bacterial canker]
Erwinia carotovora
[bacterial soft rot]
Pseudomonads similar to Pseudomonas marginalis
[bacterial soft rot]
Pseudomonas phaseolicola
[halo blight]
Xanthomonas phaseoli
[common blight]
Botrytis cinerea
[gray mold rot]
Colletotrichum coccodes
[anthracnose (spotting)]
Geotrichum candidum
[sour rot (watery soft rot)]
Rhizopus stolonifer
[Rhizopus soft rot]

B. List of Enzymes:

Endogenous enzymes:

ACC synthase
prime factor controlling the rate of ethylene biosynthesis
Lipoxygenase EC 1.13.11.12
activity can increase ethylene production
Chlorophyllase EC 3.1.1.14
Peroxidase
cellulase complex:

- EC 3.2.1.4
- EC 3.2.1.21

degradation of cellulose

<u>Microorganism enzymes:</u>

Laccase EC 1.10.3.2 (Botrytis cinerea)
Endopolygalacturonase EC 3.2.1.15 (extracellular, Rhizopus stolonifer)

C. List of Chemical Reactions of Importance:
D. Quality Parameters of Importance:

- Ascorbic acid retention
- Chlorophyll retention

E. Table I. Effect of Gases on Microbes:
1. Microassays:

a. Erwinia carotovora (ATCC 15713)

| 95% GAS MIXES IN AIR | |
|---|---|
| 95% $CO_2$ | 100% |
| 95% $N_2$ | 0% |
| 95% Ar | 2% |
| 3 best gas mixes: | |
| 95% Ar:Ne 95:5 | 24% |
| 95% Ar:Kr 99:1 | 20% |
| 95% Ar:Ne 99:1 | 18% |
| 90% GAS MIXES IN AIR | |
| 90% $CO_2$ | 100% |
| 90% $N_2$ | 0% |
| 90% Ar | 2% |
| 3 best gas mixes: | |
| 90% Ar:Xe 99:1 | 21% |
| 90% Ar:Kr 99:1 | 20% |
| 90% Ar:Ne 99:1 | 16% |
| 50% GAS MIXES IN AIR | |
| 50% $CO_2$ | 100% |
| 50% $N_2$ | 0% |
| 50% Ar | 0% |
| Other best gas mixes: | |
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

Table 1b

| Effect of Gases on Total Microorganisms from Product Trials. Aerobes: | | |
|---|---|---|
| Gas/Gas Mix: | % | % Inhibition Compared to 100% Air : |
| 1. CO2 | 100 | 26% |
| 2. Ar | 100 | 11% |
| 3. [Ar:Kr]:$CO_2$ | [9:1]:9 | 32% |
| Anaerobes: | | |
| Gas/Gas Mix: | % | % Inhibition Compared to 100% $CO_2$ |
| 1. Air | 100 | 66% |
| 2. Ar | 100 | 61% |
| 3. [Ar:Kr]$O_2$ | [9:1]:9 | 31% |
| Yeasts: | | |
| Gas/Gas Mix: | % | % Inhibition Compared to 100% Air |
| 1. $CO_2$ | 100 | 55% |
| 2. Ar | 100 | 20% |
| 3. Ar:$CO_2$ | 9:1 | 41% |
| 4. Ar:Kr | 9:1 | 20% |
| Molds: | | |
| Gas/Gas Mix: | % | % Inhibition Compared to 100% Air |
| 1. $CO_2$ | 100 | 2% |
| 2. Ar | 100 | 25% |
| 3. Ar:Kr | 9:1 | 31% |

F. Table II. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

G. Effect of Gases on Chemical Reactions:

For green beans, oxidation of color components is inhibited and degrative chemical oxidations are also strongly inhibited.
For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.
Ascorbic acid degradation: maintaining a minimum of 1 to 4% $O_2$ generally slows ascorbic acid degradation by preventing oxidation. It has been found that noble gases effect oxidation in the order Xe>Kr>Ar>Ne?He in having a positive and unique utility in preventing oxidation even in the presence of oxygen.
Elevated $CO_2$ levels accelerate ascorbic acid degradation.
It has been found that color can be maintained
well beyond the point where the product becomes microbiologically unexceptable.
2. Degradative chemical oxidations:

Lipoxygenase EC 1.13.11.12
activity can increase ethylene production
Chlorophyllase EC 3.1.1.14
Peroxidase
cellulase complex:

- EC 3.2.1.4

- EC 3.2.1.21

degradation of cellulose
Note: See Effect of Gases on Enzymes above for quantification of the inhibitory effect of noble gases on enzymes.

H. Summary:

Generally, mixtures of Ar:Kr or Xe in relative amounts of about 80-95:5-20 volume % is preferable. More preferably, relative amounts of about 85-95:5-15 volume % is used. It is still more preferable to use a mixture of Ar;Kr or Xe of about 9:1 relative in volume %.

However, it each of the above mixtures, generally about 1-15 volume % of $O_2$, preferably about 2-10 volume % of $O_2$ is included.

7. Product: Green Beans, Room Temperature

A. List of Microorganisms:

Spoilage microorganisms

Corynebacterium flacuumfaciens
[bacterial wilt]
Corynebacterium michiganese
[bacterial canker]
Erwinia carotovora
[bacterial soft rot]
Pseudomonads similar to Pseudomonas marginalis
[bacterial soft rot]
Pseudomonas phaseolicola
[halo blight]
Xanthomonas phaseoli
[common blight]
Botrytis cinerea
[gray mold rot]
Colletotrichum coccodes
[anthracnose (spotting)]
Geotrichum candidum
[sour rot (watery soft rot)]
Rhizopus stolonifer
[Rhizopus soft rot]

B. List of Enzymes:

Endogenous enzymes:

ACC synthase
prime factor controlling the rate of ethylene biosynthesis
Lipoxygenase EC 1.13.11.12
activity can increase ethylene production
Chlorophyllase EC 3.1.1.14
Peroxidase
cellulase complex:

- EC 3.2.1.4
- EC 3.2.1.21

degradation of cellulose

Microorganism enzymes:

Laccase EC 1.10.3.2 (Botrytis cinerea)

Endopolygalacturonase EC 3.2.1.15 (extracellular, Rhizopus stolonifer)

C. List of Chemical Reactions of Importance:

D. Quality Parameters of Importance:

- Ascorbic acid retention
- Chlorophyll retention

E. Table I. Effect of Gases on Microbes:

1. Microassays:

a. Erwinia carotovora (ATCC 15713)

| 95% GAS MIXES IN AIR | |
|---|---|
| 95% $CO_2$ | 100% |
| 95% $N_2$ | 0% |
| 95% Ar | 2% |
| 3 best gas mixes: | |
| 95% Ar:Ne 95:5 | 24% |
| 95% Ar:Kr 99:1 | 20% |
| 95% Ar:Ne 99:1 | 18% |
| 90% GAS MIXES IN AIR | |
| 90% $CO_2$ | 100% |
| 90% $N_2$ | 0% |
| 90% Ar | 2% |
| 3 best gas mixes: | |
| 90% Ar:Xe 99:1 | 21% |
| 90% Ar:Kr 99:1 | 20% |
| 90% Ar:Ne 99:1 | 16% |
| 50% GAS MIXES IN AIR | |
| 50% $CO_2$ | 100% |
| 50% $N_2$ | 0% |
| 50% Ar | 0% |
| Other best gas mixes: | |
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

Table 1b

| Effect of Gases on Total Microorganisms from Product Trials. | | |
|---|---|---|
| Aerobes: | | |
| Gas/Gas Mix: | % | % Inhibition Compared to 100% Air |
| 1. $CO_2$ | 100 | 10% |
| 2. Ar | 100 | 2% |
| 3. Ar:Ne | 9:1 | 2% |
| Yeasts: | | |
| Gas/Gas Mix: | % | % Inhibition Compared to 100% Air |
| 1. $CO_2$ | 100 | 19% |
| 2. Ar | 100 | 10% |
| 3. (Ar:Ne):$O_2$ | (9:1):9 | 10% |
| 4. (Ar:Ke):$CO_2$ | (9:1):9 | 9% |
| Molds: | | |
| Gas/Gas Mix: | % | % Inhibition Compared to 100% Air |
| 1. $CO_2$ | 100 | 3% |
| 2. Ar | 100 | 15% |
| 3. (Ar:Ne):$CO_2$ | [9:1]:9 | 9% |
| 4. Ar:$O_2$ | 9:1 | 1% |

F. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
| --- | --- |
| Xe | -91.6% (inhibition) |
| Kr | -92.7% |
| Ar | -85.8% |
| Ne | -61.7% |

Class III. Hydrolases (EC3)

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

G. Effect of Gases on Chemical Reactions:

For green beans, oxidation of color components is inhibited and degrative chemical oxidations are also strongly inhibited.
For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.
Ascorbic acid degradation: maintaining a minimum of 1 to 4% oxygen generally slows ascorbic acid degradation by preventing oxidation. It has been found that noble gases effect oxidation in the order Xe>Kr>Ar>Ne>He in having a positive and unique utility in preventing oxidation even in the presence of oxygen.
Elevated carbon dioxide levels accelerate ascorbic acid degradation.
It has been found that color can be maintained well beyond the point where the product becomes microbiologically unexceptable.
2. Degradative chemical oxidations:

Lipoxygenase EC 1.13.11.12
activity can increase ethylene production
Chlorophyllase EC 3.1.1.14
Peroxidase
cellulase complex:

- EC 3.2.1.4
- EC 3.2.1.21

degradation of cellulose
Note: See Effect of Gases on Enzymes above for quantification of the inhibitory effect of noble gases on enzymes.

H. Summary:
Generally, the most effective mixtures are those as described in the previous section for green beans, including gases, gas mixtures and relative amounts of each.

8. Product: Ground Beef

A. List of Microorganisms:

MEATS:

Spoilage microorganisms

Achromobacter
Flavobacterium
Micrococcus
Bacillus
Proteus
Moraxella
Acineobacter
Enterobacetiaceae
Candida
Lactobacilli dominate
Clostridium perfringens
Pseudomonas fragi (Pork)
Staphylococcus aureus
Aeromonas hydrophila
Yersinia enterocolitica
Escherichia coil
Listeria monocytogenes

PROCESSED MEATS:

Spoilage microorganisms

Lactobacillus
Streptococcus
Aspergillus
Penicillium

CURED MEATS:

Spoilage microorganisms

Aspergillus
Penicillium

VACUUM-PACKAGED MEATS:

Spoilage microorganisms

Lactobacillus

B. List of Enzymes:

Microorganism enzymes:

Lipase EC 3.1.1.3 (Candida paralipolytica)
Lipase EC 3.1.1.3 (Pseudomonas spp.)
Lipase EC 3.1.1.3 (Aspergillus niger)
Glucoamylase EC 3.2.1.3 (extracellular, Aspergillus niger)
$\alpha$-Galactosidase EC 3.2.1.22 (A. oryzae/extracellular)
Proteolytic enzymes (extracellular)
Considerable proteolysis evident after 20 days. Maximum bacterial count reached on day 6. Growth and spoilage by Ps. fragi occurs on the surface, and only at late stages do the effects of spoilage penetrate the entire meat sample.
protease (CAF; calcium activated factor)

Cathepsins (Lysosomal enzymes)

C. List of Chemical Reactions of Importance:

$$Myoglobin \xrightarrow{\text{autoxidation}} metmyoglobin$$

D. Table I. Effect of Gases on Microbes:
1. Microassays

    a. Acinetobacter calcoaceticus (ATCC 23055)

| 95% GAS MIXES IN AIR | |
|---|---|
| 95% $CO_2$ | 100% |
| 95% $N_2$ | 88% |
| 95% Ar | 93% |
| 3 best gas mixes: | |
| 95% Xe | 94% |
| 95% Ar:Kr 50:50 | 100% |
| 95% Ar:Xe 99:1 | 93% |
| 90% GAS MIXES IN AIR | |
| 90% $CO_2$ | 100% |
| 90% $N_2$ | 84% |
| 90% Ar | 93% |
| Other best gas mixes: | |
| 90% Ar:Ne 50:50 | 90% |
| 50% GAS MIXES IN AIR | |
| 50% $CO_2$ | 90% |
| 50% $N_2$ | 80% |
| 50% Ar | 88% |
| Other best gas mixes: | |
| 50% Ar:Xe 50:50 | 90% |
| 50% Ar:Xe 95:5 | 90% |

    b. Aspergillus niger (ATCC 16888)

| 95% GAS MIXES IN AIR | |
|---|---|
| 95% $CO_2$ | 100% |
| 95% $N_2$ | 64% |
| 95% Ar | 64% |
| 3 best gas mixes: | |
| 95% Xe | 94% |
| 95% Ar:Kr 99.9:0.1 | 76% |
| 95% Ar:Ne 99.9:0.1 | 76% |
| 90% GAS MIXES IN AIR | |
| 90% $CO_2$ | 100% |
| 90% $N_2$ | 52% |
| 90% Ar | 64% |
| 3 best gas mixes: | |
| 90% Xe | 94% |
| 90% Ar:Kr 95:5 | 81% |
| 90% Ar:Xe/Kr 99.9:0.1 | 70% |
| 50% GAS MIXES IN AIR | |
| 50% $CO_2$ | 100% |
| 50% $N_2$ | 42% |
| 50% Ar | 49% |
| 3 best gas mixes: | |
| 50% Ar:Xe/Kr 99.9:0.1 | 52% |
| 50% Ar:Kr 95:5 | 52% |
| 50% Ar:Ne 99:1 | 52% |

c. Penicillium italicum (ATCC 48114)

| 95% GAS MIXES IN AIR | |
|---|---|
| 95% $CO_2$ | 100% |
| 95% $N_2$ | 74% |
| 95% Ar | 80% |
| 3 best gas mixes: | |
| 95% Ar:Ne 99.9:0.1 | 89% |
| most other noble gas mixtures | 84% |
| 90% GAS MIXES IN AIR | |
| 90% $CO_2$ | 100% |
| 90% $N_2$ | 70% |
| 90% Ar | 78% |
| 3 best gas mixes: | |
| 90% Xe/Kr | 83% |
| 90% Ar:Xe 99:1 | 83% |
| 90% Ar:Kr 99.9:0.1 | 83% |
| 50% GAS MIXES IN AIR | |
| 50% $CO_2$ | 92% |
| 50% $N_2$ | 50% |
| 50% Ar | 55% |
| 3 best gas mixes: | |
| 50% Ar:Kr 99.9:0.1 | 59% |
| 50% Ar:Xe/Kr 95:5 | 59% |
| Kr and Ar+Xe mixes | 50% |

d. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

e. Serratia liquefaciens (ATCC 35551)

| 95% GAS MIXES IN AIR | |
|---|---|
| 95% $CO_2$ | 47% |
| 95% $N_2$ | 0% |
| 95% Ar | 0% |
| 3 best gas mixes: | |
| 95% Ar:Xe 99:1 | 15% |
| 95% Ar:Xe 99:5 | 18% |
| 90% GAS MIXES IN AIR | |
| 90% $CO_2$ | 2% |
| 90% $N_2$ | 0% |
| 90% Ar | 0% |
| Other best gas mixes | |
| 90% Xo | 14% |
| 50% GAS MIXES IN AIR | |
| 50% $CO_2$ | 0% |
| 50% $N_2$ | 0% |
| 50% Ar | 0% |

f. Escherichia coli (ATCC 9637)

| 95% GAS MIXES IN AIR | |
|---|---|
| 95% $CO_2$ | 100% |
| 95% $N_2$ | 62% |
| 95% Ar | 78% |
| 3 best gas mixes: | |
| 95% Ar:Ne 95:5 | 78% |
| 95% Xe | 82% |
| 95% Ar:Kr 95:5 | 78% |
| 90% GAS MIXES IN AIR | |
| 90% $CO_2$ | 100% |
| 90% $N_2$ | 51% |
| 90% Ar | 65% |
| 3 best gas mixes: | |
| 90% Kr | 78% |
| 90% Xe | 78% |
| 90% Ar:Xe 99:1 | 67% |
| 50% GAS MIXES IN AIR | |
| 50% $CO_2$ | 100% |
| 50% $N_2$ | 12% |
| 50% Ar | 15% |
| Other best gas mixes: | |
| 50% Ar:Kr 99:1 | 16% |
| 50% Ar:Xe/Kr 95:5 | 17% |

g. Listeria monocytogenes (ATCC 984)
Best inhibitory gases:

| 50% Ar:Ne 99.9:0.1 | 13% |
|---|---|
| 50% Ar:Ne 99:1 | 8% |
| 50% Ar:Ne | 8% |

h. Staphylococcus aureus (ATCC 25923)

| 95% GAS MIXES IN AIR | |
|---|---|
| 95% $CO_2$ | 100% |
| 95% $N_2$ | 55% |
| 95% Ar | 61% |
| 3 best gas mixes: | |
| 95% Xe | 61% |
| 95% Kr | 61% |
| 95% Ar:Xe/Kr 99:1 | 61% |

i. Yersinia enterocolitica (ATCC 23715)
Best inhibitory gases:

| 50% Ar:Xe/Kr 99.9:0.1 | 16% |
|---|---|
| 50% Ar:Ne 99:1 | 13% |
| 90% Ar:Xe/Kr 95:5 | 10% |
| 90% Ar | 8% |
| 95% Ar:Kr 95:5 | 4% |

All nitrogen mixes show no inhibition.

Table 1b

| Effect of Gases on Total Microorganisms from Product Trials. Aerobes: | | |
| --- | --- | --- |
| Gas/Gas Mix: | % | % Inhibition Compared to 100% Air |
| 1. $CO_2$ | 100 | 9% |
| 2. Ar | 100 | 0.4% |
| 3. $Ar:O_2$ | 9:1 | 0.1% |
| Anaerobes: | | |
| Gas/Gas Mix: | % | % Inhibition Compared to 100% $CO_2$ |
| 1. Ar | 100 | 16% |
| 2. Ar:Ne | 9:1 | 7% |
| Yeasts: | | |
| Gas/Gas Mix: | % | % Inhibition Compared to 100% Air |
| 1. $Co_2$ | 100 | 4% |
| 2. Ar | 100 | 28% |
| 3. $Ar:O_2$ | 9:1 | 20% |
| Molds: | | |
| Gas/Gas Mix: | % | % Inhibition Compared to 100% Air |
| 1. $Co_2$ | 100 | 2% |
| 2. Ar | 100 | 4% |
| 3. $Ar:CO_2$ | 9:1 | 10% |
| 4. Ar:Kr | 9:1 | 7% |
| 5. [Ar:Ne]:$CO_2$ | [9:1]:9 | 8% |

F. Effect of Gases on Enzymes:

Class III. Hydrolases (EC3)
90:10 Xe:Kr mix +18%

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

G. Summary:
Generally, Ar may be used to advantage alone or with $O_2$ up to about 20% or about 10-20% $CO_2$ or about 10-20% $N_2O$ 10-20% combined in volume % of $CO_2$ and $N_2O$.

9. Product: Lettuce

A. List of Microorganisms:

Spoilage microorganisms

Erwinia carotovora
(bacterial soft rot)
Pseudomonads similar to Pseudomonas marginalis
(bacterial soft rot)
Pseudomonas marginalis (Brown) Stevens
(side slime)
Pseudomonas cichorii
(bacterial zonate spot)
Botrytis cinerea
(gray mold rot)
B. cinerea Pers. ex Fr.
Geotrichum candidum
(sour rot (watery soft rot))

B. List of Enzymes:

Endogenous enzymes:

ACC synthase
prime factor controlling the rate of ethylene biosynthesis
Lipoxygenase EC 1.13.11.12
activity can increase ethylene production
Chlorophyllase EC 3.1.1.14
Peroxidase
cellulase complex:

- EC 3.2.1.4
- EC 3.2.1.21

degradation of cellulose

Microorganism enzymes:

Laccase EC 1.10.3.2 (Botrytis cinerea)

C. List of Chemical Reactions of Importance:
D. Quality Parameters of Importance:

- Texture
- Appearance

Ascorbic degradation is associated with wilting in green leafy vegetables.
Carotene is a precursor to vitamin A. Carotenes are subject to oxidation and to degradation associated with wilting of leafy vegetables.
Yellowing of leafy vegetables (lettuce) during senescence: loss of chlorophyll.
E. Table I. Effect of Gases on Microbes:
1. Microassays:

a. Erwinia carotovora (ATCC 15713)

| 95% GAS MIXES IN AIR | |
|---|---|
| 95% $CO_2$ | 100% |
| 95% $N_2$ | 0% |
| 95% Ar | 2% |
| 3 best gas mixes: | |
| 95% Ar:Ne 95:5 | 24% |
| 95% Ar:Kr 99:1 | 20% |
| 95% Ar:Ne 99:1 | 18% |
| 90% GAS MIXES IN AIR | |
| 90% $CO_2$ | 100% |
| 90% $N_2$ | 0% |
| 90% Ar | 2% |
| 3 best gas mixes: | |
| 90% Ar:Xe 99:1 | 21% |
| 90% Ar:Kr 99:1 | 20% |
| 90% Ar:Ne 99:1 | 16% |
| 50% GAS MIXES IN AIR | |
| 50% $CO_2$ | 100% |
| 50% $N_2$ | 0% |
| 50% Ar | 0% |
| Other best gas mixes: | |
| 50% Kr | 12% |

b. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

Table 1b

| Effect of Gases on Total Microorganisms from Product Trials. Aerobes: | | |
|---|---|---|
| Gas/Gas Mix: | % | % Inhibition Compared to 100% Air |
| 1. $CO_2$ | 100 | 9% |
| 2. Ar | 100 | 0.4% |
| 3. $Ar:O_2$ | 9:1 | 0.1% |
| Anaerobes: | | |
| Gas/Gas Mix: | % | % Inhibition Compared to 100% Air |
| 1. Ar | 100 | 16% |
| 2. Ar:Ne | 9:1 | 7% |
| Yeasts: | | |
| Gas/Gas Mix: | % | % Inhibition Compared to 100% Air |
| 1. $Co_2$ | 100 | 4% |
| 2. Ar | 100 | 28% |
| 3. $Ar:O_2$ | 9:1 | 20% |
| Molds: | | |
| Gas/Gas Mix: | % | % Inhibition Compared to 100% Air |
| 1. $Co_2$ | 100 | 2% |
| 2. Ar | 100 | 4% |
| 3. $Ar:CO_2$ | 9:1 | 10% |
| 4. Ar:Kr | 9:1 | 7% |
| 5. $[Ar:Ne]:CO_2$ | [9:1]:9 | 8% |

F. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

Class IV. Lyases(EC4)

Citrate synthase EC 4.1.3.7
Showed maximum inhibition of -27% at 25°C when measured as a coupled reaction with all gases.

G. Effect of Gases on Chemical Reactions:

For lettuce, oxidation of color components is inhibited and degrative chemical oxidations are also strongly inhibited.
For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.
Ascorbic acid degradation:
maintaining a minimum of 1 to 4% $O_2$ generally slows ascorbic acid degradation by preventing oxidation. It has been found that noble gases effect oxidation in the order Xe>Kr>Ar>Ne>He in having a positive and unique utility in preventing oxidation even in the presence of oxygen.
Elevated $CO_2$ levels accelerate ascorbic acid degradation.
The carotenoids that are most important in imparting color to fruits are derivatives of $\alpha$- and $\beta$-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.
Carotenoids are extremely susceptible to nonenzymatic oxidation in dehydrated fruits and vegetables (water acts as a barrier to oxygen diffusion).

It has been found that color can be maintained well beyond the point where the product becomes microbiologically unexceptable.

2. Degrative chemical oxidations:

ACC synthase
prime factor controlling the rate of ethylene biosynthesis
Lipoxygenase EC 1.13.11.12
activity can increase ethylene production
Chlorophyllase EC 3.1.1.14
converts chlorophylls to water-soluble chlorophyllides. Acidic conditions can make the chlorophylls into pheophytins. the pheophytins are brown in color and are normally undesirable in most foods. The loss of green color in green vegetables is an important problem in certain thermal processing operations.
Peroxidase
cellulase complex:

- EC 3.2.1.4
- EC 3.2.1.21

degradation of cellulose
Note: See Effect of Gases on Enzymes above for quantification of the inhibitory effect of noble gases on enzymes.

H. Summary:

Generally, a mixture of Ar:Ne of about 80-95:5-20 volume % is preferable, with the mixture of about 90-95:5-10 volume % being more preferable. Most preferable of all is a mixture of about Ar:Ne/95:5.

Additionally, $O_2$ and $CO_2$ may be used in amounts of up to about 5 volume %.

10. Product: Mixed Salad (Chef Salad)

- Lettuce (see above)
- Tomatoes (see above)
- Carrots (see above)
- Cucumbers
- Radishes
- Cheese, Chedder
- Meat; Ham, Turkey (see above)
- Eggs, Boiled
- Red Cabbage

A. List of Microorganisms:

1. Cucumbers

Spoilage microorganisms

Erwinia carotovora
(bacterial soft rot)
Pseudomonads similar to Pseudomonas marginalis
(bacterial soft rot)
Pseudomonas lachrymans
(angular leaf spot)
Botrytis cinerea
(gray mold rot)
Colletotrichum coccodes
(anthracnose (spotting))
Rhizopus stolonifer
(Rhizopus soft rot)

2. Radishes

Spoilage microorganisms

Erwinia carotovora
(bacterial soft rot)
Pseudomonads similar to Pseudomonas marginalis
(bacterial soft rot)
Botrytis cinerea
(gray mold rot)
Geotrichum candidum
(sour rot (watery soft rot))
Rhizopus stolonifer
(Rhizopus soft rot)

3. Cheese, Chedder
4. Eggs, Boiled
5. Cabbage, Red

Spoilage microorganisms

Listeria monocytogenes

6. Lettuce, tomatoes, and carrots: see above

B. List of Enzymes:

1. Cucumbers

Endogenous enzymes

Polygalacturonase EC 3.2.1.15

• Exopoloygalacturonases EC 3.2.1.67

De-esterification of cell wall galacturonans followed by polygalacturonase action.
Pectinesterase
Involoves in the preparation of the substate for polygalacturonases
Peroxidase (POD) EC 1.11.1.7
Stale, off-flavors.
Catalase EC 1.11.1.6
Adverse flavors.
Lipoxygenase EC 1.13.11.12
Activity required for the production of aldehydes typical of fresh cucumber flavor.
ACC synthase
prime factor controlling the rate of ethylene biosynthesis
Lipoxygenase EC 1.13.11.12
activity can increase ethylene production
cellulase complex:

• EC 3.2.1.4
• EC 3.2.1.21

degradation of cellulose

2. Radishes

Endogenous enzymes

ACC synthase
prime factor controlling the rate of ethylene biosynthesis
Lipoxygenase EC 1.13.11.12
activity can increase ethylene production
cellulase complex:

- EC 3.2.1.4
- EC 3.2.1.21

degradation of cellulose

3. Cheese, Chedder
4. Eggs, Boiled
5. Cabbage, Red

Endogenous enzymes

ACC synthase
prime factor controlling the rate of ethylene biosynthesis
Lipoxygenase EC 1.13.11.12
activity can increase ethylene production
cellulase complex:

- EC 3.2.1.4
- EC 3.2.1.21

degradation of cellulose

Microorganism enzymes:

Laccase EC 1.10.3.2 (Botrytis cinerea, cucumbers and radishes)
Endopolygalacturonase EC 3.2.1.15 (extracellular, Rhizopus stolonifer, cucumbers and radishes)

6. Lettuce, tomatoes, and carrots: see above

C. List of Chemical Reactions of Importance:
D. Quality Parameters of Importance:

Leafy vegetables: Lettuce and Red Cabage

- Texture
- Appearance

Ascorbic degradation is associated with wilting in green leafy vegetables.
Carotene is a precursor to vitamin A. Carotenes are subject to oxidation and to degradation associated with wilting of leafy vegetables.
intermediate respiration rates
Carrots
Ethylene induced formation of bitter isocoumarins in carrots.
Cucumbers
chilling injury

E. Table I. Effect of Gases on Microbes:
1. Microassays:

a. Erwinia carotovora (ATCC 15713)

70

| 95% GAS MIXES IN AIR | |
|---|---|
| 95% $CO_2$ | 100% |
| 95% $N_2$ | 0 |
| 95% Ar | 2 |
| 3 best gas mixes: | |
| 95% Ar:Ne 95:5 | 24% |
| 95% Ar:Kr 99:1 | 20% |
| 95% Ar:Ne 99:1 | 18% |
| 90% GAS MIXES IN AIR | |
| 90% $CO_2$ | 100% |
| 90% $N_2$ | 0 |
| 90% Ar | 2 |
| 3 best gas mixes: | |
| 90% Ar:Xe 99:1 | 21% |
| 90% Ar:Kr 99:1 | 20% |
| 90% Ar:Ne 99:1 | 16% |
| 50% GAS MIXES IN AIR | |
| 50% $CO_2$ | 100% |
| 50% $N_2$ | 0% |
| 50% Ar | 0% |
| Other best gas mixes: | |
| 50% Kr | 12% |

b. Pseudomonas marginalis (ATCC 10844)

| 95% GAS MIXES IN AIR | |
|---|---|
| 95% CO$_2$ | 100% |
| 95% N$_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% CO$_2$ | 100% |
| 90% N$_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% CO$_2$ | 100% |
| 50% N$_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

c. Listeria monocytogenes (ATCC 984)
Best inhibitory gases:

| 50% Ar:Ne 99.9:0.1 | 13% |
|---|---|
| 50% Ar:Ne 99:1 | 8% |
| 50% Ar:Ne | 8% |

Table 1b

| Effect of Gases on Total Microorganisms from Product Trials. | | |
|---|---|---|
| Aerobes: | | |
| Gas/Gas Mix: | % | % Inhibition Compared to 100% Air |
| 1. $CO_2$ | 100 | 2% |
| 2. Ar | 100 | 12% |
| 3. [Ar:Ne]:$CO_2$ | [9:1]:9 | 13% |
| Anaerobes: | | |
| Gas/Gas Mix: | % | % Inhibition Compared to 100% $CO_2$ |
| 1. Ar | 100 | 6% |
| 2. Ar | 100 | 1% |
| 3. Ar:$O_2$ | 9:1 | 5% |
| 4. Ar:Ne | 9:1 | 2% |
| Yeasts: | | |
| Gas/Gas Mix: | % | % Inhibition Compared to 100% Air |
| 1. $Co_2$ | 100 | 63% |
| 2. Ar | 100 | 47% |
| 3. Ar:Kr | 9:1 | 56% |
| 4. [Ar:Ne]:$CO_2$ | [9:1]:9 | 51% |
| Molds: | | |
| Gas/Gas Mix: | % | % Inhibition Compared to 100% Air |
| 1. $Co_2$ | 100 | 4% |
| 2. Ar | 100 | 2% |

F. Effect of Gases on Enzymes:

Class I. Oxidoreductase (EC 1)

Tyrosinase EC 1.14.18.1

- at 25° and optimal reaction conditions, simple saturation of solution with gas:

EP 0 815 745 A1

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

Class IV. Lyases(EC4)

Citrate synthase EC 4.1.3.7
Showed maximum inhibition of -27% at 25°C when measured as a coupled reaction with all gases.

G. Effect of Gases on Chemical Reactions:

For mixed salads (chef salads), oxidation of color components is inhibited and degrative chemical oxidations are also strongly inhibited.
For example:

- Lettuce (see above)
- Tomatoes (see above)
- Carrots (see above)
- Cucumbers

For cucumbers, oxidation of color components is inhibited and degrative chemical oxidations are also strongly inhibited.
For example:

1. Color: The oxidation of chlorophyll is the primary color change. As the chlorophyll is broken down, the carotenoids are exposed, giving rise to a yellowing of the products. It has been found that noble gases effect oxidation in the order Xe>Kr>Ar>Ne>He in having a positive and unique utility in preventing oxidation even in the presence of oxygen.
Ascorbic acid degradation:
maintaining a minimum of 1 to 4% $O_2$ generally slows ascorbic acid degradation by preventing

74

oxidation. It has been found that noble gases effect oxidation in the order Xe>Kr>Ar>Ne>He in having a positive and unique utility in preventing oxidation even in the presence of oxygen. Elevated $CO_2$ levels accelerate ascorbic acid degradation.

It has been found that color can bemaintained well beyond the point where the product becomes microbiologically unexceptable.

2. Degrative chemical oxidations:

Polygalacturonase EC 3.2.1.15

- Exopoloygalacturonases EC 3.2.1.67
  De-esterification of cell wall galacturonans followed by polygalacturonase action.

Pectinesterase
Involoves in the preparation of the substate for polygalacturonases
Peroxidase (POD) EC 1.11.1.7
Stale, off-flavors.
Catalase EC 1.11.1.6
Adverse flavors.
Lipoxygenase EC 1.13.11.12
Activity required for the production of aldehydes typical of fresh cucumber flavor.
ACC synthase
prime factor controlling the rate of ethylene biosynthesis
cellulase complex:

- EC 3.2.1.4
- EC 3.2.1.21

degradation of cellulose
Note: See Effect of Gases on Enzymes above for quantification of the inhibitory effect of noble gases on enzymes.

- Radishes

For radishes, oxidation of color components is inhibited and degrative chemical oxidations are also strongly inhibited.
For example:

1. Color: The primary color changes are the oxidation of anthocyanins from purplish-red to off-white and the oxidation of flavanoids from bright red to brown. It has been found that noble gases effect oxidation of both the anthocyanins and flavanoids in the order Xe>Kr>Ar>Ne>He in having a positive and unique utility in preventing oxidation even in the presence of oxygen.
It has been found that color can be maintained well beyond the point where the product becomes microbiologically unacceptable.
2. Degrative chemical oxidations:

ACC synthase
prime factor controlling the rate of ethylene biosynthesis
Lipoxygenase EC 1.13.11.12
activity can increase ethylene production
cellulase complex:

- EC 3.2.1.4
- EC 3.2.1.21

degradation of cellulose
Note: See Effect of Gases on Enzymes above for quantification of the inhibitory effect of noble gases on enzymes.

2. Degrative chemical oxidations:
Note: See Effect of Gases on Enzymes above for quantification of the inhibitory effect of noble gases on enzymes.

- Ham, Turkey (see above)
- Eggs, Boiled

1. Color: For hard boiled eggs, oxidation of color components is inhibited and degrative chemical oxidations are also strongly inhibited.
It has been found that color can be maintained well beyond the point where
the product becomes microbiologically unexceptable.
2. Degrative chemical oxidations:
Note: See Effect of Gases on Enzymes above for quantification of the inhibitory effect of noble gases on enzymes.

- Red Cabbage

For red cabbage, oxidation of color components is inhibited and degrative chemical oxidations are also strongly inhibited.
For example:

1. Color: The primary color changes are the oxidation of anthocyanins from purplish-red to off-white and the oxidation of flavanoids from bright red to brown. It has been found that noble gases effect oxidation of both the anthocyanins and flavanoids in the order Xe>Kr>Ar>Ne>He in having a positive and unique utility in preventing oxidation even in the presence of oxygen.
It has been found that color can be maintained well beyond the point where
the product becomes microbiologically unexceptable.
2. Degrative chemical oxidations:

ACC synthase
prime factor controlling the rate of ethylene biosynthesis
Lipoxygenase EC 1.13.11.12
activity can increase ethylene production
cellulase complex:

- EC 3.2.1.4
- EC 3.2.1.21

degradation of cellulose
Note: See Effect of Gases on Enzymes above for quantification of the inhibitory effect of noble gases on enzymes.

H. Summary:
Generally, mixtures of Ar:Kr:$O_2$ or Ar:Ne:$CO_2$ work well in relative amounts of about (8-9.5:2-0.5):5-10% each. More preferably, however, relative amounts of about (9:1):9% are used.

11. Product: Mushrooms

A. List of Microorganisms:

Clostridium botulinum

B. List of Enzymes:

Endogenous enzymes

Polyphenol oxidase (PPO) EC 1.14.18.1
ACC synthase

prime factor controlling the rate of ethylene biosynthesis
Lipoxygenase EC 1.13.11.12
activity can increase ethylene production
enzymatic browning reaction:

- Tyrosinase EC 1.14.18.1
  initiates browning reaction
- Catechol oxidase EC 1.10.3.2

Laccase EC 1.10.3.1

C. List of Chemical Reactions of Importance:

$$\text{phenolic compounds} \xrightarrow{\text{air}} \text{brown melanins}$$

D. Quality Parameters of Importance:

- Enzymatic browning:

  Tyrosinase
  Catechol oxidase

- Storage in 0% $O_2$ inhibits catechol oxidase activity and

  browning.

- Enzymatic Browning: Tyrosinase then Catechol oxidase

E. Table I. Effect of Gases on Microbes: As for other vegetables.
F. Effect of Gases on Enzymes:

Class I. Oxdoseductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|-----|--------|
| Xe | -91.6% (inhibition) |
| Kr | -92.7% |
| Ar | -85.8% |
| Ne | -61.7% |

G. Effect of Gases on Chemical Reactions:

For mushrooms, oxidation of color components is inhibited and degrative chemical oxidations are also strongly inhibited.
For example:

1. Color: the color changes in mushrooms is due to the oxidation of phenolic compounds to brown melanins. It has been found that noble gases effect oxidation in the order Xe>Kr>Ar>Ne>He in having a positive and unique utility in preventing oxidation even in the presence of oxygen.

$$\text{phenolic compounds} \xrightarrow{\text{air}} \text{brown melanins}$$

It has been found that color can be maintained
well beyond the point where the product becomes microbiologically unexceptable.
2. Degrative chemical oxidations:

Enzymatic browning:

Tyrosinase
Catechol oxidase

• Storage in 0% $O_2$ inhibits catechol oxidase
activity and browning.

Note: See Effect of Gases on Enzymes above for quantification of the inhibitory effect of noble gases on enzymes.

G. Table III. Effect of Gases on Chemical Reactions:
H. Summary:
Generally, fundamental improvements in color in mushrooms are observed with gas mixtures of about 3-97 volume % of Ar and about 17-3 volume % of any one of Ne, Kr, Xe or any combination thereof.
More preferably, however, it is desirable to use about 5-90 volume % of Ar and about 90-5 volume % of any one of Ne, Kr, Xe or any combination thereof.

12. Product: Pasta

A. List of Microorganisms:

Molds and yeasts.

B. List of Enzymes:

Generally not important.

C. List of Chemical Reactions of Importance:

Simple oxidations.

D. Quality Parameters of Importance:

Softness (moist)
Color retention

E. Table I. Effect of Gases on Microbes:

Yeasts and molds are effectively depressed by all the noble gases with respect to nitrogen or air. CO2 may be superior, but imparts color degradation and off-flavors to the pasta.

F. Table II. Effect of Gases on Enzymes:

No negative effect of noble gases.

G. Effect of Gases on Chemical Reactions:

Noble gases enhance moisture retention in the pasta.

H. Summary:

Generally, mixtures contining about 80-95 volume % of Ar and about 5-20 volume % of Xe or Kr may be used. It is preferred, however, to use about 85-93 volume % of Ar and about 7-15 volume % of Xe or Kr. It is more preferred still to use about 90 volume % of Ar and about 10 volume % of Xe or Kr.

It is also advantageous to use mixtures containing about 70-85 volume % Ar, 3-12 volume % of kr or Ne and about 10-20 volume % of $O_2$ with the total being 100 volume %. It is more preferred, however, to use a mixture containing about 75-80 volume % of Ar, 7-10 volume % of Kr or ne and about 13-17 volumen % of $O_2$.

It is most preferred, however, to use a mixture containing about 77 volume % Ar, 8 volume % of Kr or Ne and 15 volume % of $O_2$.

13. Product: Shrimp

A. List of Microorganisms:

Spoilage microorganisms

Acinetobacter
(predominant)
Aspergillus
(known to occur)
Candida
(most frequently found)
Clostridium botulinum
Cryptococcus
(known to occur)
Debaryomyces
(known to occur)
Hansenula
(known to occur)
Moraxella
(predominant)
Oospora
(known to occur)
Pichia
(known to occur)
Pullularia
(known to occur)
Pseudomonads
(predominant)
Penicillium

(known to occur)
Rhodotorula
(most frequently found)
Scopulariopsis
(known to occur)
Sporobolomyces
(known to occur)
Torula
(most frequently found)
Torulopsis
(known to occur)
Trichosporon
(known to occur)
Wallemia (Sporendonema)
(known to occur)
Yeast spp.
(predominant)

SHRIMP HELD AT 0°C:

Spoilage microorganisms

Pseudomonas spp.
(dominant spoilers (after 13 days), with only 2% of the spoilage flora being Gram+ in contrast to 38% for the fresh product)
Aeromonas spp.
Vibrio spp.

SHRIMP HELD AT 5.6 AND 11.1°C:

Spoilage microorganisms

Moraxella
(dominate spoilage)

SHRIMP HELD AT 16.7 AND 22.2°C:

Spoilage microorganisms

Proteus
(dominate spoilage)

B. List of Enzymes:

Endogenous enzymes

Phenoloxidase EC 1.10.3.1
in fresh white shrimps. Catalyzes the oxidation of 3,4-dihydroxyphenylalanine (phenolic substrate). The discoloration on shrimp commonly called melanosis or blackspot is not appealing to consumers and reduces its market value ($pH_{opt}$ 6.5-7.5, $T_{opt}$ = 45°C).
Alkaline proteinase (endopeptidase)
in shrimp muscle ($pH_{opt}$ 8.0, $T_{opt}$ = 60°C).
Exopeptidase
in shrimp muscle ($pH_{opt}$ 6.8, $T_{opt}$ = 40°C).
Enzymic dephosphorylation of inosine monophosphate (IMP)
via inosine to hypoxanthine (Hx) occurs within the period of edibility of shrimp muscle stored in ice. These changes are involved in the loss of desirable fresh flavors (IMP) and the development of bitter off-flavor. The dephosphorylation of IMP is predominantly autolytic. The accumulation of Hx results from both autolytic and bacterial enzymes.
Phenol oxidase

<u>Microorganism enxymes:</u>

Glucoamylase EC 3.2.1.3 (extracellular, Aspergillus niger)
$\alpha$-Galactosidase EC 3.2.1.22 (A.oryzae/extracellular, Aspergillus niger)
Lipase EC 3.1.1.3 (Candida paralipolytica)
Lipase EC 3.1.1.3 (Pseudomonas spp., Shrimp held at 0°C)
Lipase EC 3.1.1.3 (Aspergillus niger)

C. List of Chemical Reactions of Importance:
D. Quality Parameters of Importance:

- Melanosis or black spot

E. Table I. Effect of Gases on Microbes:
1. Microassays

a. Acinetobacter calcoaceticus (ATCC 23055)

| 95% GAS MIXES IN AIR | |
|---|---|
| 95% $CO_2$ | 100% |
| 95% $N_2$ | 88% |
| 95% Ar | 93% |
| 3 best gas mixes: | |
| 95% Xe | 94% |
| 95% Ar:Kr 50:50 | 100% |
| 95% Ar:Xe 99:1 | 93% |
| 90% GAS MIXES IN AIR | |
| 90% $CO_2$ | 100% |
| 90% $N_2$ | 84% |
| 90% Ar | 93% |
| Other best gas mixes: | |
| 90% Ar:Ne 50:50 | 90% |
| 50% GAS MIXES IN AIR | |
| 50% $CO_2$ | 90% |
| 50% $N_2$ | 80% |
| 50% Ar | 88% |
| Other best gas mixes: | |
| 50% Ar:Xe 50:50 | 90% |
| 50% Ar:Xe 95:5 | 90% |

b. Aspergillus niger (ATCC 16888)

| 95% GAS MIXES IN AIR | |
|---|---|
| 95% $CO_2$ | 100% |
| 95% $N_2$ | 64% |
| 95% Ar | 64% |
| 3 best gas mixes: | |
| 95% Xe | 94% |
| 95% Ar:Kr 99.9:0.1 | 76% |
| 95% Ar:Ne 99.9:0.1 | 76% |
| 90% GAS MIXES IN AIR | |
| 90% $CO_2$ | 100% |
| 90% $N_2$ | 52% |
| 90% Ar | 64% |
| 3 best gas mixes: | |
| 90% Xe | 94% |
| 90% Ar:Kr 95:5 | 81% |
| 90% Ar:Xe/Kr 99.9:0.1 | 70% |
| 50% GAS MIXES IN AIR | |
| 50% $CO_2$ | 100% |
| 50% $N_2$ | 42% |
| 50% Ar | 49% |
| 3 best gas mixes: | |
| 50% Ar:Xe/Kr 99.9:0.1 | 52% |
| 50% Ar:Kr 95:5 | 52% |
| 50% Ar:Ne 99:1 | 52% |

c. Penicillium italicum (ATCC 48114)

| 95% GAS MIXES IN AIR | |
|---|---|
| 95% $CO_2$ | 100% |
| 95% $N_2$ | 74% |
| 95% Ar | 80% |
| 3 best gas mixes: | |
| 95% Ar:Ne 99.9:0.1 | 89% |
| most other noble gas mixtures | 84% |
| 90% GAS MIXES IN AIR | |
| 90% $CO_2$ | 100% |
| 90% $N_2$ | 70% |
| 90% Ar | 78% |
| 3 best gas mixes: | |
| 90% Xe/Kr | 83% |
| 90% Ar:Xe 99:1 | 83% |
| 90% Ar:Kr 99.9:0.1 | 83% |
| 50% GAS MIXES IN AIR | |
| 50% $CO_2$ | 92% |
| 50% $N_2$ | 50% |
| 50% Ar | 55% |
| 3 best gas mixes: | |
| 50% Ar:Kr 99.9:0.1 | 59% |
| 50% Ar:Xe/Kr 95:5 | 59% |
| Kr and Ar+Xe mixes | 50% |

d. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| Other best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

Table 1b

| Effect of Gases on Total Microorganisms from Product Trials. Aerobes: | | |
|---|---|---|
| Gas/Gas Mix: | % | % Inhibition Compared to 100% Air |
| 1. $CO_2$ | 100 | 4% |
| 2. Ar | 100 | 1% |
| 3. Ar:Kr | 9:1 | 2% |
| Anaerobes: | | |
| Gas/Gas Mix: | % | % Inhibition Compared to 100% $CO_2$ |
| 1. Air | 100 | 6% |
| 2. Ar | 100 | 4% |
| 3. Ar:Kr | 9:1 | 9% |
| Yeasts: | | |
| Gas/Gas Mix: | % | % Inhibition Compared to 100% Air |
| 1. $Co_2$ | 100 | 8% |
| 2. Ar | 100 | 2% |
| 3. [Ar:Ne]:$CO_2$ | 9:1 | 1% |
| Molds: | | |
| Gas/Gas Mix: | % | % Inhibition Compared to 100% Air |
| 1. $Co_2$ | 100 | 2% |
| 2. Ar | 100 | 5% |

F. Table II. Effect of Gases on Enzymes:

Class I. Oxidoreductase (EC 1)

Tyrosinase EC 1.14.18.1

• at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|-----|--------|
| Xe | -91.6% (inhibition) |
| Kr | -92.7% |
| Ar | -85.8% |
| Ne | -61.7% |

G. Effect of Gases on Chemical Reactions:

For shrimp, oxidation of color components is inhibited and degrative chemical oxidations are also strongly inhibited.
For example:

1. Color: The carotenoids that are most important in imparting color are derivatives of $\alpha$- and $\beta$-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.
It has been found that color can be maintained
well beyond the point where the product becomes microbiologically unexceptable.
2. Degrative chemical oxidations:

Phenoloxidase EC 1.10.3.1
in fresh white shrimps. Catalyzes the oxidation of 3,4-dihydroxyphenylalanine (phenolic substrate). The discoloration on shrimp commonly called melanosis or blackspot is not appealing to consumers and reduces its market value ($pH_{opt}$ 6.5-7.5, $T_{opt} = 45°C$).
Alkaline proteinase (endopeptidase)
in shrimp muscle ($pH_{opt}$ 8.0, $T_{opt} = 60°C$).
Exopeptidase
in shrimp muscle ($pH_{opt}$ 6.8, $T_{opt} = 40°C$).
Enzymic dephosphorylation of inosine monophosphate (IMP)
via inosine to hypoxanthine (Hx) occurs within the period of edibility of shrimp muscle stored in ice. These changes are involved in the loss of desirable fresh flavors (IMP) and the development of bitter off-flavor. The dephosphorylation of IMP is predominantly autolytic. The accumulation of Hx results from both autolytic and bacterial enzymes.
Phenol oxidase
Note: See Effect of Gases on Enzymes above for quantification of the inhibitory effect of noble gases on enzymes.

H. Summary:
Therefore, for cleaned, colored shrimp or other seafood pure argon or a ;mixture of about 8-95:2-0.5 Ar:Kr, Xe or Ne works quite well. It is more preferred, however, if relative amounts of about 9:1 Ar:Kr, Xe or Ne is used.
Additionally, up to about 20% $CO_2$ may be used in the mixture.

14. Product: Smelt

A. List of Microorganisms:

I. FISH:

Spoilage microorganisms

Acinetobacter
Aeromonas

(known to occur)

Aeromonas hydrophila

Alcaligenes

(known to occur)

Alteromonas

(32-60% of the initial skin flora of 4 different fish)

Alteromonas putrefaciens

Aspergillus

(known to occur)

Chromobacterium

(known to occur)

Corynebacterium

(known to occur)

Cytophaga

(known to occur)

Enterobacter

(known to occur)

Escherichia

Flavobacterium

(known to occur)

Halobacterium

(known to occur)

Microbacterium

(known to occur)

Micrococcus

Moraxella

Penicillium

(known to occur)

Photobacterium

(known to occur)

Pseudomonas spp.

(32-60% of the initial skin flora of 4 different fish)

Pseudomonas marinoglutinosa

Pseudomonas aeruginosa

Streptococcus

(known to occur)

Oospora

(known to occur)

Scopulariopsis

(known to occur)

Vibrio

(known to occur)

Wallemia (Sporendonema)

(known to occur)

Candida

(most frequently found)

Cryptococcus

(known to occur)

Debaryomyces

(known to occur)

Hansenula

(known to occur)

Pichia

(known to occur)

Pullularia

(known to occur)

Rhodotorula

(most frequently found)

Sporobolomyces
(known to occur)
Torula
(most frequently found)
Torulopsis
(known to occur)
Trichosporon
(known to occur)

FRESH ICED FISH:

Spoilage microorganisms

Acinetobacter
Alteromonas
Alteromonas putrefaciens (= Pseudomonas putrefaciens)
(important fish spoilage organism)
Moraxella
Pseudomonas spp.
Pseudomonas fragi

CHILL STORED ROCK COD FILLETS IN 80% $CO_2$/20% AIR ATMOSPHERE:

Spoilage microorganisms

Lactobacillus
(71-87% of flora after 21 days, plus some tan-colored pseudomonads)

COD MUSCLE:

Spoilage microorganisms

Pseudomonas sp.
Pseudomonas fluorescens
Pseudomonas fragi
Pseudomonas putida
Pseudomonas putrefaciens

HADDOCK:

Spoilage microorganisms

Pseudomonas spp. of Shewan's Group II and III/IV (particularly active in the spoilage process)

CHILL STORED HADDOCK:

Spoilage microorganisms

Pseudomonas putrefaciens

HERRING FILLETS IN AIR:

Spoilage microorganisms

Alteromonas putrefaciens
(62-95% of the flora after spoilage)
Pseudomonads
(62-95% of the flora after spoilage)

CHILL STORED HERRING FILLETS IN 100% $CO_2$ ATMOSPHERE:

Spoilage microorganisms

Lactobacillus
[almost 100% of spoilage bacterial flora]

CHILL STORED PACIFIC HAKE:

Spoilage microorganisms

Acinetobacter
(Highest % of the initial flora. Not isolated after 14 days)
Moraxella
(Highest % of the initial flora. Not isolated after 14 days)
Pseudomonas spp. of Shewan's Group II
(dominant types of all bacteria after 14 days)

ENGLISH SOLE AT 5°C:

Spoilage microorganisms

Aeromonas spp.
(among the most active spoilers)
Pseudomonas spp. of Shewan's Group I and III/IV
(among the most active spoilers)
Vibrio spp.
(among the most active spoilers)

B. List of Enzymes:

Endogenous enzymes

Phospholipase (hydrolase)
in fish muscle (much of the study of fish muscle lipolysis has been with lean fish in which the primary lipid constituent is phopholipid). Lipolysis occurs extensively in fish muscle post-mortem and is associated with quality deterioration in the frozen tissue. Major cause of quality deterioration.
Lipases EC 3.1.1.3
in fish muscle.
metmyoglobin reductase
Lipoxygenase EC 1.13.11.12
in fish tissues. Fish tissues, which are rich in n-3 polyunsaturated fatty acids, are very susceptible to lipid oxidation. Once lipid oxidation is initiated, very low concentrations of aldehydes with n-3 double bonds cause distinctive oxidative off-flavors. Involved in the initiation of oxidation in fish skin tissue-extracts containing high heme concentrations. Catalyzes the formation of hydroperoxides in Emerald shiner and Rainbow trout. Because of the abundance of long-chain polyunsaturated fatty acids in fish, enzyme-initiated hydroperoxidation can be significant in relation to the flavor quality of fish at a later date. Thus, early control of oxidative enzymes in fish should suppress reactions which promote the development of undesirable, autoxidatively-derived volatile carbonyls later during subsequent processing and storage.
Microsomal Lipid Peroxidation Enzyme System
in fish muscle. The fish muscle microsomal fraction is very active at relatively low temperatures and even has significant activity in the frozen state. The exact role of this enzyme system in fish quality is still not fully understood. Since the microsomal lipid peroxidation enzyme system is active at temperatures below the freezing point of fish tissue, it is possible that enzymatic lipid peroxidation activates phospholipase A2 to initiate phosphololipids hydrolysis. In frozen fish muscle, increased level of lipid peroxidation correlates with an increasing level of phospholipids hydrolysis. It is possible that an endogenous lipid peroxidizing capacity may play a fundamental role in turnover and metabolism of membrane lipids.
Myleoperoxidase-like enzyme

in fish leukocytes. Capable of initiating lipid oxidation along with concurrent carotenoid degradation when $H_2O_2$ and halide salts are present.

Proteinases

Cathepsin D EC 3.4.23.5
Neutral proteinase
Cathepsin B EC 3.4.22.1
Alkaline proteinase
in fish skeletal muscle. Involved in the breakdown of tissue proteins. Affect quality. Implicated in the textural degradation of minced fish meat.

β-Glucuronidase EC 3.2.1.31
in fish skeletal muscle (lysosomal and microsomal localization). Involved in the hydrolysis of glucose-galactose moieties present in collagen and the mucopolysaccharide-protein complexes of the connective tissue matrix. Also implicated in the cleavage of glucuronidic disaccharide linkages of the protein polysaccharide complex occuring in the connective tissue. Autolytic process leading to early spoilage.

Glycolysis Pathway System
Production of energy, accumulation of lactic acid. The source of most post-mortem energy under anaerobic conditions is glygogen breakdown through glycolysis.

Creatine kinase EC 2.7.3.2
Involved in the regeneration of ATP. Accounts for 13-20% of total sarcoplasmic proteins in fish muscle.

Myofibrillar and sarcoplasmic ATPases
Catalyzes the breakdown of ATP in fish muscle. Onset of rigor-mortis: ATP and creatine phosphate breakdown and lactic acid accumulation in fish muscle.

COD MUSCLE:

Endogenous enzymes

Phospholipase (Hydrolase)
Most of the hydrolysis in cod is autolytic, not bacterial, in nature. Extensive: 75% of cod phospholipid is hydrolyzed in the first month of frozen storage at -7°C. Lipid hydrolysis has been almost exclusively attributed to phospholipid hydrolysis.

Lipoxygenase EC 1.13.11.12
Trans-2, cis-4-heptadienal, cis-4-heptenal, and hexenal increase with the time and temperature of storage. These correspond to the possible oxidation products of n-3 unsaturated fatty acids released primarily from the phospholipids of frozen stored cod.

Microorganism enzymes:

Glycosidases (β-D-Glucosidase EC 3.2.1.21, β-D-Galactosidase EC 3.2.1.23)
Proteases

Fish myosin is the most effective in supporting growth and enzyme secretion by Aeromonas hydrophila.

Protease

Substantial degradation of fish actomyosin even at refrigerated temperatures.

Pseudomonas fluorescens

Endo Pectate Lyase EC 4.2.2.3 (extracellular)
Lipase EC 3.1.1.3 (extracellular)
Glycosidases (β-D-Glucosidase
EC 3.2.1.21, β-D-Galactosidase EC 3.2.1.23)

Lipase EC 3.1.1.3 (Aspergillus niger)

Lipase EC 3.1.1.3 (Candida paralipolytica)
Lipase EC 3.1.1.3 (Pseudomonas spp.)
Lipase EC 3.1.1.3 (Pseudomonas sp.)
Glucoamylase EC 3.2.1.3 (extracellular)
$\alpha$-Galactosidase EC 3.2.1.22 (A. oryzae/extracellular)
Proteolytic enzymes (extracellular, Pseudomonas fragi)

C. List of Chemical Reactions of Importance:

$$\text{Oxymyoglobin} \xrightarrow{\text{oxidation}} \text{metmyoglobin}$$

D. Quality Parameters of Importance:

- Bright red color: oxymyoglobin
- Brown color: metmyoglobin
- Reduction of metmyoglobin to myoglobin: succinic dehydrogenase, metmyoglobin reductase
- Greening of tuna (only when cooked):

    - TMAO trimethylamine oxide + heat-denatured metmyoglobin

E. Table I. Effect of Gases on Microbes:
1. Microassays

   a. Acinetobacter calcoaceticus (ATCC 23055)

| 95% GAS MIXES IN AIR | |
|---|---|
| 95% $CO_2$ | 100% |
| 95% $N_2$ | 88% |
| 95% Ar | 93% |
| 3 best gas mixes: | |
| 95% Xe | 94% |
| 95% Ar:Kr 50:50 | 100% |
| 95% Ar:Xe 99:1 | 93% |
| 90% GAS MIXES IN AIR | |
| 90% $CO_2$ | 100% |
| 90% $N_2$ | 84% |
| 90% Ar | 93% |
| Other best gas mixes: | |
| 90% Ar:Ne 50:50 | 90% |
| 50% GAS MIXES IN AIR | |
| 50% $CO_2$ | 90% |
| 50% $N_2$ | 80% |
| 50% Ar | 88% |
| Other best gas mixes: | |
| 50% Ar:Xe 50:50 | 90% |
| 50% Ar:Xe 95:5 | 90% |

b. Alteromonas putrefaciens (ATCC 8071)

All $O_2$ mixes (95%, 90%, and 50%) and all $CO_2$ mixes (95%, 90%, 50%) give 100% inhibition.

| 95% GAS MIXES IN AIR | |
|---|---|
| 95% $CO_2$ | 100% |
| 95% $N_2$ | 100% |
| 95% Ar | 100% |
| Other best gas mixes: | |
| 95% Ne | 49% |
| 95% Xe | 100% |
| 90% GAS MIXES IN AIR | |
| 90% $CO_2$ | 100% |
| 90% Ar | 63% |
| Other best gas mixes: | |
| 90% Kr | 61% |
| 90% Xe/Kr | 62% |
| 50% GAS MIXES IN AIR | |
| 50% $CO_2$ | 100% |
| 50% $N_2$ and 50% Ar: for all the 50% mixes in air (except for $O_2$ and $CO_2$), slower growth than in air but reaches the same plateau. | |

c. Aspergillus niger (ATCC 16888)

| 95% GAS MIXES IN AIR | |
| --- | --- |
| 95% $CO_2$ | 100% |
| 95% $N_2$ | 64% |
| 95% Ar | 64% |
| 3 best gas mixes: | |
| 95% Xe | 94% |
| 95% Ar:Kr 99.9:0.1 | 76% |
| 95% Ar:Ne 99.9:0.1 | 76% |
| 90% GAS MIXES IN AIR | |
| 90% $CO_2$ | 100% |
| 90% $N_2$ | 52% |
| 90% Ar | 64% |
| 3 best gas mixes: | |
| 90% Xe | 94% |
| 90% Ar:Kr 95:5 | 81% |
| 90% Ar:Xe/Kr 99.9:0.1 | 70% |
| 50% GAS MIXES IN AIR | |
| 50% $CO_2$ | 100% |
| 50% $N_2$ | 42% |
| 3 best gas mixes: | |
| 50% Ar:Xe/Kr 99.9:0.1 | 52% |
| 50% Ar:Kr 95:5 | 52% |
| 50% Ar:Ne 99:1 | 52% |

d. Penicillium italicum (ATCC 48114)

| 95% GAS MIXES IN AIR | |
|---|---|
| 95% $CO_2$ | 100% |
| 95% $N_2$ | 74% |
| 95% Ar | 80% |
| 3 best gas mixes: | |
| 95% Ar:Ne 99.9:0.1 | 89% |
| most other noble gas mixtures | 84% |
| 90% GAS MIXES IN AIR | |
| 90% $CO_2$ | 100% |
| 90% $N_2$ | 70% |
| 90% Ar | 78% |
| 3 best gas mixes: | |
| 90% Xe/Kr | 83% |
| 90% Ar:Xe 99:1 | 83% |
| 90% Ar:Kr 99.9:0.1 | 83% |
| 50% GAS MIXES IN AIR | |
| 50% $CO_2$ | 92% |
| 50% $N_2$ | 50% |
| 50% Ar | 55% |
| 3 best gas mixes: | |
| 50% Ar:Kr 99.9:0.1 | 59% |
| 50% Ar:Xe/Kr 95:5 | 59% |
| Kr and Ar+Xe mixes | 50% |

e. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| (90% Ar:Xe/Kr 99.9:0.1 | 100%) |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |

50% Xe 16%

f. Serratia liquefaciens (ATCC 35551)

| 95% GAS MIXES IN AIR | |
|---|---|
| 95% $CO_2$ | 47% |
| 95% $N_2$ | 0% |
| 95% Ar | 0% |
| Other best gas mixes: | |
| 95% Ar:Xe 99:1 | 15% |
| 95% Ar:Xe 99:5 | 18% |
| 90% GAS MIXES IN AIR | |
| 90% $CO_2$ | 2% |
| 90% $N_2$ | 0% |
| 90% Ar | 0% |
| Other best gas mixes: | |
| 90% Xe | 14% |
| 50% GAS MIXES IN AIR | |
| 50% $CO_2$ | 0% |
| 50% $N_2$ | 0% |
| 50% Ar | 0% |

g. Escherichia coli (ATCC 9637)

| 95% GAS MIXES IN AIR | |
|---|---|
| 95% $CO_2$ | 100% |
| 95% $N_2$ | 62% |
| 95% Ar | 78% |
| 3 best gas mixes: | |
| 95% Ar:Ne 95:5 | 78% |
| 95% Xe | 82% |
| 95% Ar:Kr 95:5 | 78% |
| 90% GAS MIXES IN AIR | |
| 90% $CO_2$ | 100% |
| 90% $N_2$ | 51% |
| 90% Ar | 65% |
| 3 best gas mixes: | |
| 90% Kr | 78% |
| 90% Xe | 78% |
| 90% Ar:Xe 99:1 | 67% |
| 50% GAS MIXES IN AIR | |
| 50% $CO_2$ | 100% |
| 50% $N_2$ | 12% |
| 50% Ar | 15% |
| Other best gas mixes: | |
| 50% Ar:Kr 99:1 | 16% |
| 50% Ar:Xe/Kr 95:5 | 17% |

Table 1b

| Effect of Gases on Total Microorganisms from Product Trials. | | |
|---|---|---|
| Aerobes: Gas/Gas Mix: | % | % Inhibition Compared to 100% Air : |
| 1. Ar:$CO_2$ | 9:1 | 4% |
| 2. Ar:Kr | 9:1 | 2% |
| Anaerobes: Gas/Gas Mix: | % | % Inhibition Compared to 100% $CO_2$ : |
| 1. Air | 100 | 4% |
| 2. Ar | 100 | 30% |
| 3. Ar:Ne | 9:1 | 12% |
| 4. [Ar:Ne]$CO_2$ | [9:1]:9 | 11% |
| Yeasts: Gas/Gas Mix: | % | % Inhibition Compared to 100% Air : |
| 1. $Co_2$ | 100 | 0.8% |
| 2. Ar | 100 | 17% |
| 3. Ar:$CO_2$ | 9:1 | 21% |
| Molds: Gas/Gas Mix: | % | % Inhibition Compared to 100% Air : |
| 1. $Co_2$ | 100 | 29% |
| 2. Ar | 100 | 22% |
| 3. Ar:Ne | 9:1 | 29% |

F. Table II. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|-----|--------|
| Xe | -91.6% (inhibition) |
| Kr | -92.7% |
| Ar | -85.8% |
| Ne | -61.7% |

Class III. Hydrolases (EC3)

Lipase EC 3.1.1.3
Showed up to -20% inhibition with Argon and noble gases.
Protease ($\alpha$-Chymotrypsin EC 3.4.21.1)
Showed up to +20 inhibition with Argon and noble gases depending on temperature.

G. Effect of Gases on Chemical Reactions:

For smelt, oxidation of color components is inhibited and degrative chemical oxidations are also strongly inhibited.
For example:

1. Color:

Bright red color: oxymyoglobin
Brown color: metmyoglobin
Greening of tuna (only when cooked):
TMAO trimethylamine oxide + heat-denatured metmyoglobin

$$\text{Oxymyoglobin} \xrightarrow{\text{oxidation}} \text{metmyoglobin}$$

It has been found that noble gases effect oxidation in the order Xe>Kr>Ar>Ne>He in having a positive and unique utility in preventing oxidation even in the presence of oxygen.
It has been found that color can bemaintained well beyond the point where the product becomes microbiologically unexceptable.

2. Degrative chemical oxidation:

Phospholipase (hydrolase)
in fish muscle (much of the study of fish muscle lipolysis has been with lean fish in which the primary lipid constituent is phopholipid).
Lipolysis occurs extensively in fish muscle post-mortem and is associated with quality deterioration in the frozen tissue. Major cause of quality deterioration.
Lipases EC 3.1.1.3
in fish muscle.
metmyoglobin reductase
succinic dehydrogenase
metmyoglobin reductase
Lipoxygenase EC 1.13.11.12
in fish tissues. Fish tissues, which are rich in n-3 polyunsaturated fatty acids, are very susceptible to lipid oxidation.
Proteinases
Cathepsin D EC 3.4.23.5
Neutral proteinase
Cathepsin B EC 3.4.22.1
Alkaline proteinase

in fish skeletal muscle. Involved in the breakdown of tissue proteins. Affect quality. Implicated in the textural degradation of minced fish meat.

Glycolysis Pathway System Production of energy, accumulation of lactic acid. The source of most post-mortem energy under anaerobic conditions is glygogen breakdown through glycolysis.

Note: See Effect of Gases on Enzymes above for quantification of the inhibitory effect of noble gases on enzymes.

H. Summary:

Generally, Ar may be used alone or mixtures of about 5-70 volume % with the remainder being any noble gas and about 0.5-15% v;olume $O_2$.

It is more preferred, however, if about 10-50 volume % of Ar is used with the remainder being any noble gas and about 1-10% volume $O_2$.

Also, up to about 20 volume % of $CO_2$ and $N_2O$ may be present, based on the total volume.

15. Product: Steaks

A. List of Microorganisms:

MEATS:

Spoilage microorganisms

Achromobacter
Flavobacterium
Micrococcus
Bacillus
Proteins
Moraxella
Acineobacter
Enterobacetiaceae
Candida
Lactobacilli dominate
Clostridium perfringens
Leuconostoc
Pseudomonas fragi (Pork)
Staphylococcus aureus
Aeromonas hydrophila
Yersinia enterocolitica
Escherichia coli
Listeria monocytogenes

FRESH MEATS:

Spoilage microorganisms

Acinetobacter
Aeromonas
Moraxella
Pseudomonas spp.

PROCESSED MEATS:

Spoilage microorganisms

Lactobacillus
Streptococcus
Aspergillus
Penicillium

CURED MEATS:

<u>Spoilage microorganisms</u>

Aspergillus
Penicillium

VACUUM-PACKAGED MEATS:

<u>Spoilage microorganisms</u>

Lactobacillus
Yersinia enterocolitica

B. List of Enzymes:

<u>Microorganism enzymes:</u>

Lipase EC 3.1.1.3 (Candida paralipolytica)
Lipase EC 3.1.1.3 (Pseudomonas spp.)
Lipase EC 3.1.1.3 (Aspergillus niger)
Glucoamylase EC 3.2.1.3 (extracellular, Aspergillus niger)
$\alpha$-Galactosidase EC 3.2.1.22 (A. oryzae/extracellular)
Proteolytic enzymes (extracellular)

Considerable proteolysis evident after 20 days. Maximum bacterial count reached on day 6. Growth and spoilage by Ps. fragi occurs on the surface, and only at late stages do the effects of spoilage penetrate the entire meat sample.

protease (CAF; calcium activated factor)
Cathepsinis (Lysosomal enzymes)

C. Table I. Effect of Gases on Microbes:
1. Microassays

a. Acinetobacter calcoaceticus (ATCC 23055)

| 95% GAS MIXES IN AIR | |
|---|---|
| 95% $CO_2$ | 100% |
| 95% $N_2$ | 88% |
| 95% Ar | 93% |
| 3 best gas mixes: | |
| 95% Xe | 94% |
| 95% Ar:Kr 50:50 | 100% |
| 95% Ar:Xe 99:1 | 93% |
| 90% GAS MIXES IN AIR | |
| 90% $CO_2$ | 100% |
| 90% $N_2$ | 84% |
| 90% Ar | 93% |
| Other best gas mixes: | |
| 90% Ar:Ne 50:50 | 90% |
| 50% GAS MIXES IN AIR | |
| 50% $CO_2$ | 90% |
| 50% $N_2$ | 80% |
| 50% Ar | 88% |
| Other best gas mixes: | |
| 50% Ar:Xe 50:50 | 90% |
| 50% Ar:Xe 95:5 | 90% |

b. Aspergillus niger (ATCC 16888)

| 95% GAS MIXES IN AIR | |
|---|---|
| 95% $CO_2$ | 100% |
| 95% $N_2$ | 64% |
| 95% Ar | 64% |
| 3 best gas mixes: | |
| 95% Xe | 94% |
| 95% Ar:Kr 99.9:0.1 | 76% |
| 95% Ar:Ne 99.9:0.1 | 76% |
| 90% GAS MIXES IN AIR | |
| 90% $CO_2$ | 100% |
| 90% $N_2$ | 52% |
| 90% Ar | 64% |
| 3 best gas mixes: | |
| 90% Xe | 94% |
| 90% Ar:Kr 95:5 | 81% |
| 50% GAS MIXES IN AIR | |
| 50% $CO_2$ | 100% |
| 50% $N_2$ | 42% |
| 3 best gas mixes: | |
| 50% Ar:Xe/Kr 99.9:0.1 | 52% |
| 50% Ar:Kr 95:5 | 52% |
| 50% Ar:Ne 99:1 | 52% |

c. Penicillium italicum (ATCC 48114)

| 95% GAS MIXES IN AIR | |
|---|---|
| 95% $CO_2$ | 100% |
| 95% $N_2$ | 74% |
| 95% Ar | 80% |
| 3 best gas mixes: | |
| 95% Ar:Ne 99.9:0.1 | 89% |
| most other noble gas mixtures | 84% |
| 90% GAS MIXES IN AIR | |
| 90% $CO_2$ | 100% |
| 90% $N_2$ | 70% |
| 90% Ar | 78% |
| 3 best gas mixes: | |
| 90% Xe/Kr | 83% |
| 90% Ar:Xe 99:1 | 83% |
| 90% Ar:Kr 99.9:0.1 | 83% |
| 50% GAS MIXES IN AIR | |
| 50% $CO_2$ | 92% |
| 50% $N_2$ | 50% |
| 50% Ar | 55% |
| 3 best gas mixes: | |
| 50% Ar:Kr 99.9:0.1 | 59% |
| 50% Ar:Xe/Kr 95:5 | 59% |
| Kr and Ar+Xe mixes | 50% |

d. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

e. Serratia liquefaciens (ATCC 35551)

| 95% GAS MIXES IN AIR | |
|---|---|
| 95% $CO_2$ | 47% |
| 95% $N_2$ | 0% |
| 95% Ar | 0% |
| Other best gas mixes: | |
| 95% Ar:Xe 99:1 | 15% |
| 95% Ar:Xe 99:5 | 18% |
| 90% GAS MIXES IN AIR | |
| 90% $CO_2$ | 2% |
| 90% $N_2$ | 0% |
| 90% Ar | 0% |
| Other best gas mixes: | |
| 90% Xe | 14% |
| 50% GAS MIXES IN AIR | |
| 50% $CO_2$ | 0% |
| 50% $N_2$ | 0% |
| 50% Ar | 0% |

f. Escherichia coli (ATCC 9637)

| 95% GAS MIXES IN AIR | |
|---|---|
| 95% $CO_2$ | 100% |
| 95% $N_2$ | 62% |
| 95% Ar | 78% |
| 3 best gas mixes: | |
| 95% Ar:Ne 95:5 | 78% |
| 95% Xe | 82% |
| 95% Ar:Kr 95:5 | 78% |
| 90% GAS MIXES IN AIR | |
| 90% CO2 | 100% |
| 90% $N_2$ | 51% |
| 90% Ar | 65% |
| 3 best gas mixes: | |
| 90% Kr | 78% |
| 90% Xe | 78% |
| 90% Ar:Xe 99:1 | 67% |
| 50% GAS MIXES IN AIR | |
| 50% $CO_2$ | 100% |
| 50% $N_2$ | 12% |
| 50% Ar | 15% |
| Other best gas mixes: | |
| 50% Ar:Kr 99:1 | 16% |
| 50% Ar:Xe/Kr 95:5 | 17% |

g. Listeria monocytogenes (ATCC 984)
Best inhibitory gases:

| 50% Ar:Ne 99.9:0.1 | 13% |
|---|---|
| 50% Ar:Ne 99:1 | 8% |
| 50% Ar:Ne | 8% |

h. Staphylococcus aureus (ATCC 25923)

| 95% GAS MIXES IN AIR | |
|---|---|
| 95% $CO_2$ | 100% |
| 95% $N_2$ | 55% |
| 95% Ar | 61% |
| 3 best gas mixes: | |
| 95% Xe | 61% |
| 95% Kr | 61% |
| 95% Ar:Xe/Kr 99:1 | 61% |

i. Yersinia enterocolitica (ATCC 23715)
Best inhibitory gases:

| 50% Ar:Xe/Kr 99.9:0.1 | 16% |
|---|---|
| 50% Ar:Ne 99:1 | 13% |
| 90% Ar:Xe/Kr 95:5 | 10% |
| 90% Ar | 8% |
| 95% Ar:Kr 95:5 | 4% |
| All nitrogen mixes showed no inhibition. | |

Table 1b

| Effect of Gases on Total Microorganisms from Product Trials. | | |
|---|---|---|
| Aerobes: Gas/Gas Mix: | % | % Inhibition Compared to 100% Air : |
| 1. $Co_2$ | 100 | 21% |
| 2. Ar | 100 | 13% |
| 3. Ar:$CO_2$ | 9:1 | 15% |
| 4. Ar:Kr | 9:1 | 11% |
| Anaerobes: Gas/Gas Mix: | % | % Inhibition Compared to 100% $CO_2$ : |
| 1. Air | 100 | 28% |
| 2. Ar | 100 | 6% |
| 3. Ar:$CO_2$ | 9:1 | 4% |
| 4. Ar:Kr | 9:1 | 14% |
| Yeasts: Gas/Gas Mix: | % | % Inhibition Compared to 100% Air : |
| 1. $Co_2$ | 100 | 15% |
| 2. Ar | 100 | 16% |
| 3. Ar:$O_2$ | 9:1 | 3% |
| 4. Ar:Ne | 9:1 | 7% |
| Molds: Gas/Gas Mix: | % | % Inhibition Compared to 100% Air : |
| 1. $Co_2$ | 100 | 17% |
| 2. Ar | 100 | 27% |
| 3. (Ar:Kr):$CO_2$ | [9:1]:9 | 17% |
| 4. Ar:Ne | 9:1 | 18% |

F. Effect of Gases on Enzymes:

Class III. Hydrolases (EC3)

Lipase EC 3.1.1.3
Showed up to -20% inhibition with Argon and noble gases.
Protease ($\alpha$-Chymotrypsin EC 3.4.21.1)
Showed up to -20 inhibition with Argon and noble gases depending on temperature.

G. Generally, mixtures of Ar:Ne or Kr in amounts of 80-99.9% to 0.1 to 20 volume % are quite acceptable. It is preferable, however, to use relative amounts of about 9:1 of Ar:Ne or Kr. Up to about 5% of $O_2$ or $CO_2$ are present.

1. Degrative chemical reactions:

succinic dehydrogenase & metmyoglobin reductase
Reduction of metmyoglobin to myoglobin:
Lipase EC 3.1.1.3 (Candida paralipolytica, Pseudomonas spp., extracellular Aspergillus niger)
Glucoamylase EC 3.2.1.3 (extracellular, Aspergillus niger)

α-Galactosidase EC 3.2.1.22 (A. oryzae/extracellular)

Proteolytic enzymes (extracellular) Considerable proteolysis evident after 20 days. Maximum bacterial count reached on day 6. Growth and spoilage by Ps. fragi occurs on the surface, and only at late stages do the effects of spoilage penetrate the entire meat sample.
protease (CAF; calcium activated factor)
Cathepsins (Lysosomal enzymes)
It has been found that color can be maintained well beyond the point where
the product becomes microbiologically unexceptable.

H. Summary:

Generally, mixtures of Ar:Ne or Kr in amounts of about 80-99.9 to 0.1 to 20 volume % are quite acceptable. It is preferable, however, to use relative amounts of about 9:1 of Ar:Ne or Kr.

16. Product: Strawberries

A. List of Microorganisms:

Spoilage microorganisms

Botrytis cinerea Pers. ex Fr.
(gray mold rot)
Rhizopus stolonifer (Ehr. ex Fr.) Vuill.
(Rhizopus rot)
Mucor piriformis

B. List of Enzymes:

Endogenous enzymes

D-Galacturonase EC 3.2.1.15
(fruit softening)
Polyphenol oxidase EC 1.14.18.1
In berries, loss of desirable pigmentation (anthocyanidins).
Peroxidases EC 1.11.1.7
Decolorizing anthocyanins
Polyphenol oxidase (PPO) EC 1.14.18.1
Decolorizing anthocyanins
Anthocyanase
Decolorizing anthocyanins
ACC synthase
prime factor controlling the rate of ethylene biosynthesis
Lipoxygenase EC 1.13.11.12
activity can increase ethylene production
cellulase complex:

- EC 3.2.1.4
- EC 3.2.1.21

degradation of cellulose
β-Galactosidase
Loss of galactose from cell walls during ripening.

Microorganism enzymes:

Endopolygalacturonase EC 3.2.1.15 (extracellular, Rhizopus stolonifer)
Laccase EC 1.10.3.2 (Botrytis cinerea Pers. ex Fr.)

C. List of Chemical Reactions of Importance:
Degradation of anthocyanins in the presence of other phenolic compounds.
D. Quality Parameters of Importance:

Certain varities of apples contain water-soluble flavonoid pigments.
pH is the most important factor affecting the stability of anthocyanins.

E. Table I. Effect of Gases on Microbes:

Table 1b

| Effect of Gases on Total Microorganisms from Product Trials. | | |
|---|---|---|
| Aerobes: Gas/Gas Mix: | % | % Inhibition Compared to 100% Air : |
| 1. $Co_2$ | 100 | 48% |
| 2. Ar | 100 | 40% |
| 3. (Ar:Kr):$CO_2$ | (9:1):9 | 40% |
| Anaerobes: Gas/Gas Mix: | % | % Inhibition Compared to 100% $CO_2$ : |
| 1. Ar:$CO_2$ | 9:1 | 17% |
| 2. (Ar:Kr):$O_2$ | [9:1]:9 | 49% |
| Yeasts: Gas/Gas Mix: | % | % Inhibition Compared to 100% Air : |
| 1. $Co_2$ | 100 | 32% |
| 2. Ar | 100 | 12% |
| 3. (Ar:Ne):$CO_2$ | (9:1):9 | 53% |
| 4. Ar:Kr | 9:1 | 23% |
| Molds: Gas/Gas Mix: | % | % Inhibition Compared to 100% Air : |
| 1. $Co_2$ | 100 | 100% |
| 2. Ar | 100 | 80% |

F. Effect of Gases on Enzymes:

Class I. Oxidoreductase (EC 1)

Tyrosinase EC 1.14.18.1

- at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Lipase EC 3.1.1.3
Showed up to -20% inhibition with Argon and noble gases.

Protease ($\alpha$-Chymotrypsin EC 3.4.21.1)
Showed up to -20 inhibition with Argon and noble gases depending on temperature.

Class IV. Lyases(EC4)

Citrate synthase EC 4.1.3.7
Showed maximum inhibition of -27% at 25°C when measured as a coupled reaction with all gases.

G. Effect of Gases on Chemical Reactions:

For strawberries, oxidation of color components is inhibited and degrative chemical oxidations are also strongly inhibited.
For example:

1. Color: The primary color changes are the oxidation of anthocyanins from purplish-red to off-white and the oxidation of flavanoids from bright red to brown. It has been found that noble gases effect oxidation of both the anthocyanins and flavanoids in the order Xe>Kr>Ar>Ne>He in having a positive and unique utility in preventing oxidation even in the presence of oxygen.
It has been found that color can be maintained well beyond the point where the product becomes microbiologically unexceptable.
2. Degrative chemical oxidations:

D-Galacturonase EC 3.2.1.15
(fruit softening)
Polyphenol oxidase EC 1.14.18.1
In berries, loss of desirable pigmentation (anthocyanidins).
Peroxidases EC 1.11.1.7
Decolorizing anthocyanins
Polyphenol oxidase (PPO) EC 1.14.18.1
Decolorizing anthocyanins

Anthocyanase
Decolorizing anthocyanins
ACC synthase
prime factor controlling the rate of ethylene biosynthesis
Lipoxygenase EC 1.13.11.12
activity can increase ethylene production
cellulase complex:

- EC 3.2.1.4
- EC 3.2.1.21

degradation of cellulose
β-Galactosidase
Loss of galactose from cell walls during ripening.
Note: See Effect of Gases on Enzymes above for quantification of the inhibitory effect of noble gases on enzymes.

H. Summary:

Generally, mixtures of Ar:Kr or Ne in relative amounts of about (80-95:5-20) with about 5-12% $CO_2$ are quite advantageous. It is more preferable, however, to use relative amounts of Ar:Kr or Ne of about 9:1 with about 8-10%, more preferably 9% $CO_2$.

17. Product: Tomatoes

A. List of Microorganisms:

Spoilage microorganisms

Erwinia carotovora
(bacterial soft rot)
Erwinia carotovora (Jones) Holland
Pseudomonads similar to Pseudomonas marginalis
(bacterial soft rot)
Pseudomonas tomato
(bacterial speck)
Xanthomonas vesicatoria
(bacterial spot)
Alternaria tenuis Auct.
(Alternaria rot)
Alternaria alteria
Botrytis cinerea
(gray mold rot)
B. cinerea Pers. ex Fr.
Colletotrichum coccodes
(anthracnose (spotting))
Fusarium
Geotrichum candidum
(sour rot (watery soft rot))
G. candidum Link ex Pers.
Phytophora spp.
(Phytophora rot (blight + rot))
Rhizopus stolonifer
(Rhizopus soft rot]0.3.2 (Botrytis cinerea))
R. stolonifer (Ehr. ex Fr.) Vuill.

B. List of Enzymes:

Endogenous enzymes

Cytokinin nucleosidases

in ripe tomato fruit. This enzyme system has a role in the metabolism of cytokinins in tomatoes. It may function to regulate the pool of active cytokinins (which govern growth, ripening and senescence processes).

ACC synthase

Prime factor controlling the rate of ethylene biosynthesis

Lipoxygenase EC 1.13.11.12

Activity can increase ethylene production.

Involved in flavor biogenesis.

Oxidation by lipoxygenase can bleach carotenoids.

Increase volatiles during maturation.

Polygalacturonases EC 3.2.1.15 (PG I and PG II) in ripe tomatoes. Hydrolysis of glycosidic linkages in protopectin during ripening. Solubilization of uronic acid from pectinesterase-free tomato cell walls. PG II is about twice as effective as PG I in solubilizing cell walls. Polygalacturonase cleaves pectate randomly first to oligogalacturonates and ultimately to galacturonic acid, but the rate of hydrolysis decreases rapidly with decreasing chain length.

- Endopolygalacturonase EC
  Major role in ripe red tomatoes.

Pectinesterase EC 3.1.1.11

De-esterification of pectin: acts at both the reducing ends and interior loci on highly esterified pectin chains. Pectinesterase action must precede degradation of pectin by polygalacturonase, and in this way PE could exert regulation on the process of fruit softening. Tomatoes are a particularly rich source of the enzyme. The activity is high in green tomatoes and increases about 4-fold during ripening.

Cellulase EC 3.2.1.4

Degrades carboxymethylcellulose. Cellulase may be involved not only in tomato softening but also in cell enlargement during fruit development.

cellulase complex:

- EC 3.2.1.4
- EC 3.2.1.21

degradation of cellulose

Peroxidases EC 1.11.1.7

Peroxidase activities increase steadily throughout fruit development. The physiological function of peroxidase in fruit ripening processes seems to be auxin degradation.

Ethylene as a plant hormone has been known to trigger a variety of ripening processes such as the stimulation of polygalacturonase activity in tomatoes.

Microorganism enzyme:

Endopolygalacturonase EC 3.2.1.15 (extracellular, Rhizopus stolonifer)

Laccase EC 1.1

β-Galactosidase

Loss of galactose from cell walls during ripening.

C. List of Chemical Reactions of Importance:

Carotenoid degradation during processing and storage:

unsaturated nature $\rightarrow$ susceptible to isomerization and oxidation.

D. Quality Parameters of Importance:

lycopene

Lipoxygenase increases the volatiles during maturation of the fruit.

E. Table I. Effect of Gases on Microbes:

1. Microassays

a. Alternaria alternata (ATCC 13963)

| 95% GAS MIXES IN AIR | |
|---|---|
| 95% $CO_2$ | 100% |
| 95% $N_2$ | 44% |
| 95% Ar | 50% |
| Other best gas mixes: | |
| 95% Ne | 50% |
| 90% GAS MIXES IN AIR | |
| 90% $CO_2$ | 100% |
| 90% $N_2$ | 15% |
| 90% Ar | 23% |
| Other best gas mixes: | |
| 90% Ar:Xe 95:5 | 24% |

b. Erwinia carotovora (ATCC 15713)

| 95% GAS MIXES IN AIR | |
|---|---|
| 95% $CO_2$ | 100% |
| 95% $N_2$ | 0% |
| 95% Ar | 2% |
| 3 best gas mixes: | |
| 95% Ar:Ne 95:5 | 24% |
| 95% Ar:Kr 99:1 | 20% |
| 95% Ar:Ne 99:1 | 18% |
| 90% GAS MIXES IN AIR | |
| 90% $CO_2$ | 100% |
| 90% $N_2$ | 0% |
| 90% Ar | 2% |
| 3 best gas mixes: | |
| 90% Ar:Xe 99:1 | 21% |
| 90% Ar:Kr 99:1 | 20% |
| 90% Ar:Ne 99:1 | 16% |
| 50% GAS MIXES IN AIR | |
| 50% $CO_2$ | 100% |
| 50% $N_2$ | 0% |
| 50% Ar | 0% |
| Other best gas mixes: | |
| 50% Kr | 12% |

c. Pseudomonas marginalis (ATCC 10844)

| 95% GAS MIXES IN AIR | |
|---|---|
| 95% $CO_2$ | 100% |
| 95% $N_2$ | 93% |
| 95% Ar | 100% |
| 3 best gas mixes: | |
| 95% Ar:Ne 99:1 | 100% |
| 95% Ar:Ne 95:5 | 100% |
| 95% Ar:Xe/Kr 99.9:0.1 | 100% |
| 90% GAS MIXES IN AIR | |
| 90% $CO_2$ | 100% |
| 90% $N_2$ | 81% |
| 90% Ar | 85% |
| 3 best gas mixes: | |
| 90% Ar:Xe/Kr 99.9:0.1 | 100% |
| 90% Ar:Xe 95:5 | 43% |
| 90% Ar:Ne 95:5 | 43% |
| 50% GAS MIXES IN AIR | |
| 50% $CO_2$ | 100% |
| 50% $N_2$ | 0% |
| 50% Ar | 10% |
| 3 best gas mixes: | |
| 50% Ar:Kr 99:1 | 11% |
| 50% Ar:Ne 95:5 | 9% |
| 50% Xe | 16% |

Table 1b

| Effect of Gases on Total Microorganisms from Product Trials. | | |
|---|---|---|
| Aerobes: Gas/Gas Mix: | % | % Inhibition Compared to 100% Air : |
| 1. $CO_2$ | 100 | 92% |
| 2. Ar | 100 | 96% |
| Anaerobes: Gas/Gas Mix: | % | % Inhibition Compared to 100% $CO_2$ : |
| 1. Air | 100 | 34% |
| 2. Ar | 100 | 22% |
| 3. [Ar:Ne]:$CO_2$ | [9:1]:9 | 35% |
| Yeasts: Gas/Gas Mix: | % | % Inhibition Compared to 100% Air : |
| 1. $CO_2$ | 100 | 80% |
| 2. Ar | 100 | 38% |
| 3. (Ar:Kr):$CO_2$ | [9:1]:9 | 56% |
| Molds: Gas/Gas Mix: | % | % Inhibition Compared to 100% Air : |
| 1. $CO_2$ | 100 | 62% |
| 2. Ar | 100 | 51% |
| 3. Ar:Kr | 9:1 | 56% |
| 4. Ar:Ne | 9:1 | 55% |
| 5. (Ar:Ne):$CO_2$ | [9:1]:9 | 72% |

F. Effect of Gases on Enzymes:

Class I. Oxidoreductase (EC 1)

Tyrosinase EC 1.14.18.1

• at 25° and optimal reaction conditions, simple saturation of solution with gas:

| Gas | Result |
|---|---|
| Xe | -73% (inhibition) |
| Kr | -73% |
| Ar | -60% |
| Ne | -46.7% |
| 90:10 Xe:Kr | -50% |
| Ar:Xe 99:1 | -70% |

Glucose oxidase EC 1.1.3.4

| Gas | Result |
|---|---|
| Xe | -91.6% (inhibition) |
| Kr | -92.7% |
| Ar | -85.8% |
| Ne | -61.7% |

Class III. Hydrolases (EC3)

Lipase EC 3.1.1.3
Showed up to -20% inhibition with Argon and noble gases.

Protease ($\alpha$-Chymotrypsin EC 3.4.21.1)
Showed up to -20 inhibition with Argon and noble gases depending on temperature.

Class IV. Lyases(EC4)

Citrate synthase EC 4.1.3.7
Showed maximum inhibition of -27% at 25°C when measured as a coupled reaction with all gases.

G. Effect of Gases on Chemical Reactions:

For tomatoes, oxidation of color components is inhibited and degrative chemical oxidations are also strongly inhibited.
For example:

1. Color: The carotenoids that are most important in imparting color to fruits are derivatives of $\alpha$- and $\beta$-carotenes and lycopene. Due to their unsaturated nature, they are generally susceptible to oxidation. It has been found that noble gases effect oxidation in the order Xe>Kr>Ar>Ne>He in having a positive and unique utility in preventing oxidation even in the presence of oxygen.
Carotenoids are extremely susceptible to nonenzymatic oxidation in dehydrated fruits and vegetables (water acts as a barrier to oxygen diffusion).
It has been found that color can be maintained
well beyond the point where the product becomes microbiologically unexceptable.
2. Degrative chemical oxidations:

Cytokinin nucleosidases
in ripe tomato fruit. This enzyme system has a role in the metabolism of cytokinins in tomatoes. It may function to regulate the pool of active cytokinins (which govern growth, ripening and senescence processes).
ACC synthase
Prime factor controlling the rate of ethylene biosynthesis
Lipoxygenase EC 1.13.11.12
Activity can increase ethylene production. Involved in flavor biogenesis.
Oxidation by lipoxygenase can bleach carotenoids.
Increase volatiles during maturation.
Polygalacturonases EC 3.2.1.15 (PG I and PG II)
in ripe tomatoes. Hydrolysis of glycosidic linkages in protopectin during ripening. Solubilization of uronic acid from pectinesterase-free tomato cell walls. PG II is about twice as effective as PG I in solubilizing cell walls. Polygalacturonase cleaves pectate randomly first to oligogalacturonates and ultimately to galacturonic acid, but the rate of hydrolysis decreases rapidly with decreasing chain length.

- Endopolygalacturonase EC
  Major role in ripe red tomatoes.

Pectinesterase EC 3.1.1.11
De-esterification of pectin: acts at both the reducing ends and interior loci on highly esterified pectin chains.
Pectinesterase action must precede degradation of pectin by polygalacturonase, and in this way PE could exert regulation on the process of fruit softening. Tomatoes are a particularly rich source of the enzyme. The activity is high in green tomatoes and increases about 4-fold during ripening.
Cellulase EC 3.2.1.4
Degrades carboxymethylcellulose. Cellulase may be involved not only in tomato softening but also in cell enlargement during fruit development.
cellulase complex:

- EC 3.2.1.4
- EC 3.2.1.21

degradation of cellulose
Peroxidases EC 1.11.1.7
Peroxidase activities increase steadily throughout fruit development. The physiological function of peroxidase in fruit ripening processes seems to be auxin degradation.
Note: See Effect of Gases on Enzymes above for quantification of the inhibitory effect of noble gases on enzymes.

Additionally, the experiment as described above was conducted to demonstrate the effect of different gases used in gas packaging on various foods. The results are described below.

Experiment

Diverse foods, such as apples, bananas, carrots, tomatoes, green beans, strawberries, steak and fish were subjected to gas packaging using various gases.
The bases used are described in Table A herein below, while the results of treatment after 1 seek are described in Tables B and C herein below.

TABLE A

| GAS PACKAGING EXPERIMENT ON DIVERSE COMMODITIES | |
| --- | --- |
| TREATMENTS | |
| I | 100% $N_2$ |
| II | 100% AR |
| III | 95% AR + 5% XE |
| IV | 90% Ar + 5% XE + 5% $O_2$ |
| V | 100% XE |
| VI | 95% AR + 5% KR |
| VII | 90% AR + 5% KR + 5% $O_2$ |
| VIII | 100% KR |
| IX | 100% AIR |

TABLE B

| | I | II | III | IV | V | VI | VII | VIII | IX |
|---|---|---|---|---|---|---|---|---|---|
| APPLES | 1<br>9 | 1<br>9 | 1<br>8 | 1<br>8 | 1<br>8 | 1<br>9 | 1<br>9 | 1<br>9 | 1<br>8 |
| BANANAS | 5<br>8<br>9 | 5<br>8 | 5<br>8 | 5<br>8<br>9 | 5<br>8<br>10 | 5<br>8 | 5<br>8<br>* | 8<br>9<br>10 | 8<br>9 |
| CAR-ROTS | 9<br>11 | 9 | 6<br>9<br>11 | 6<br>9 | 6<br>9<br>11 | 6<br>9<br>11 | 9 | 6<br>9 | 9 |
| TOMA-TOES | 1 | 1 | 1 | 1 | 1 | 4 | 1 | 4 | 1 |
| GREEN BEANS | 6<br>8 | 4<br>6 | 2 4<br>6 8 | 2 | 4<br>8<br>10 | 2<br>6<br>8 | 1 | 6<br>8 | 1 |
| STRAW-BER-RIES | 6<br>11 | 1 | 6 | 1 | 6 | 6 | 6 | 6 | 6 |
| STEAK | 6<br>8 | 6<br>8 | 6<br>8 | 6<br>8 | 6<br>8 | 6<br>8 | 6<br>8 | 6<br>8 | 6<br>6 |
| FISH | 4<br>6 | 6 | 6 | 5<br>6 | 4<br>6<br>9 | 5<br>6 | 6 | 6 | 5<br>6 |

**KEY =**
1. NO CHANGE
2. MOLD GROWTH
3. SOFTNESS
4. BACTERIAL GROWTH
5. SPLITTING
6. MOISTURE (JUICE PRODUCTION)
7. SHRIVELING
8. BROWNING
9. DRYING
10. ROTTING
11. POUCH EXPANDED
**\* BANANA SPLIT DURING THE PACKAGING**

TABLE C

| | TREATMENT WITH LESS DETERIORATION AFTER 1 WEEK | TREATMENT WITH MOST DETERIORATION AFTER 1 WEEK |
|---|---|---|
| APPLES | V - BROWNED AND DRIED SLOWEST; NO GROWTH OBSERVED | I - SOME ROTTING OBSERVED |
| BANANAS | VII- STILL SOME YELLOW AND MINIMAL AMOUNT OF JUICE SECRETED | 1 - SKINNED BLACKENED AND SOFTENED EARLIEST |
| CARROTS | VII- LEAST AMOUNT OF DRYING | VIII - VERY MOLDY AFTER ONE WEEK |
| TOMATOES | VII - LEAST AMOUNT OF MOLD ONE CORE AFTER ONE WEEK; NO JUICE SECRETED | V - MOST AMOUNT OF MOLD ON CORE; PEEL WAS CRACKING AND SECRETED A LOT OF JUICE |
| GREEN BEANS | VII - STAYED GREENEST THE LONGEST | IV - VERY MOLDY AFTER ONE WEEK |
| STRAWBERRIES | II - RETAINED ITS JUICE DURING OBSERVATIONS | VII - SOME MOLD OBSERVED AFTER ONE WEEK |
| STEAK | IX - BROWNED AND DRIED THE SLOWEST | V - MOST MOLD OBSERVED AFTER ONE WEEK |
| FISH | VII - LEAST MOLD AND ROTTING OBSERVED. RETAINED MOST OF ITS JUICE | VIII - MOST MOLD AND ROTTING OBSERVED |

Although the present invention may be used advantageously to preserve the aroma and flavor of any food, it has been found to be particularly advantageous to use the present invention to preserve the freshness, aroma and flavor of cheese or chocolate.

I. UNDERLINE USE OF THE PRESENT INVENTION IN PRESERVING THE AROMA AN FLAVOR OF CHOCOLATE

In accordance with one aspect of the present invention, it has been surprisingly discovered that either liquid or solid chocolate or a precursor thereof can be preserved by inhibiting oxidative degradation thereof by saturating or substantially saturating the chocolate or the precursor thereof during at least one processing step therefor and/or storage step thereof with at least one noble gas, a mixture of noble gases or a gas mixture containing at least one noble gas. The effect of oxidative inhibition is provided not only by displacement of oxygen but also by action of the noble gas at the molecular level.

As used herein, the term "noble gas" means any one of argon, krypton, xenon or neon. Helium does not word and radon is radioactive and not useful. Preferably, argon or mixtures containing argon are used. Further, any of these gases may be used singly, or in combination with each other or in admixture with inert gases, such as nitrogen.

Generally, the present invention may be practiced during any single stage, any combination of stages or throughout all stages of chocolate production, processing and/or storage. Further, it may be utilized in conjunction with the subsequent production of any product containing chocolate. For example, the present invention may be used to great advantage in the production and/or processing of chocolate liquor, cocoa cake from processing, chocolate powder, chocolate beans or nibs, candies, cocoa butter or any other intermediate finished chocolate product or confectionery.

The present invention may also be used for preserving a chocolate precursor. As used herein, by "precursor" is meant any natural product such as cacao beans or raw cocoa which may be used as a source of chocolate.

Generally, the present invention affords a variety of surprising advantages. For example, surprising improvement and/or enhancement is noted in the profile of chemical components, flavor, fragrance (aroma), thermostability (temper), shelf life, consistency, color, texture, overall appearance and customer appeal. In general, improvements and/or enhancements of at least 20% in many or all of these categories is observed using the present invention.

Although the effect of the present invention may be obtained even with the application of very low pressures or partial pressures of one or more noble gases, the effect generally increases with increasing pressures or partial pressures of the noble gases. While pressures from about $10^{-8}$ torr to 100 atm. may be used, in general, pressures of from $10^{-2}$ atm. to about 10 atm. are more commonly used. However, it is preferred to use from about $10^{-1}$ atm. to about 3 atm. of pressure. It is more preferred still to use from about 0.5 atm. to about 2 atm. of pressure. Generally, excellent results may be obtained at ambient or about 1 atm. of pressure.

However, the present method is effective particularly at the pressures found in typical process steps, such as 12,000 psi in a pressurizing step, and 3 to 6 atm. in the roasting step, for example.

As noted above, the present invention may be used advantageously in conjunction with any single stage or multiple stages of chocolate production and/or processing. The general process for the production of chocolate will now be described. The present invention may be used in conjunction with any or all of these steps or with any steps with those required for the production of products containing chocolate.

Generally, chocolate processing involves a long series of steps during which oxidation can occur causing damage to the final product. The steps are generally as follows: 1) cocoa beans are picked, often by hand; 2) the beans are fermented, in piles or trays; 3) the fermented beans are stored and/or transported to a processing facility; 4) the beans are cleaned, washed, brushed, and undesirable particles are separated out by airlift separators and magnetic separators 5) the fermented beans are roasted in hot air flow ovens, or by convection 4) or micronizer treatments 6) the roasted beans are sterilized; 7) the sterile beans are subjected to alkalization by treatment with $K_2CO_3$ in order to confer desired color; 8) the alkalized beans are winnowed to remove shells, and the nibs are separated and retained, by a combined breaker/sieve/airlift 9) cocoa is produced through expeller/extrusion or more commonly through milling of beans and nibs through grinding and use of heat (both external and from friction); 10) the liquor is subject to heat devolatilization, thin film roasting (with or without vacuum) and air scrubbing; 11) alkalization ("Dutching") is carried out; 12) liquor is pressed, often in a horizontal hydraulic press at 12,000 psi and 95-105°C to produce "cake". The moisture content is critical and needs to be maintained between 0.8-1.8%, or at an even narrower range of between 1-1.5%. Alternatively, pressing can be by expeller extrusion screw pressing. Solvent extraction can also be carried out; 13) the cake is then ground ("kibbled") in various mills and cooled to yield cocoa powder. The composition of the cocoa powder (Table 1) is critical, especially the fat or butter content and composition (Table 2). Lecithin content and deodorization effects are also important. A viscometer is used to measure butter . Replacement fats may be used, measured as cocoa butter equivalents (e.g. lauric or nonlauric cocoa butter replacers; 14) The powder is then subject to hopper mixing and refining; 15) milk crumb may be mixed with the cocoa powder to produce milk chocolate. Milk crumb is made by evaporation, kneading and drying of milk; 16) The final step in chocolate production is conching which is rolling of chocolate as a semisolid in a lapping mortar/pestle type of device.

Subsequent steps may be used to utilize chocolate in the production of confectionery. These steps may include addition of cocoa butter replacements, addition of antibloom agents such as sorbitan and polyoxyethylene fatty esters (Span/Tween), tempering and cooling, molding, drop and roller deposition, aeration, flake and bark formation, vermicelli production, lamination, hollow rotation, foiling, shelling, molding, enrobing, cooking, coating and panning.

Generally, all of the above steps, but particularly steps 9-16, entail contact of the chocolate with air. Removing the air with an inert gas like nitrogen offers some improvement in reducing oxidation however, the reduction is only for oxidation due to air oxidation and not for internal oxidation. By applying the present invention to any or all of these process steps, an inhibiting effect against internal oxidation is obtained. This effect can be realized even in the presence of small amounts of oxygen.

In general, the present invention entails contact, and preferably the saturation of, chocolate with the gases of the present invention, preferably with argon, at any stage, more preferably at every stage, of its production in order to inhibit the oxidative degradation of the chocolate.

Generally, when the chocolate is in the form of a liquid or the precursor is generally in liquid form, the following will apply.

Notably, if instead of solely blanketing the space above liquid chocolate or precursor in a tank or a bottle with any kind of inert gas, a gas selected from the group consisting of argon, krypton, xenon and neon or a mixture thereof is sparged into the chocolate and/or injected above the liquid chocolate or precursor in order to saturate or substantially saturate the same with said gas or gas mixture, it is possible to substantially improve the color and/or the flavor and/or the aroma and/or the shelf life of the chocolate, particularly when said saturation or substantial saturation is maintained throughout the volume of the storage container and during substantially all the time that the chocolate is stored in said container.

The term "substantially saturate" means that it is not necessary to completely and/or constantly saturate the liquid chocolate or precursor with the gas or gas mixture (i.e., having the maximum amount of gas solubilized in said wine). Usually, it is considered necessary to saturate said wine to more than 50% of its (full) saturation level and preferably more than 70%, while 80% or more is considered the most adequate level Of saturation of the chocolate. Of course, supersaturation is also possible. This means that if during the storage life of the chocolate in the container, the chocolate is not saturated with noble gas at least from time to time or even quite longer if it remains generally substantially saturated, results according to the invention are usually obtained. While it is believed that it is important that the entire volume of the container be saturated or substantially saturated with one of the above gas or a mixture thereof, it is quite possible to obtain the results according to the invention if a part of the volume is not saturated during preferably a limited period of time or is less saturated or substantially saturated than other portions of the volume of the chocolate in the container.

While at least one of the above gases must be present in order to obtain the benefits of the invention, said gases can be diluted with some other gases, in order to keep for example the invention economically valuable. Said diluent gases are preferably selected from the group comprising nitrogen, oxygen, nitrous oxide, air, helium or carbon dioxide. In case of an oxygen-containing gas or another reactive gas such as carbon dioxide, their degradative properties are such that these properties will mask the effect of noble gases, certainly in mixtures where they comprise 50% vol. or more and possibly 30% vol. or more. When those mixes comprise 0% to 10% vol. of these other gases, the noble gases referred to above are still extremely effective, while between 10% vol. and 20% vol. they are usually still effective, depending on the type of gases and conditions, which might be easily determined by the man skilled in the art.

In case of nitrogen and/or helium gas, the effect of noble gases consisting of Ar, Ne, Kr, Xe in the mixture is linearly proportional to its concentration in the mixture, which evidences that nitrogen and/or helium have no effect on substantially preventing oxidation of the chocolate. The mixture of noble gas and nitrogen and/or helium can thus comprise any amount (% volume) of nitrogen and/or helium: however, in practice, the lesser the proportion of noble gas selected from the group consisting of Ar, Ne, Kr and Xe, the larger the time required to achieve saturation or substantial saturation of the chocolate.

Among the active gases (Ar, Kr, Xe, and Ne), it is preferred to use argon because it is cheaper than the other active gases. However, mixtures of argon and/or krypton and/or xenon are at least as effective as argon alone. It has also been unexpectedly found that mixtures comprising between 90 to 99% vol. argon and 1 to 10% Xe and/or Kr are usually the most effective as exemplified in the further examples (whether or not they are diluted with nitrogen, helium, or nitrous oxide). The difference in effect between the active gases defined hereabove and nitrogen have been also evidenced by the fact that mixtures of argon and oxygen or carbon dioxide have a similar (while decreased) effect than argon alone, while nitrogen mixed with oxygen or carbon dioxide evidenced no protective or preservative effect compared to oxygen or carbon dioxide alone.

It is believed that the saturation or substantial saturation of the chocolate is an essential feature of the invention and that no one in the prior art has ever disclosed nor suggested said feature.

Generally speaking, Xe is the most efficient gas according to the invention, followed by Kr, Ar and Ne. Among the suitable mixes, either pure or diluted with $N_2$, He, $N_2O$ (or even air, oxygen or a small amount of hydrogen) are the Ne/He mix comprising about 50% vol. of each, and the Kr/Xe mix comprising about 5-10% vol. Xe and about 90-95% vol. Kr, with a small amount of argon and/or oxygen (less than 2% vol.) or nitrogen (less than 1% vol.).

The temperatures at which the invention is carried out is usually between about 0°C to 60°C, and preferably about 10°C and 30°C.

The injection of the gas or gas mixture into the wine and/or into the container, e.g. by sparging is usually done at about 1 atmosphere but is still quite operable at 2 or 3 atmospheres, while saturation is increased at higher pressures. The pressure of the gas above the wine in the container shall be, in any case, preferably lower than 10 atmospheres and it is usually acceptable to maintain it lower than 3 atmospheres.

Saturation or substantial saturation of the chocolate can be measured by various methods well-known by the man skilled in the art, including but not limited to thermogravimetric analysis or mass change weighting.

There are a variety of standard methods available for the detection, qualitative and quantitative measurement of gases, and several are especially well suited for the determination of degree of saturation of noble gases into liquid samples.

Samples generally are completely evacuated as a control for zero % saturation. Such samples may then be completely saturated by contact with noble gases such that no additional noble gas will disappear from a reservoir in contact with the sample. Such saturated samples may then have their gas content driven off by trapped evacuation or by increase in temperature, and said gas sample identified quantitatively and qualitatively. Analysis is of trapped gases, reservoir gases, or some other headspace of gases, not directly of the sample.

Direct sample analysis methods are available, and include comprehensive GC/MS analysis, or by mass or thermal conductance or GC analysis and comparison with calibrated standards.

The simplest method is GC/MS (gas chromatography/mass spectrometry), which directly determines gas compositions. By preparing a standard absorption curve into a given sample for a series of gases and mixtures, one can accurately determine the degree of saturation at any point in time.

GC/MS is applied to the gas itself, as in the headspace above a sample. The technique may be used either to determine the composition and quantity of gas or mixture being released from a sample, or conversely the composition and quantity of a gas or mixture being absorbed by a sample by following the disappearance of the gas.

Appropriate GC/MS methods include, for example, the use of a 5 Angstrom porous layer open tubular molecular sieve capillary glass column of 0.32 mm diameter and 25 meter length to achieve separation, isothermally e.g. at 75°C or with any of several temperature ramping programs optimized for a given gas or mixture e.g. from 35-250°C, wherein ultra-high purity helium or hydrogen carrier gas is used at e.g. 1.0 cc/min flow rate, and gases are detected based upon their ionicity and quantitative presence in the sample, and characterized by their unique mass spectra.

Appropriate experimental conditions might include, for example, completely evacuating a given sample under vacuum to remove all absorbed and dissolved gases, then adding a gas or mixture to the sample and measuring a) the rate of uptake of each component as disappearance from the added gas, and/or b) the final composition of the gas headspace after equilibration. Both measurements are made by GC/MS, and either method can be used in both batch and continuous modes of operation.

A simplification of this analysis entails the use of a GC only, with a thermal conductivity detector, wherein adequate knowledge of the gas saturation process and preparation of calibration curves have been made such that quantification and characterization of gases and mixtures can be accomplished without mass spectral analysis. Such instruments are relatively inexpensive and portable.

A further simplification would depend solely upon measurement of the mass change in the sample upon uptake of various gases or mixtures, which depends upon the use of standard curves or absorption data available from the literature.

An alternate method for such mass measurements is thermogravimetric analysis, which is highly precise, wherein a sample is saturated with gas and mass changes are correlated to thermal change.

When the chocolate or precursor is in solid form, however, the following will generally apply.

Namely, for solid chocolate, it has been unexpectedly discovered that, if instead of blanketing the space above the solid chocolate or solid precursor stored in a container with any kind of inert gas, a gas selected from the group consisting of argon, krypton, xenon and neon or a mixture thereof is sparged into the chocolate and/or injected above the chocolate in order to saturate or substantially saturate the chocolate with the gas or gas mixture, it is possible to substantially improve the flavor and/or the aroma and/or the shelf life of the chocolate, particularly when said saturation or substantial saturation is maintained throughout the volume of the storage container and during substantially all the time that the chocolate is stored in said container.

The term "substantially saturate" means that it is believed that it is not necessary to completely and/or constantly saturate the chocolate with said gas or gas mixture (i.e., having the maximum amount of gas solubilized in said chocolate). Usually, it is considered necessary to saturate said chocolate to more than 50% of its (full) saturation level and preferably more than 70%, while 80% or more is considered the most adequate level of saturation of the chocolate. Of course, supersaturation is also possible. This means that if during the storage life of the chocolate in the container, the chocolate is not saturated with noble gas at least from time to time or even quite longer if it remains generally substantially saturated, results according to the invention are usually obtained. While it is believed that it is important that the entire volume of the container be saturated or substantially saturated with one of the above gas or a mixture thereof, it is quite possible to obtain the results according to the invention if a part of the volume is not saturated during preferably a limited period of time or is less saturated or substantially saturated than other portions of the volume of the chocolate in the container.

While at least one of the above gases must be present in order to obtain the benefits of the invention, said gases can be diluted with some other gases, in order to keep for example the invention economically valuable. Said diluent gases are preferably selected from the group comprising nitrogen, oxygen, nitrous oxide, air, helium or carbon dioxide. In case of an oxygen-containing gas or another reactive gas such as carbon dioxide, their degradative properties are such that these properties will mask the effect of noble gases, certainly in mixtures where they comprise 50% vol. or more and possibly 30% vol. or more. When those mixes comprise 0% to 10% vol. of these other gases, the noble gases referred to above are still extremely effective, while between 10% vol. and 20% vol. they are usually still effective, depending on the type of gases and conditions, which might be easily determined by the man skilled in the art.

In case of nitrogen and/or helium gas, the effect of noble gases consisting of Ar, Ne, Kr, Xe in the mixture is linearly proportional to its concentration in the mixture, which evidences that nitrogen and/or helium have no effect on substantially preventing oxidation of chocolate. The mixture of noble gas and nitrogen and/or helium can thus comprise any amount (% volume) of nitrogen and/or helium: however, in practice, the lesser the proportion of noble gas selected from the group consisting of Ar, Ne, Kr and Xe, the larger the time required to achieve saturation or substantial saturation of the chocolate.

Among the active gases (Ar, Kr, Xe, and Ne), it is preferred to use argon because it is less expensive than the other active gases. However, mixtures of argon and/or krypton and/or xenon are at least as effective as argon alone. It has also been unexpectedly found that mixtures comprising between 90 to 99% vol. argon and 1 to 10% Xe and/or Kr are usually the most effective as exemplified in the further examples (whether or not they are diluted with nitrogen, helium, or nitrous oxide). The difference in effect between the active gases defined hereabove and nitrogen have been also evidenced by the fact that mixtures of argon and oxygen or carbon dioxide have a similar (while decreased) effect than argon alone, while nitrogen mixed with oxygen or carbon dioxide evidenced no protective or preservative effect compared to oxygen or carbon dioxide alone.

It is believed that the saturation or substantial saturation of the chocolate is an essential feature of the invention and that no one in the prior art has ever disclosed nor suggested said feature.

Generally speaking, Xe is the most efficient gas according to the invention, followed by Kr, Ar and Ne. Among the suitable mixes, either pure or diluted with $N_2$, He, $N_2O$ (or even air, oxygen or a small amount of hydrogen) are the Ne/He mix comprising about 50% vol. of each, and the Kr/Xe mix comprising about 5-10% vol. Xe and about 90-95% vol. Kr, with a small amount of argon and/or oxygen (less than 2% vol.) or nitrogen (less than 1% vol.).

The temperatures at which the invention is carried out is between about 0°C to about 600°C or more. Preferably for some processing steps, a temperature from about 200°C to about 600°C is usually used, while for most processing and storage steps, a temperature between about 20°C and about 40°C. It is also possible to introduce the gas or gas mixture as a cryogenic liquid, which is either vaporized and heated before using it or used as such to freeze the chocolate or precursor thereof.

The injection of the gas or gas mixture into the coffee and/or into the storage container, e.g. by sparging is usually done at about 1 atmosphere but is still quite operable at 2 or 3 atmosphere, while saturation is increased at higher pressures. The pressure of the gas above the chocolate in the storage container shall be, in any case, preferably lower than 3 atmosphere and it is usually acceptable to maintain it lower than 2 atmosphere. A slight overpressure (between 1 or 2 atmosphere) is usually sufficient.

However, the gases or gas mixes according to the invention are entirely effective near vacuum or between vacuum and atmospheric pressure, provided that such gas can saturage or substantially saturate the chocolate, the effect of said gas or gases or gas mixes being a fraction of its effect at 1 atmosphere. In case of processing chocolate, a higher pressure may be used up to 100 atmosphere but usually less than 10 atmosphere and preferably between 1 and 6 atmosphere.

In every case, the optimal method is to saturate or substantially saturate the product with noble gas selected from the group defined hereabove as completely as possible.

There are a variety of standard methods available for the detection, qualitative and quantitative measurement of gases, and several are especially well suited for the determination of degree of saturation of noble gases into solid samples.

Samples generally are completely evacuated as a control for zero % saturation. Such samples may then be completely saturated by contact with noble gases such that no additional noble gas will disappear from a reservoir in contact with the sample. Such saturated samples may then have their gas content driven off by trapped evacuation or by increase in temperature, and said gas sample identified quantitatively and qualitatively. Analysis is of trapped gases, reservoir gases, or some other headspace of gases, not directly of the sample.

Direct sample analysis methods are available, and include comprehensive GC/MS analysis, or by mass or thermal conductance or GC analysis and comparison with calibrated standards.

The simplest method is GC/MS (gas chromatography/mass spectrometry), which directly determines gas compositions. By preparing a standard absorption curve into a given sample for a series of gases and mixtures, one can accurately determine the degree of saturation at any point in time.

GC/MS is applied to the gas itself, as in the headspace above a sample. The technique may be used either to determine the composition and quantity of gas or mixture being released from a sample, or conversely the composition and quantity of a gas or mixture being absorbed by a sample by following the disappearance of the gas.

Appropriate GC/MS methods include, for example, the use of a 5 Angstrom porous layer open tubular molecular sieve capillary glass column of 0.32 mm diameter and 25 meter length to achieve separation, isothermally e.g. at 75°C or with any of several temperature ramping programs optimized for a given gas or mixture e.g. from 35-250°C, wherein ultra-high purity helium or hydrogen carrier gas is used at e.g. 1.0 cc/min flow rate, and gases are detected based upon their ionicity and quantitative presence in the sample, and characterized by their unique mass spectra.

Appropriate experimental conditions might include, for example, completely evacuating a given sample under vacuum to remove all absorbed and dissolved gases, then adding a gas or mixture to the sample and measuring a) the rate of uptake of each component as disappearance from the added gas, and/or b) the final composition of the gas headspace after equilibration. Both measurements are made by GC/MS, and either method can be used in both batch and continuous modes of operation.

A simplification of this analysis entails the use of a GC only, with a thermal conductivity detector, wherein adequate knowledge of the gas saturation process and preparation of calibration curves have been made such that quantification and characterization of gazes and mixtures can be accomplished without mass spectral analysis. Such instruments are relatively inexpensive and portable.

A further simplification would depend solely upon measurement of the mass change in the sample upon uptake of various gases or mixtures, which depends upon the use of standard curves or absorption data available from the literature.

An alternate method for such mass measurements is thermogravimetric analysis, which is highly precise, wherein a sample is saturated with gas and mass changes are correlated to thermal change.

In so doing, contacting by shrouding, blanketing, pressure treatment, sparging, or cryogenic contact may be practiced. Further, saturation is desirable and complete saturation optimal. Pressure improves the effect by increasing saturation. Improvement is dramatic for both processing and storage.

Moreover, the present invention may be used in conjunction with any apparatus or device which is used either directly or indirectly in the production or storage of chocolate or products subsequently produced therefrom containing chocolate.

For example, the present invention may be used in conjuction with separators; magnetic separators; destoners; fluid bed roasters, where beans are heated by convection; probat roasters, where beans are prewarmed, roasted and cooled by convection; Buhler STR 2 roasters, micromizers, tornado roasters, particularly model 2600 RS; winnowing machines, for sieving beans; triple liquor mills, cocoa mills, particularly Type MPH 411; Wieneroto W45C, Petzhold + Injection Unit Type PIA; Petsomat-Single Tower; LBCT System: Dutching Plant; liquor presses; cocoa butter extractors, particularly those of a continuous nature; powder cooling and stabilizing systems; cocoa butter deodorizing plants; Buhler Automatic Hopper System, Mixing and Double Refining Systems; Groen Crumb System Pilot Plants; Conche pots, particularly four-pot conches; Petzholdt Superconche type PVS; Rotary conche; Frisse Double-Overthrow Conche; Tourell-Garclner Conche; Macintyre Refiner Conche; Wiener Process Installations; Wieneroto Ball Mills; Melangeur (M.22/RC); tempering kettles; DMW Temperers; Minispinners for hollow chocolate articles; a modern shell plant, including demolding, shell chocolate depositor, shell cooler, hot center cooler and backing chocolate depositor stations; molding plants, including mold heater, chocolate and cream depositor, shaking and cooling stations; enrober systems, particularly Temperstatic® enrobers; chocolate circulators; roam and tunnel coolers; multizone coolers and volvo pans.

Tables 1 and 2 are provided hereinbelow. Table 1 provides an analysis of cocoa powder using commonly quoted amounts of constituents. Table 2 provides an analysis of triglyceride composition of cocoa butters from the main growing areas.

TABLE 1

| ANALYSES OF COCOA POWDER (VARIOUS QUOTED FIGURES) | | | | | |
|---|---|---|---|---|---|
| | Natural | 1 | 2 | 3 | Remarks |
| Moisture, & | 3.0 | 3.5 | 3.5 | 4.3 | Should not exceed 5.0% |
| Coca butter | 11.0 | 10.0 | 23.5 | 21.5 | depends on pressing |
| pH (10% suspension) | 5.7 | 7.1 | 6.7 | 6.8 | Depends on alkalization |
| Ash, % | 5.5 | 8.5 | 6.3 | 7.7 | Depends on alkalization |
| Water, soluble ash, % | 2.2 | 6.3 | - | 5.8 | Depends on alkalization |
| Alkalinity of water soluble ash as $K_2O$ in original coco, % | 0.8 | 2.9 | 1.8 | 2.5 | Depends on alkalization |
| Phosphate (as $P_2O_5$), % | 1.9 | 1.9 | 1.4 | 2.0 | |
| Chloride (As NaCl), % | 0.04 | 0.9 | 0.7 | 1.1 | Salt occasionally added as flavor |
| Ash insoluble in 50% HCl | 0.08 | 0.01 | 0.06 | 0.09 | High figure shows bad bean cleaning |
| Shell, % (calculated to unalkalized nib) | 1.4 | 1.0 | 0.5 | 1.0 | Depends on efficiency of winnowing |
| Total nitrogen | 4.3 | 3.9 | 3.5 | 3.7 | |
| Nitrogen (corrected for alkaloids), % | 3.4 | 3.0 | 2.8 | 3.0 | |
| Protein Nitrogen corrected for alkaloids x 6.25), % | 21.2 | 18.7 | 17.5 | 18.7 | |
| Theobromine,% | 2.8 | 2.7 | 2.3 | 2.3 | |

TABLE 2

| TRIGLYCERIDE COMPOSITION OF COCOA BUTTERS FROM MAIN GROWING AREAS (KATTENBERG 1981) | | | | |
|---|---|---|---|---|
| Bean Origin | Trisaturated | Monosaturated | Diunsaturated | Polyunsaturated |
| Ghana | 1.4 | 77.2 | 15.3 | 6.1 |
| Ivory Coast | 1.6 | 77.7 | 16.3 | 4.4 |
| Cameroun | 1.3 | 75.7 | 18.1 | 4.9 |
| Brazin | 1.0 | 64.2 | 26.8 | 8.0 |

Having generally described the present invention, the same will be further illustrated by reference to certain examples which are provided for purposes of illustration and are not intended to be limitative.

Example

Chocolate was manufactured at pilot scale in the laboratory under each of the following gas treatments:

1. Air
2. Oxygen
3. Argon
4. Neon
5. Krypton
6. Xenon
7. Helium
8. Carbon dioxide
9. Nitrogen

The treatments were repeated wherein 5% air was admitted. The treatments were repeated wherein 10% air was admitted. The treatments were repeated wherein 20% air was admitted.

Additionally, several tests were made using decile mixtures of argon with 1 or 2 other noble gases, and with mixtures of nitrogen and noble gases.

Additionally, chocolate products were packaged in all of the above atmospheres.

Results were measured as:

1. GC/MS analyses of aromatic volatile flavor and fragrance components
2. Sensory evaluation panel
3. Color as measured by a Hunter Miniscan Colorimeter
4. Oxidative Surface Bloom
5. Viscosity
6. Moisture Content
7. Melting Point
8. An overall improvement score made by combining the above scores. The primary components are GC/MS oxidation measurements, taste and aroma panel measurement, and shelf life.

Gas was added by each of the following means: blanketing, injection into a shroud placed over the process step and equipment, injection into a pressure vessel under pressure wherein the step was accomplished, injection by sparging directly into the liquid or process milieu. The latter step was generally not satisfactory due to the viscosity of the product and its sensitivity to mechanical force.

The results of the packaging show that noble gases strongly inhibit oxidative discoloration and degradation, and better preserve aroma and flavor than nitrogen or other gases. An exception is helium which did not have an effect different from nitrogen. Further, the noble gases (Ar, Ne, Kr, Xe) had significant efficacy in improving quality of the chocolate even in the presence of oxygen, particularly when oxygen was present at 10% or less.

The processing study showed even more dramatic improvements than the packaging study, wherein treatment using noble gas improved the final quality of the product by a factor of 2 in terms of shelf life, color, aroma and flavor compared to typical processing in air. Processing using nitrogen showed only slight improvement compared to air, and this improvement disappeared in the case of admittance of as little as 5% air, whereas that amount of air did not remove the effect of argon or other noble gas. Again, only Ar, Ne, Kr and Xe were effective, He was not.

The best improvements were noted when the entire process from step 5-16 are subject to noble gas treatment, as well as packaging of the final product, but the more critical steps are 9-16 and packaging. The improvement in the first case is about 100%, in the second about 95%. Measurement of improvement at each step was made, with the following steps showing the greatest improvements: 5, 9, 10, 12, 13, 14, 16. The improvements we found were 10%, 10%, 25%, 25%, 10%, 10%, 40%, and are not strictly additive. The remainder of the noted improvement is gained by use of modified atmosphere packaging.

Argon was nearly as good (80 - 90%) in improvement of the process as Kr and Xe, and is preferable because of its lower cost. Where final product is valuable and gas volume used would not be excessive, combining argon with Kr or Xe as 90:10 - 95:5 - 99:1 percentage mixtures give better improvement still.

The following example is given as one proposed desirable practical optimum wherein argon is used at steps 5-11, Ar:Kr 95:5 is used in step 12, argon in steps 13-15, and Ar:Kr 90:10 in step 16. For packaging, the best result is found when Ar:Kr:Xe mixes are used, for example at 80:19:1.

A caution is made that because of the drying effects of controlled gas introduction, more care must be taken to ensure that moisture contents are correct, and additional water may be required to be added. We have found that adding water is best achieved through humidification of the noble gas atmosphere.

Examination of actual industrial-scale chocolate production equipment reveals that all are amenable to gas shrouding, blanketing or injection, so that in practical application, any degree of gas contact desired may be achieved.

It is again emphasized that the present invention may be used advantageously not only in conjunction with processes for producing chocolate, but also in storing chocolate or precursors thereof. The present invention may also be used to advantage in the production and/or storage of chocolate-containing products.

As used herein, the term "substantially" generally means at least 75%, preferably at least about 90%, and more preferably about 95%. This refers to not only duration of storage but also the volume of the containing means.

II. <u>USE OF THE PRESENT INVENTION IN PRESERVING THE AROMA AND FLAVOR OF CHEESE</u>

In accordance with another aspect of the present invention it has been surprisingly discovered that any or all of the steps of cheese-making may be controlled to great advantage by contacting cheese or a cheese precursor substance in any single step or combination of steps of a cheese-making process with a gas containing at least one noble gas.

As used herein, the term "cheese precursor substance" means any starting material or intermediate products used or formed in a cheese-making process or any intermediates, in particular, resulting from processes such as those of Figures 1-4.

Generally, in accordance with the present invention, surprising improvements to cheese manufacturing process may be made by contacting, saturating or blanketing the same with noble gases, preferably argon, and, particularly, in any step where the milk/cheese or precursor of cheese might otherwise be exposed to air or oxygen. For example, argon enhances the development of acidity after inoculation with microbes or enzymes, thereby decreasing the acidification time of the milk, and controls the rate of coagulation by enhancing the activity of rennet and decreases maturation time by continuing to enhance the activity of the enzymes. Most significantly, noble gases enhance the activity of flavoring and curing enzymes during the ripening step so as to yield a higher quality and more consistent product and generally act to improve and preserve desirable color, aroma and flavor characteristics of the cheese.

Generally, various cheese-making processes may be described as follows:

<u>A Typical Blue Cheese Plant</u>:

Step 1: Milk and cream storage
Raw bulk milk and bulk cream are transferred from tankers into storage silos. The milk and cream are pasteurized prior to blending.

Step 2: Blending and Inoculation
The milk and cream are blended and at the same time are continuously injected with starter - a selected bacteria which increases the acidity of the milk by the conversion of lactose to lactic acid. The inoculated milk is then transferred into a pre-ripening tank.

Step 3: Coagulation
The inoculated milk is pumped from the pre-ripening tank into a coagulator. The coagulator is a continuous loop of plastic belt with an insulating layer of water held at a continuous temperature. This water is also necessary for lubricating the belt. This belt moves the milk along its length very slowly.
The milk moves along the belt until a series of semi-circular discs drop down forming segments or mini-vats which retain the milk.

Blue mold culture and rennet which is the enzyme responsible for the coagulation of the milk are added to the mini-vats. The mini-vats are then agitated for a set period of time. Electrically charged rods are placed into the curd and whey. The electrostatic charge moves the curd away from the semi-circular disks which are then cleanly lifted out of the segment. The disk is washed and returned to the belt to form a new segment.

The curd moves down the coagulator to the cutting section where it is cut into cubes by vertical and horizontal cutters. It then passes through a circular screw to the final section where a series of agitators keep it constantly moving. It is necessary to agitate the curd and whey to prevent the curd from matting.

The curd and whey gently run off the end of the coagulator onto a drainage belt.

Step 4:     Drainage belt

The whey is drained from the curd as it moves along the belt. The curd is then fed into plastic blockforms. The blockforms consist of eight sections each of which are in the shape of a wheel.

Step 5:     Blockforms

These blockforms are stacked and turned 180 degrees to remove excess whey. The cheese stacks then pass into a drainage room where the curd "rests" for 16 hours losing more whey and cooling down to 15°C - the temperature of the brine tanks.

Step 6:     Brine tanks

The cheese is immersed into the brine tanks for four hours then it is lifted out of its blockforms.

Step 7:     Moulding

The cheese proceeds to a mold tunnel where it is sprayed with a white mould before being placed on metal hurdles and stacked.

The stacked cheese is hoisted to the upper level of the factory where it is check-weighed and labeled with a plastic disk giving the date and batch number. The cheese is then moved into the ripening rooms for 12 to 14 days.

Step 8:     Ripening

During this period of time the cheese is put into the piercing machines which makes holes in the cheese to allow the blue-mold bacteria to grow.

Back in the ripening room the cheese is continually turned to allow continuous and even growth of the white mold on the outside of the cheese.

Step 9:     Packaging

The finished cheese is packed in foil before being boxed and placed in cold storage.


Cottage Cheese Plant:

Step 1:     Steps 1 through 4 of this process is similar to that found in a Blue Cheese Plant.

Step 2:     Draining, washing and packaging

The curd is drained of the whey, washed with increasingly cooler water. The curd is mixed with pasteurized cream and packaged. The cottage cheese is sold fresh and refrigerated.


A Cheddar Cheese Plant:

Step 1:     Milk storage

Raw bulk milk is transferred from tankers into storage silos. The milk is pasteurized prior to blending.

Step 2:     Inoculation

Pasteurized milk is injected with starter culture then transferred into a pre-ripening tank. When the pH is at the appropriate level the inoculated milk is transferred into curd maker vats.

Step 3:     Coagulation and scalding

Rennet is added to the acidified milk with gentle stirring. Curd is allowed to form for a set period of time. It is then cut into cubes using vertical and horizontal cutters. The curd is gently stirred until it is floating in the whey. The temperature in the vat is raised at a rate of 1°C in 5 min. raising to 1°C in 3 min. until the final temperature of 40°C is reached. The curd is moved onto the whey drainage belt.

Step 4:     Whey drainage

The whey is drained from the curd as it moves along the drainage belt. The curd is moved onto the cheddaring belt. Depending on the acid development the curd is either turned and kept warm or aerated and cooled until acidity of 0.75-0.85% is reached.

The curd is transferred to the curd mill.

Step 5:     Milling and cooling

The curd is milled or chopped in a coarse mill to finger size pieces. The milled curd is aerated and cooled to 25.5°C to cool the enclosed fat before salting.

Step 6:  Weighing and salting

The milled curd is weighed and the correct amount of salt added (2%). The salted curd is moved into a mixing trammel where the salt is thoroughly mixed into the curd.

Step 7:  Moulding

At the end of the mixing trammel the cheese is placed into molds and pre-pressed. The molds are then transferred to the vacuum press. From the vacuum press the cheese is transferred to the cheese presses. The pressed cheese is removed from the cheese press onto a conveyor belt. The molds are then removed from the cheese. The cheese is stored at ambient temperature to dry off. The cheese is then transferred for wrapping and storage.

Step 8:  Wrapping and storage

The cheese is wrapped and stored at 7.2 to 11°C and allowed to ripen. Fully ripe cheese takes 9-12 months. Block cheese is marketed at 4-6 months.

A Mozzarella Cheese Plant:

Step 1:  Pasteurization

The milk is pasteurized to reduce microorganism load, increase yield and improve organoleptic quality of the finished product.

Step 2:  Acidification

The milk is then mixed with acid in-line by way of a proportioning pump and a injector. Quick and uniform mixing is accomplished with this method thus avoiding concentration gradients that can cause flocculation.

Step 3:  Coagulation

The acidified milk is pumped into coagulation vats. Rennet is added to the temperature controlled vats and coagulation is allowed to proceed for a set amount of time. The curd is moved into a drainage drum where the curd and whey are separated. The curd is conveyed from the drum to the loading hopper of the stretcher.

Step 4:  Stretching

Stretching the curd consists of a demineralization step in which the curd is mixed in hot water to get a compact and homogenous structure. The stretched curd is then shaped into different structures (cylindrical, flask, round). The shaped products are placed into the cooling vat.

Step 5:  Cooling

The cooling vat consists of increasingly cool water from inlet to outlet through which the shaped cheese products travel. The product then moves into a salting vat.

Step 6:  Salting

The cheese is then salted in a vat with an external conveyor system. The salted cheese is then transported for immediate packaging.

Generally, the present invention may be used in conjunction with any and/or oil steps of the cheese-making process, such as those described above.

Moreover, the present invention may be used in the production of any variety of cheese from any part of the world. For example, such cheeses as roquefort, cheddar, brie, camembert, mozzarella, feta, stilton and havarti may be produced in accordance with the present invention.

Moreover, in accordance with a preferred aspect of the present invention a method of improving the aromas and/or the flavor of cheese or constituents thereof is provided entailing, injecting a gas or a gas mix into the cheese and/or precursor thereof in containing means or into containing means, the gas or gas mixture containing an element selected from the group consisting of argon, krypton, xenon and neon and a mixture thereof, substantially saturating the cheese or precursor thereof with the gas or gas mixture; maintaining the saturation substantially throughout the volume of the storage container and during substantially all the time that the cheese or precursor is stored in said container.

It has been unexpectedly discovered that if instead of solely blanketing the space above the cheese or precursor stored in a tank or a bottle with any kind of inert gas, a gas selected from the group consisting of argon, krypton, xenon and neon or a mixture thereof is sparged into the cheese or precursor and/or injected above the cheese or precursor in order to saturate or substantially saturate the cheese or precursor with said gas or gas mixture, it is possible to substantially improve the color and/or the flavor and/or the aroma and/or the shelf life of the cheese or precursor, particularly when said saturation or substantial saturation is maintained throughout the volume of the storage container and during substantially all the time that the cheese or precursor is stored in said container.

Particularly, when the cheese or precursor is a liquid, the term "substantially saturate" means that it is believed that it is not necessary to completely and/or constantly saturate the cheese or precursor with said gas or gas mixture (i.e., having the maximum amount of gas solubilized in the cheese or precursor). Usually, it is considered necessary to saturate the cheese or precursor to more than 50% of its (full) saturation level and preferably more than 70%, while 80% or more is considered the most adequate level of saturation of the cheese or precursor. Of course, supersaturation is also possible. This means that if during the storage life of the cheese or precursor in the container, the same is not saturated with noble gas at least from time to time or even quite longer if it remains generally substantially saturated, results according to the invention are usually obtained. While it is believed that it is important that the entire volume of the container be saturated or substantially saturated with one of the above gas or a mixture thereof, it is quite possible to obtain the results according to the invention if a part of the volume is not saturated during preferably a limited period of time or is less saturated or substantially saturated than other portions of the volume of the cheese or precursor in the container.

While at least one of the above gases must be present in order to obtain the benefits of the invention, said gases can be diluted with some other gases, in order to keep for example the invention economically valuable. Said diluent gases are preferably selected from the group comprising nitrogen, oxygen, nitrous oxide, air, helium or carbon dioxide. In case of an oxygen-containing gas or another reactive gas such as carbon dioxide, their degradative properties are such that these properties will mask the effect of noble gases, certainly in mixtures where they comprise 50% vol. or more and possibly 30% vol. or more. When those mixes comprise 0% to 10% vol. of these other gases, the noble gases referred to above are still extremely effective, while between 10% vol. and 20% vol. they are usually still effective, depending on the type of gases and conditions, which might be easily determined by the man skilled in the art.

In case of nitrogen and/or helium gas, the effect of noble gases consisting of Ar, Ne, Kr, Xe in the mixture is linearly proportional to its concentration in the mixture, which evidences that nitrogen and/or helium have no effect on substantially preventing oxidation of the cheese or precursor. The mixture of noble gas and nitrogen and/or helium can thus comprise any amount (% volume) of nitrogen and/or helium: however, in practice, the lesser the proportion of noble gas selected from the group consisting of Ar, Ne, Kr and Xe, the larger the time required to achieve saturation or substantial saturation of the cheese or precursor.

Among the active gases (Ar, Kr, Xe, and Ne), it is preferred to use argon because it is cheaper than the other active gases. However, mixtures of argon and/or krypton and/or xenon are at least as effective as argon alone. It has also been unexpectedly found that mixtures comprising between 90 to 99% vol. argon and 1 to 10% Xe and/or Kr are usually the most effective as exemplified in the further examples (whether or not they are diluted with nitrogen, helium, or nitrous oxide). The difference in effect between the active gases defined hereabove and nitrogen have been also evidenced by the fact that mixtures of argon and oxygen or carbon dioxide have a similar (while decreased) effect than argon alone, while nitrogen mixed with oxygen or carbon dioxide evidenced no protective or preservative effect compared to oxygen or carbon dioxide alone.

Generally speaking, Xe is the most efficient gas according to the invention, followed by Kr, Ar and Ne. Among the suitable mixes, either pure or diluted with $N_2$, He, $N_2O$ (or even air, oxygen or a small amount of hydrogen) are the Ne/He mix comprising about 50% vol. of each, and the Kr/Xe mix comprising about 5-10% vol. Xe and about 90-95% vol. Kr, with a small amount of argon and/or oxygen (less than 2% vol.) or nitrogen (less than 1% vol.).

The temperatures at which the invention is carried out is usually between about 0°C to 60°C, and preferably about 10°C and 30°C.

The injection of the gas or gas mixture into the cheese or precursor and/or into the container, e.g. by sparging is usually done at about 1 atmosphere but is still quite operable at 2 or 3 atmospheres, while saturation is increased at higher pressures. The pressure of the gas above the cheese or precursor in the container shall be, in any case, preferably lower than 10 atmospheres and it is usually acceptable to maintain it lower than 3 atmospheres. Saturation or substantial saturation of the cheese or precursor can be measured by various methods well-known by the man skilled in the art, including but not limited to thermogravimetric analysis or mass change weighing.

There are a variety of standard methods available for the detection, qualitative and quantitative measurement of gases, and several are especially well suited for the determination of degree of saturation of noble gases into liquid samples.

Samples generally are completely evacuated as a control for zero % saturation. Such samples may then be completely saturated by contact with noble gases such that no additional noble gas will disappear from a reservoir in contact with the sample. Such saturated samples may then have their gas content driven off by trapped evacuation or by increase in temperature, and said gas sample identified quantitatively and qualitatively. Analysis is of trapped gases, reservoir gases, or some other headspace of gases, not directly of the sample.

Direct sample analysis methods are available, and include comprehensive GC/MS analysis, or by mass or thermal conductance or GC analysis and comparison with calibrated standards.

The simplest method is GC/MS (gas chromatography/mass spectrometry), which directly determines gas compositions. By preparing a standard absorption curve into a given sample for a series of gases and mixtures, one can accurately determine the degree of saturation at any point in time.

GC/MS is applied to the gas itself, as in the headspace above a sample. The technique may be used either to determine the composition and quantity of gas or mixture being released from a sample, or conversely the composition and quantity of a gas or mixture being absorbed by a sample by following the disappearance of the gas.

Appropriate GC/MS methods include, for example, the use of a 5 Angstrom porous layer open tubular molecular sieve capillary glass column of 0.32 mm diameter and 25 meter length to achieve separation, isothermally e.g. at 75°C or with any of several temperature ramping programs optimized for a given gas or mixture e.g. from 35-250°C, wherein ultra-high purity helium or hydrogen carrier gas is used at e.g. 1.0 cc/min flow rate, and gases are detected based upon their ionicity and quantitative presence in the sample, and characterized by their unique mass spectra.

Appropriate experimental conditions might include, for example, completely evacuating a given sample under vacuum to remove all absorbed and dissolved gases, then adding a gas or mixture to the sample and measuring a) the rate of uptake of each component as disappearance from the added gas, and/or b) the final composition of the gas headspace after equilibration. Both measurements are made by GC/MS, and either method can be used in both batch and continuous modes of operation.

A simplification of this analysis entails the use of a GC only, with a thermal conductivity detector, wherein adequate knowledge of the gas saturation process and preparation of calibration curves have been made such that quantification and characterization of gases and mixtures can be accomplished without mass spectral analysis. Such instruments are relatively inexpensive and portable.

A further simplification would depend solely upon measurement of the mass change in the sample upon uptake of various gases or mixtures, which depends upon the use of standard curves or absorption data available from the literature.

An alternate method for such mass measurements is thermogravimetric analysis, which is highly precise, wherein a sample is saturated with gas and mass changes are correlated to thermal change.

When the cheese or precursor is a solid, the term "substantially saturate" means that it is believed that it is not necessary to completely and/or constantly saturate the coffee with said gas or gas mixture (i.e., having the maximum amount of gas solubilized in the cheese or precursor). Usually, it is considered necessary to saturate said coffee to more than 50% of its (full) saturation level and preferably more than 70%, while 80% or more is considered the most adequate level of saturation of the cheese or precursor. Of course, supersaturation is also possible. This means that if during the storage life of the cheese or precursor in the container, the cheese or precursor is not saturated with noble gas at least from time to time or even quite longer if it remains generally substantially saturated, results according to the invention are usually obtained. While it is believed that it is important that the entire volume of the container be saturated or substantially saturated with one of the above gas or a mixture thereof, it is quite possible to obtain the results according to the invention if a part of the volume is not saturated during preferably a limited period of time or is less saturated or substantially saturated than other portions of the volume of the cheese or precursor in the container.

While at least one of the above gases must be present in order to obtain the benefits of the invention, said gases can be diluted with some other gases, in order to keep for example the invention economically valuable. Said diluent gases are preferably selected from the group comprising nitrogen, oxygen, nitrous oxide, air, helium or carbon dioxide. In case of an oxygen-containing gas or another reactive gas such as carbon dioxide, their degradative properties are such that these properties will mask the effect of noble gases, certainly in mixtures where they comprise 50% vol. or more and possibly 30% vol. or more. When those mixes comprise 0% to 10% vol. of these other gases, the noble gases referred to above are still extremely effective, while between 10% vol. and 20% vol. they are usually still effective, depending on the type of gases and conditions, which might be easily determined by the man skilled in the art.

In case of nitrogen and/or helium gas, the effect of noble gases consisting of Ar, Ne, Kr, Xe in the mixture is linearly proportional to its concentration in the mixture, which evidences that nitrogen and/or helium have no effect on substantially preventing oxidation of cheese or precursor. The mixture of noble gas and nitrogen and/or helium can thus comprise any amount (% volume) of nitrogen and/or helium: however, in practice, the lesser the proportion of noble gas selected from the group consisting of Ar, Ne, Kr and Xe, the larger the time required to achieve saturation or substantial saturation of the cheese or precursor.

Among the active gases (Ar, Kr, Xe, and Ne), it is preferred to use argon because it is less expensive than the other active gases. However, mixtures of argon and/or krypton and/or xenon are at least as effective as argon alone. It has also been unexpectedly found that mixtures comprising between 90 to 99% vol. argon and 1 to 10% Xe and/or Kr are usually the most effective as exemplified in the further examples (whether or not they are diluted with nitrogen, helium, or nitrous oxide). The difference in effect between the active gases defined hereabove and nitrogen have been also evidenced by the fact that mixtures of argon and oxygen or carbon dioxide have a similar (while decreased) effect than argon alone, while nitrogen mixed with oxygen or carbon dioxide evidenced no protective or preservative effect compared to oxygen or carbon dioxide alone.

Generally speaking, Xe is the most efficient gas according to the invention, followed by Kr, Ar and Ne. Among the suitable mixes, either pure or diluted with $N_2$, He, $N_2O$ (or even air, oxygen or a small amount of hydrogen) are the Ne/He mix comprising about 50% vol. of each, and the Kr/Xe mix comprising about 5-10% vol. Xe and about 90-95% vol. Kr, with a small amount of argon and/or oxygen (less than 2% vol.) or nitrogen (less than 1% vol.).

In every case, the optimal method is to saturate or substantially saturate the product with noble gas selected from the group defined hereabove as completely as possible.

There are a variety of standard methods available for the detection, qualitative and quantitative measurement of gases, and several are especially well suited for the determination of degree of saturation of noble gases into solid samples.

Samples generally are completely evacuated as a control for zero % saturation. Such samples may then be completely saturated by contact with noble gases such that no additional noble gas will disappear from a reservoir in contact with the sample. Such saturated samples may then have their gas content driven off by trapped evacuation or by increase in temperature, and said gas sample identified quantitatively and qualitatively. Analysis is of trapped gases, reservoir gases, or some other headspace of gases, not directly of the sample.

Direct sample analysis methods are available, and include comprehensive GC/MS analysis, or by mass or thermal conductance or GC analysis and comparison with calibrated standards.

The simplest method is GC/MS (gas chromatography/mass spectrometry), which directly determines gas compositions. By preparing a standard absorption curve into a given sample for a series of gases and mixtures, one can accurately determine the degree of saturation at any point in time.

GC/MS is applied to the gas itself, as in the headspace above a sample. The technique may be used either to determine the composition and quantity of gas or mixture being released from a sample, or conversely the composition and quantity of a gas or mixture being absorbed by a sample by following the disappearance of the gas.

Appropriate GC/MS methods include, for example, the use of a 5 Angstrom porous layer open tubular molecular sieve capillary glass column of 0.32 mm diameter and 25 meter length to achieve separation, isothermally e.g. at 75°C or with any of several temperature ramping programs optimized for a given gas or mixture e.g. from 35-250°C, wherein ultra-high purity helium or hydrogen carrier gas is used at e.g. 1.0 cc/min flow rate, and gases are detected based upon their ionicity and quantitative presence in the sample, and characterized by their unique mass spectra.

Appropriate experimental conditions might include, for example, completely evacuating a given sample under vacuum to remove all absorbed and dissolved gases, then adding a gas or mixture to the sample and measuring a) the rate of uptake of each component as disappearance from the added gas, and/or b) the final composition of the gas headspace after equilibration. Both measurements are made by GC/MS, and either method can be used in both batch and continuous modes of operation.

A simplification of this analysis entails the use of a GC only, with a thermal conductivity detector, wherein adequate knowledge of the gas saturation process and preparation of calibration curves have been made such that quantification and characterization of gases and mixtures can be accomplished without mass spectral analysis. Such instruments are relatively inexpensive and portable.

A further simplification would depend solely upon measurement of the mass change in the sample upon uptake of various gases or mixtures, which depends upon the use of standard curves or absorption data available from the literature.

An alternate method for such mass measurements is thermogravimetric analysis, which is highly precise, wherein a sample is saturated with gas and mass changes are correlated to thermal change.

The present invention will now be described by reference to certain examples which are provided for purposes of illustration and which are not intended to be limitative.

<u>Example 1</u>

CHEESE MAKING PROTOCOL:

Cheese Making in a Vial & Fresh Cheese Storage in a Controlled Atmosphere

Purpose: The purpose of this protocol is two-fold:

1. To follow the first two steps of cheese making:

    a. the addition of microorganisms (ripening the milk)
    b. the addition of Rennet (curdling the milk)

2. To determine a method of long term storage for fresh cheese.

Cheese Types to be studied:

1. Cheddar cheese
2. Blue cheese

Gas Atmospheres:

G1: 100% Air
G2: 90% $N_2$ 10% $O_2$
G3: 90% Ar 10% $O_2$
G4: 95% $N_2$ 5% $O_2$
G5: 95% Ar 5% $O_2$
G6: 70% Ar 20% Xe (source mix) 10% $O_2$

Cheese Starter Culture:
    Mesophilic Direct Set Culture:

• for making cheddar cheese
• for making blue cheese

Rennet:
    Liquid calf rennet
Materials needed:

• autoclave
• dairy or jam making thermometer (to 104°C/220°F)
• incubator or room at 50°F/80-90% relative humidity
• measuring cups
• cheese cloth or muslin: 18" to 24" square, double thickness several for each cheese mold
• long handle stainless steel spoon
• measuring spoons
• perforated spoon - long handle, stainless steel
• soup ladle - perforated is preferable
• long blade stainless steel knife
• molds: wood, metal or plastic: 6" cheese cake pan preferable
• large wood boards, well seasoned wood, 1/2" thick
• straw mats
• wooden follower (made to fit mold), well seasoned wood: 1-2" thick
• weights
• room temp of 65-70°F + average humidity (during cheese making)
• bleach (to be diluted and used for sterilizing work area)
• pasteurized milk (whole or 2%)
• salt (course or flake)
• 120 cc serum vials
    Water bath: Temperature range: 29-35°C
• 30 cc syringes
• 1 cc syringes
• starter cultures (see above)
• Rennet, liquid
• stop watch
• constant temperature incubator for storage (high humidity: 80-90%)
• small glass bioreactors to be used in conjunction with 4 Liter beakers
        in a double boiler system
• 2 hot plates

STEPS FOLLOWED:

1. Ripening the milk: **bacterial acidification process**
Milk is heated to 32°C then removed from heat source. Starter culture is added to warm milk (32°C) and left to ripen for approx. 45 min.

2. Renneting: **enzymatic process**

Heat the ripened milk to 29°-35°C and gently stir in diluted rennet. If coloring is to be added it should be added before renneting. The milk is left for about 45 min. to coagulate.

## PROTOCOL FOR MAKING STIRRED CHEDDAR CHEESE

| STEP: RIPENING | | |
| --- | --- | --- |
| 45 min | 90°F/32°C | 500 g Direct Set Starter |
| | 1890 ml Whole Milk Culture | |
| Warm 1890 ml whole milk to 90°F using a double boiler system. Keep an aluminum foil lid on the milk while it is heating to avoid contamination by air bound microbes. Remove reaction vessel and beaker that is acting as a double boiler from the hot plate. The temperature will stay at 90°C for the necessary length of time. Add 500 mg Direct Set Starter culture and stir thoroughly into the milk. Cover and leave the milk at 90°C for 45 minutes. | | |

| STEP: RENNETING | | |
| --- | --- | --- |
| 1 hr, 30 min | 90°F/32°C | Liquid Calf Rennet |
| | Ladle | |
| Add 3/4 of a teaspoon of liquid calf rennet to 1/4 cup DI $H_2O$. Stir 1/16 of a cup of the diluted rennet into the milk with a gentle up-and-down motion of the ladle for 1 minute. Let the milk set at 90°C for 45 minutes or until the curd is firm and gives a clean break. | | |

| STEP: CUTTING THE CURD | | |
| --- | --- | --- |
| 1 hr, 45 min | 90°F/32°C | Curd Knife |
| Cut the curds into 1/4" cubes as uniform as possible. Let them set undisturbed for 15 minutes. | | |

| STEP: COOKING THE CURD | | |
| --- | --- | --- |
| 2 hr, 15 min | 90-100°F/32°-38°C | Ladle |
| Stir the curds very gently. You do not want the curds to break apart from over stirring and you do not want the curds to mat together from lack of stirring. | | |
| Over the next 30 minutes warm the curds to a temperature of 100°F. Do not raise the temp. of the curds faster than 2 degrees every 5 minutes. Gently stir the curd. | | |
| 2 hr, 45 min | 100°F | Ladle |
| Hold the temperature of the curds at 100°F for an additional 30 minutes. Stir occasionally to keep curds from matting together. | | |

**STEP: DRAINING**

| 2 hr, 50 min | 100°F |
|---|---|

Drain the whey from the curds. Drain by letting the curds settle for 5 minutes to the bottom of the pot and then pouring off most of the whey. Pour the curds into a large colander and further drain them for several minutes. Do not drain too long, or the curds will mat together.

**STEP: STIRRING THE CURDS**

| 100°F |
|---|

Pour the curds back into a pot and stir them briskly with a slotted spoon separating any curd particles that have matted together.

**STEP: SALTING**

| 3 hr |
|---|

Add 2 tablespoons of coarse cheese salt to the curds. Mix in thoroughly. Do not squeeze the curds; simply mix the salt into them.

**STEP: STIRRING**

| 4 hr |
|---|

Allow the curds to remain at 100°F for 1 hour, stirring the curds every 5 minutes to avoid matting. The curds can be kept at 100°F by resting the cheese reaction vessel back in the double boiler (not on the hot plate).

**STEP: PRESSING**

| 2 hr, 15 min | 90-100°F/32°-38°C | Ladle |
|---|---|---|

Line a 2-pound cheese mold with a piece of sterilized coarse cheesecloth. Place the curds into it. Add followers to the mold and press the cheese for 10 minutes at 15 pounds pressure. Turn the cheese over and press at 30 pounds pressure for 10 minutes. Flip the mold over and press at 40 pound pressure for 2 hours. Turn the mold over and press at 50 pounds pressure for 12 hours.

**STEP: AIR-DRYING**

---

Remove the cheese from the press and gently peel off the cheese cloth. Place the cheese on a clean dry cheese board. Turn the cheese several times a day until the surface is dry to the touch.

**STEP: SLICING THE CHEESE**

---

At the end of the second day slice the cheese into eighths using a sharp knife. Gas package the slices making sure to add a wet paper towel (folded) for moisture. Store in an incubator set at 12°C.

**MATURATION OF CHEESE:**

Note: Analyst who will be taking care of the cheese during the maturation process will want to be as aseptic as possible while handling the cheese, gas packaging the cheese and storing the cheese:

- wear sterile gloves
- use sterile paper towels
- use sterile DI $H_2O$ for dampening paper towel for humidity purposes
- use clean gas packaging packages

**CHEDDAR CHEESE:**

- Check each package of cheddar cheese. If there is any difference between the air samples and the other gas mixes then pictures should be taken. This should be done on a weekly basis. Make a note of observations and the date they are made.
- Each package should be opened and the cheese removed for scraping. Using a sharp knife edge scrape the unwanted mold from the cheese. Put the cheese into a fresh, labeled package.
- Regas package the cheese making sure to add the appropriate gas mix.
- The cheddar cheese should be observed (pictures taken if necessary), scraped and repackaged on a weekly basis. The cheese should also be turned over on a weekly basis.

  - **Mondays: Observe cheese, scrape cheese, repackage**
  - **Fridays: Turn cheese over**

**PROTOCOL FOR MAKING STIRRED BLUE CHEESE**

| STEP: RIPENING | | |
|---|---|---|
| 60 min | 90°F/32°C | 500 g Direct Set Starter |
| | 1890 ml Whole Milk Culture | |
| Warm 1890 ml whole milk to 90°F using a double boiler system. Keep an aluminum foil lid on the milk while it is heating to avoid contamination by air bound microbes. Remove reaction vessel and beaker that is acting as a double boiler from the hot plate. The temperature will stay at 90°C for the necessary length of time. Add 500 mg Direct Set Starter culture and stir thoroughly into the milk. Cover and leave the milk at 90°C for 60 minutes. | | |

**STEP: RENNETING**

| 1 hr, 45 min | 90°F/32°C | Liquid Calf Rennet |
|---|---|---|
| | Ladle | |

Add 1 teaspoon of liquid calf rennet to 1/4 cup DI $H_2O$. Stir 1/16/ of a cup of the diluted rennet into the milk with a gentle up-and-down motion of the ladle for 1 minute. Let the milk set at 90°C for 45 minutes or until the curd is firm and gives a clean break.

**STEP: CUTTING THE CURD**

| 1 hr, 50 min | 90°F/32°C | Curd Knife |
|---|---|---|

Cut the curds into 1/2" cubes as uniform as possible. Let them set undisturbed for 5 minutes to firm up before stirring.

**STEP: COOKING THE CURD**

| 2 hr, 50 min | 90°F/32°C | Ladle |
|---|---|---|

Gently stir the curds every 5 minutes to keep them from matting together. Do this for 60 minutes.

**STEP: DRAINING**

| 3 hr | 100°F |
|---|---|

Let the curds settle for 5 minutes to the bottom of the pot and then pour off whey. Place the curd in a colander and allow to drain for 5 minutes. Place the curds back into the pot and mix them gently with a slotted spoon so that the curds are not matted together.

**STEP: SALTING**

| 3 hr |
|---|

Cut 1/2 block of store bought blue cheese into small chunks. Mix the blue cheese chunks into the curd. Sprinkle 1/2 teaspoon of salt over the curd mix and gently mix it in. Sprinkle another 1/2 teaspoon of salt onto the curd and gently mix it in. Let the curds rest for 5 minutes.

**STEP: MOLDING**

3 hr, 10 min

Place a 1-lb cheese mold on a cheese board. Place it so that the whey can drain off. Fill the mold with the curds.

7 hr, 10 min

Turn the mold over every 15 minutes for the first 2 hours, and then once an hour for the next 2 hours.

8 hr

Leave to drain over night.

**STEP: SALTING**

Day 2

Take the cheese from the mold and sprinkle salt on all its surfaces. Shake off excess salt. Resalt cheese after 2 hours and store on the opposite side it was previously stored on.

**STEP: SLICING THE CHEESE AND GAS PACKAGING**

Day 2

At the end of the second day slice the cheese into eighths using a sharp knife. Resalt the cheese pieces on all sides. Gas package the slices making sure to add a wet paper towel (folded) for moisture. Store in an incubator set at 12°C.

**STEP: RESALTING THE CHEESE AND REGAS PACKAGING**

Day 6

Remove the cheese slices from the gas packages in order to salt them. Remember to shake off the excess salt. Regas package cheese. Return packages to incubator.

**STEP: POKE HOLES AND REGAS PACKAGING**

Day 13

Using a thick needle poke 3 holes into each slice of the blue cheese. Regas package and cheese. Return packages to incubator.

**MATURATION OF CHEESE:**

Note: Analyst who will be taking care of the cheese during the maturation process will want to be as aseptic as possible while handling the cheese, gas packaging the cheese and storing the cheese:

- wear sterile gloves
- use sterile paper towel
- use sterile DI $H_2O$ for dampening paper towel for humidity purposes
- use clean gas packaging packages

## BLUE CHEESE:

- Check each package of blue cheese. If there is any difference between the air samples and the other gas mixes then pictures should be taken. This should be done on a weekly basis. Make a note of observations and the date they are made.

- Each package should be opened and the cheese removed. Poke 3 holes in each piece of cheese. Put the cheese into a fresh, labeled package.

- Regas package the cheese making sure to add the appropriate gas mix.

- The blue cheese should be observed (pictures taken if necessary) and repackaged on a weekly basis. The cheese should also be turned over on a weekly basis.

  - **Mondays: Observe cheese, repackage cheese**
  - **Fridays: Turn cheese over**

- Depending on the mold growth the cheese should be scraped free of the blue mold and reddish-brown smear. This should be done on when the cheese is to be repackaged. This procedure should be done every 20-30 days depending on the mold growth.

## MICROBIAL STEP IN CHEESE MAKING PROCESS

## TIME REQUIREMENT

1 person for 4 hours + another person for 2.5 hours

## GAS MIXES

G1: 100% AIR
G2: 90% $N_2$ 10% $O_2$
G3: 90% Ar 10% $O_2$
G4: 95% $N_2$ 5% $O_2$
G5: 95% Ar 5% $O_2$
G6: 70% Ar 20% Xe (source mix) 10% $O_2$

## MATERIALS NEEDED:

20 x 10 cc serum vials (sterile)
6 x 120 cc serum vials (sterile)
12 stoppers (sterile)
12 seals (sterile)
reaction vessel (sterile: should hold approx. 50 ml)
10cc syringes
1cc syringes
needles (sterile)
stop watch
Fieldcrest Whole Milk (homogenized pasteurized)
DI $H_2O$
water bath maintained at 32°C (90°F)

**PROCEDURE:**

Heat water bath to 90°F/32°C and maintain temp with bath uncovered.
Place a clean/sterile (bleach soln is OK) 250 ml beaker filled with milk into the water bath.
Place 49 ml of cold milk into each of 6 vials. Seal vials with sterile stoppers and seals.
Purge vials with base gas.
For vial 6 remove 24cc of the Ar atmosphere from the vial. Add 24cc of Xe (source mix).
Add required amount of $O_2$:

5% = 6cc
10% = 12cc

Heat 2 of the vials to 32°C/90°F using the water bath (approx 20 minutes - watch temperature decrease of bath after the vials are added to it). Refrigerate the other vials until needed.
Prepare the microbe solution fresh for each set of vials:

Weigh out 132.8 mg Mesophilic Direct Set Cheese Starter Culture into a 10cc serum vial (sterile).
Add 10 ml of milk that has been brought up to 32°C/90°F. Invert to mix.

Immediately take a 1cc sample and inject into the first 2 vials **(need 2 people from this point of the experiment to the end)**

**START TIMER**

Take pH of the milk sitting in the beaker in the waterbath at the beginning of the experiment. This will be $T_0$.
At 15 minute intervals take a 10cc sample and place into a 10cc serum vial. Immediately take a pH of the sample.
After 20 minutes has elapsed the next 2 vials should be removed from the refrigerator and placed into the water bath to heat.
After the 45 minutes ripening time is over start the next set of 2 vials using the same procedure; then proceed to the third set of 2 vials

Table 1

| pH Data Collected from Microbial Step In Cheese Making | | | | | | | |
|---|---|---|---|---|---|---|---|
| Time(min) | pH | | | | | | CNTRL |
| | G1 | G2 | G3 | G4 | G5 | G6 | |
| 0.00 | 6.68 | 6.68 | 6.68 | 6.68 | 6.68 | 6.68 | 6.68 |
| 15.00 | 6.68 | 6.69 | 6.71 | 6.71 | 6.69 | 6.70 | - |
| 30.00 | 6.71 | 6.71 | 6.71 | 6.70 | 6.69 | 6.69 | - |
| 45.00 | 6.70 | 6.69 | 6.69 | 6.66 | 6.70 | 6.70 | 6.66 |
| Key:<br>G1: 100% Air     G4: 9.5:0.5 $N_2$:$O_2$<br>G2: 9:1 $N_2$:$0_2$     G5: 9.5:0.5 Ar:$0_2$<br>G3: 9:1 Ar:$0_2$     G6: 7:2:1 Ar:Xe (source):$0_2$<br>Treatments under G3, G5 and G6 reached initial pH 10% faster than the other gases, and acidification was completed 15% sooner. | | | | | | | |

RENNETING STEP IN CHEESE MAKING PROCESS

TIME REQUIREMENT:

1 person for 3 hours

GAS MIXES:

G1: 100% Air
G2: 90% $N_2$ 10% $O_2$
G3: 90% Ar 10% $O_2$
G4: 95% $N_2$ 5% $O_2$
G5: 95% Ar 5% $O_2$
G6: 70% Ar 20% Xe (source mix) 10% $O_2$

MATERIALS NEEDED:

6 x 10 cc serum vials (sterile)
6 x 120 cc serum vials (sterile)
12 stoppers
12 seals (sterile)
reaction vessel (sterile: should hold approx. 50 ml)
10cc syringes
1cc syringes
needles (sterile)
stop watch
Fieldcrest Whole Milk (homogenized, pasteurized)
DI $H_2O$
Water bath maintained at 32°C (90°F)

PROCEDURE:

Heat waterbath to 90°F/32°C and maintain temp with bath uncovered.
Place a clean/sterile (bleach soln is OK) 250 ml beaker filled with milk into the waterbath,
Place 49 ml of cold milk into each of 6 vials. Seal vials with sterile stoppers and seals.
Purge vials with base gas.
For vial 6 remove 24cc or the Ar atmosphere from the vial. Add 24cc of Xe (source mix).
Add required amount of $O_2$:

5% = 6cc
10% = 12cc

Prepare Rennet Solution:

Mix 3.8 ml Liquid Calf Renner and 56.2 ml DI $H_2O$ (60 ml total).

Transfer 5 ml of the Rennet solution into each of 6 10cc serum vials. Immediately gas the vials with the appropriate gas mix. Refrigerate vias after gassing.
Heat the 120cc serum vials containing the milk to 32°C/90°F using the waterbath (approx 20 minutes - watch temperature decrease of bath after the vials are added to it).
Prepare the microbe solution which is to be injected into each of the 6 vials:

Weight out 132.8 mg Mesophilic Direct Set Cheese Starter Culter into a 10cc serum vial (sterile). Add 10 ml of milk that has been brought up to 32°C/90°F. Invert to mix.

Immediately prepare 6 1cc syringes with 1cc or the microbe soln.
Inject each of the 6 heated vials with 1cc of microbe soln.
START TIMER!
Return vials to the 32°C/90°F waterbath.
When 30 minutes have elapsed sample 0.4 ml of Rennet soln from each of the gassed vials. These will be injected into the corresponding milk vial after 45 minutes of reopening.
When 45 minutes has elapsed add the 0.4 ml of Rennet soln to each of the 6 vials at the same time.
START TIMER!
Take observations of each of the vials at 9 minute intervals. This will give us 5 points for comparison between each of the gases.

Experiment is done when all of the vials have finished coagulating.

Table 2

| Coagulation of Skim Milk by The Action of Renner | | | | | | |
|---|---|---|---|---|---|---|
| Time (min) | COAGULATION | | | | | |
| | G1 | G2 | G3 | G4 | G5 | G6 |
| 0.00 | 0 | 0 | 0 | 0 | 0 | 0 |
| 9.00 | 0 | 0 | 0 | 0 | 0 | 0 |
| 18.00 | 0 | 0 | 1 | 0 | 1 | 1 |
| 27.00 | 1 | 1 | 2 | 1 | 2 | 2 |
| 36.00 | 2 | 2 | 3 | 2 | 2 | 3 |

Key:
Gas Mixes:
G1: 100% Air     G4: 9.5:0.5 $N_2$:$O_2$
G2: 9:1 $N_2$:$O_2$     G5: 9.5:0.5 Ar:$O_2$
G3: 9:1 Ar:$O_2$     G6: 7:2:1 Ar:Xe(source):$O_2$

| Visual Observation: | Numeric Value: |
|---|---|
| • no change | 0 |
| • small particles | 1 |
| • large particles | 2 |
| • coagulated | 3 |

Example Time Table for the Maturation of Cheese

| DATE | PICTURES | REGAS PACKAGE | TURN |
|---|---|---|---|
| 9/18/92 | YES | YES | NA |
| 9/11/92 | | NA | YES |
| 9/14/92 | YES | YES | NA |
| 9/18/92 | | NA | YES |
| 9/21/92 | YES | YES | NA |
| 9/25/92 | | NA | YES |
| 9/28/92 | YES | YES | NA |
| 10/02/92 | | NA | YES |
| 10/06/92 | No- No difference | YES | NA |
| 10/09/92 | | NA | YES |
| 10/12/92 | YES | YES | NA |
| 10/16/92 | | NA | YES |
| 09/08/92 | YES | YES | NA |
| 10/19/92 | | YES | NA |
| 10/23/92 | | NA | YES |
| 10/26/92 | | YES | NA |
| 10/30/92 | | NA | YES |
| 11/02/92 | | YES | NA |
| 11/06/92 | | NA | YES |
| 11/09/92 | | YES | NA |
| 11/13/92 | | NA | YES |
| 11/16/92 | | YES | NA |
| 11/20/92 | | NA | YES |
| 11/23/92 | | YES | NA |
| 11/27/92 | | NA | YES |
| 11/30.92 | | YES | NA |

Ex. 2

PROTOCOL FOR RENNET (R-3376) / 30% SKIM MILK GAS RUN

ENZYME:  Rennet (Sigma No. R-3376), Type I from Calf Stomach Lot No. 60H0800
Contains approx. 80% sodium chloride 50 g The activity of Rennet/Rennin is expressed in terms of its milk clotting ability and is determined by comparison with a standard Rennet preparation of which 1 part will clot 10,000 parts of normal milk in 60 seconds at 30°C. A unit of activity is the activity of 1 ml of a 1% solution of the standard Rennet preparation.

SUBSTRATE:  Skimmed cow's milk (or 20.9 g dried milk powder in 200 ml $H_2O$) and 1.0 M $CaCl_2$.

SOLUTION PREPARATION:

Soln A: 1.0 M $CaCl_2$
Dissolve 11.098 g $CaCl_2$ to 100 ml with DI $H_2O$.

Soln B: Skim Milk w/1 M $CaCl_2$

To 300 ml skim milk add 3 ml 1 M $CaCl_2$

Dilute 30 ml of this solution to 100 ml with DI $H_2O$.

Soln $C_0$: 0.2 mg/ml Rennet (R-3376)

Dissolve 40 mg R-3376 in 100 ml DI $H_2O$.

Dilute 25 ml of this solution to 50 ml with DI $H_2O$.

GASES:

G1.....Air
G2.....Ne
G3.....Ar
G4.....Kr
G5.....Air
G6.....Xe
G7.....$O_2$
G8.....$N_2$

TEMPERATURES:

T1 30°C
T2 35°C
T3 35°C (reverse order)
T4 45°C
T5 20°C

SCHEDULE:

Day 1:
30°C - use all 8 gases
Day 2:
35°C - use all 8 gases
Day 3:
35°C - use all 8 gases in reverse order:

G5.....Air
G6.....Xe
G7.....$O_2$
G8.....$N_2$
G1.....Air
G2.....Ne
G3.....Ar
G4.....Kr

45°C - use all 8 gases
Day 4:
20°C - use all 8 gases

MATERIALS NEEDED:

8 x 10cc vials for [S]
8 x 10cc vials for [E]
30cc syringes
10cc syringes
1cc syringes
20G1½ needles
cuvettes + blue silicone stoppers

BLANK:     R = 2.0 ml Soln B + 0.5 ml Soln C

GASSING PROCEDURE:

- add 5 ml Soln C (0.2 mg/ml R-3376) to each of 8 10cc serum vials. Stopper and crimp to effect a gas tight seal.
- add 6 ml soln B (30% skim milk + 1 M CaC1$_2$) to each of 8 10cc serum vials. Stopper and crimp to effect a gas. Refrigerate.
- purge substrate vials with 3 x 30cc of gas then 2 x 10cc of gas - store vial under 2 x 10cc syringes of gas. Refrigerate.
- purge enzyme vials with 3 x 30cc of gas then 2 x 10cc of gas - store vial under 2 x 10cc syringes of gas. Refrigerate.
- purge stoppered cuvettes with 5 x 10cc of gas. Store under 2 x 10cc syringes. Refrigerate.
- purge 8 x 1cc syringes/needles with the appropriate gas (2 syringe/needles per cuvette) to transfer substrate to the cuvettes.
- transfer gassed substrate with the purged syringes/needles - minimize air contamination as much as possible. Refrigerate filled cuvettes.
- purge syringes/needles with the appropriate gas to sample enzyme with.

Spectrophotometric study, 30°C

PARAM:     Abs  
Slit 1 nm  
Speed 1500 nm/min  
ASave Y  
APrint N  
BACKGROUND CORRECTION:     900 - 190 nm

- T1 RUNS (30°C)

  CPRG:  
  4 CELLS  
  % Transmittance  
  835 nm  
  120 pts (30 minutes)  
  INT 16 s  
  $Y_{min} = 0.0\%$  
  $Y_{max} = 100\%$

- set digital controller on 30°C and Fisher circulator on 25°C and high pump speed.
- put cuvettes (G1-G4) into cuvette holder and equilibrate to temperature.
- sample 0.5 ml of corresponding enzyme with purged needles.
- inject all 4 cuvettes with the enzyme simultaneously. Begin data collection.

[G3, G4], files: RENT30G1-4.SP)

- gas 35°C cuvettes and substrate (using above method).
- purge 1cc syringes/needles for substrate transfer.
- transfer 2 ml of substrate to each cuvette. Refrigerate under 2 x 10cc syringes of gas.
- put cuvettes (G5-G8) into cuvette holder and equilibrate to temperature.
- sample 0.5 ml of corresponding enzyme with purged needles.
- inject all 4 cuvettes with the enzyme simultaneously. Begin data collection.

[???? G6, G7, G8], filed: RENT30G5-8.SP)

- T2 RUNS (35°C)

  CPRG:
  4 CELLS
  % Transmittance
  835 nm
  120 pts (20 minutes)
  INT 16 s
  $Y_{min}$ = 0.0%
  $Y_{max}$= 100%

  - set digital controller on 35°C and Fisher circulator on 30°C and high pump speed.
  - put cuvettes (G1-G4) into cuvette holder and equilibrate to temperature.
  - sample 0.5 ml of corresponding enzyme with purged needles.
  - inject all 4 cuvettes with the enzyme simultaneously. Begin data collection.

  [G2, G2, G4], files: RENT35G1-4.SP)

  - put cuvettes (G5-G8) into cuvette holder and equilibrate to temperature.
  - sample 0.5 ml of corresponding enzyme with purged needles.
  - inject all 4 cuvettes with the enzyme simultaneously. Begin data collection.

  [G6, G7, G8], files: RENT35G5-8.SP)
- T3 RUNS (35°C) REVERSE GAS ORDER
  New solutions prepared:
  Fresh skim milk was purchased: expiration date:
  Note: reaction is much faster due to the freshness of the milk.

  CPRG:
  4 CELLS
  % Transmittance
  835 nm
  120 pts (30 minutes)
  INT 16 s
  $Y_{min}$ = 0.0%
  $Y_{max}$ = 100%

  - set digital controller on 35°C and Fisher circulator on 30°C and high pump speed.
  - put cuvettes (G1-G4) into cuvette holder and equilibrate to temperature.
  - sample 0.5 ml of corresponding enzyme with purged needles.
  - inject all 4 cuvettes with the enzyme simultaneously. Begin data collection.

  [G6, G7, G8]., files: RROT35G5-8.SP)

  - put cuvettes (G5-G8) into cuvette holder and equilibrate to temperature.
  - sample 0.5 ml of corresponding enzyme with purged needles.
  - inject all 4 cuvettes with the enzyme simultaneously. Begin data collection.

  [G2, G3, G4], files: RROT35G1-4.SP)
- T4 RUNS (45°C)
  Skim Milk expiration date:

  CPRG:
  4 CELLS
  % Transmittance
  835 nm

120 pts (30 minutes)

INT 16 s

$Y_{min}$ = 0.0%

$Y_{max}$ = 100%

- set digital controller on 45°C and Fisher circulator on 40°C and high pump speed.
- put cuvettes (G1-G4) into cuvette holder and equilibrate to temperature.
- sample 0.5 ml of corresponding enzyme with purged needles.
- inject all 4 cuvettes with the enzyme simultaneously. Begin data collection.

[G2, G3, G4], files: RENT45G1-4.SP)

- put cuvettes (G5-G8) into cuvette holder and equilibrate to temperature.
- sample 0.5 ml of corresponding enzyme with purged needles.
- inject all 4 cuvettes with the enzyme simultaneously. Begin data collection.

[G6, G7, G8], files: RENT45G5-8.SP)

- T5 RUNS (20°C)

  New solutions prepared:

  skim milk expiration data:

  CPRG:

  4 CELLS

  % Transmittance

  835 nm

  120 pts (30 minutes)

  INT 16 s

  $Y_{min}$ = 0.0%

  $Y_{max}$ = 100%

- set digital controller on 20°C and Fisher circulator on 15°C and high pump speed.
- put cuvettes (G1-G4) into cuvette holder and equilibrate to temperature.
- sample 0.5 ml of corresponding enzyme with purged needles.
- inject all 4 cuvettes with the enzyme simultaneously. Begin data collection.

[G2, G3, G3], files: RENT20G1-4.SP)

- put cuvettes (G5-G8) into cuvette holder and equilibrate to temperature.
- sample 0.5 ml of corresponding enzyme with purged needles.
- inject all 4 cuvettes with the enzyme simultaneously. Begin data collection.

[G6, G7, G8] filed: RENT20G5-8.SP)

Files:

RENT30G1-4.SP ======>

RENT30G5-8.SP

Figures 1-9 will now be discussed in more detail.

Figure 1 schematically depicts a process of making blue cheese from raw milk. First, the raw milk is pasteurized to form, with starter, blend milk and cream which is then coagulated with rennet. After coagulation and after drainage with separation of whey, mould is cured into block forms and then subjected to a resting period with cooling to 15°C. Then, the block forms are subjected to a brine bath and then sprayed with a white mold and then ripened and package.

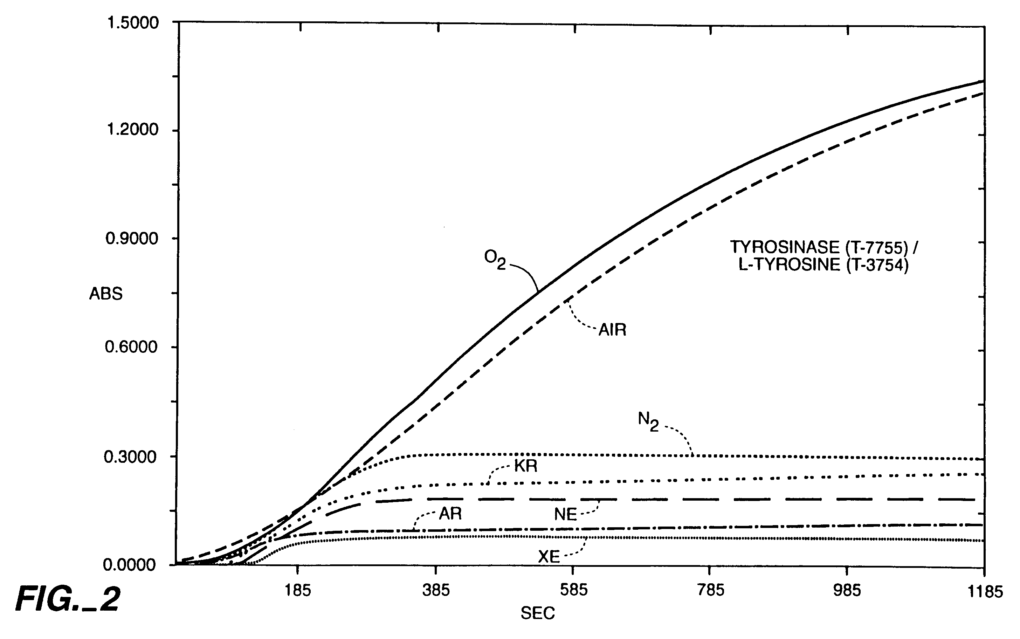

Figure 2 schematically depicts a process for making cheddar cheese from raw milk. First, the raw milk is pasteurized to form, with starter, to form blendmilk and cream which is then coagulated with rennet. After coagulation, scalding and drainage, whey is separated and then the product is subjected to milling and cooling, weighing and salting, molding and pressing and drying with subsequent wrapping.

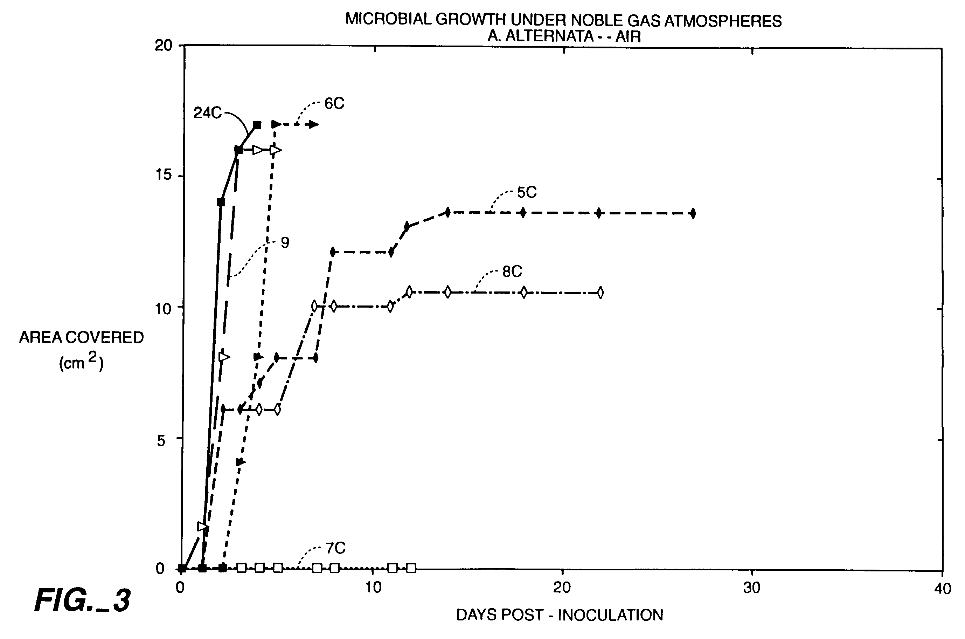

Figure 3 illustrates a process for producing mozzarella cheese from raw milk. After pasteurization, acidification and coagulation of the raw milk with rennet, the intermediate is drained to afford whey. Then, the (curd) intermediate is stretched, cooled, salted and packaged.

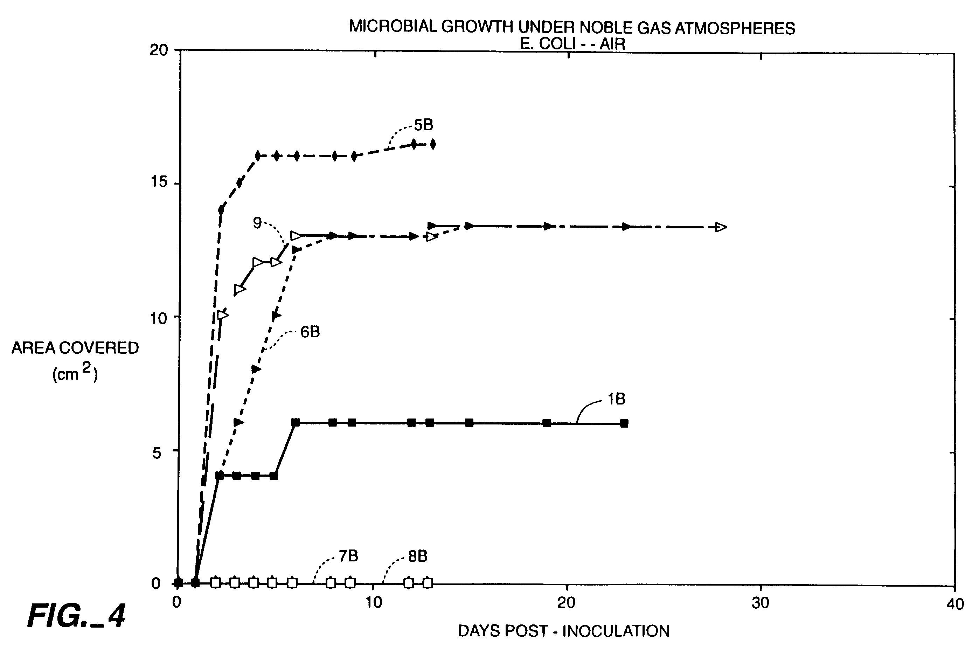

Figure 4 illustrates a process for producing cottage cheese from raw milk. After pasteurization, blend milk and cream is coagulated with starter and the intermediate is drained to afford whey. The curd is washed, cooled, mixed with cream and packaged.

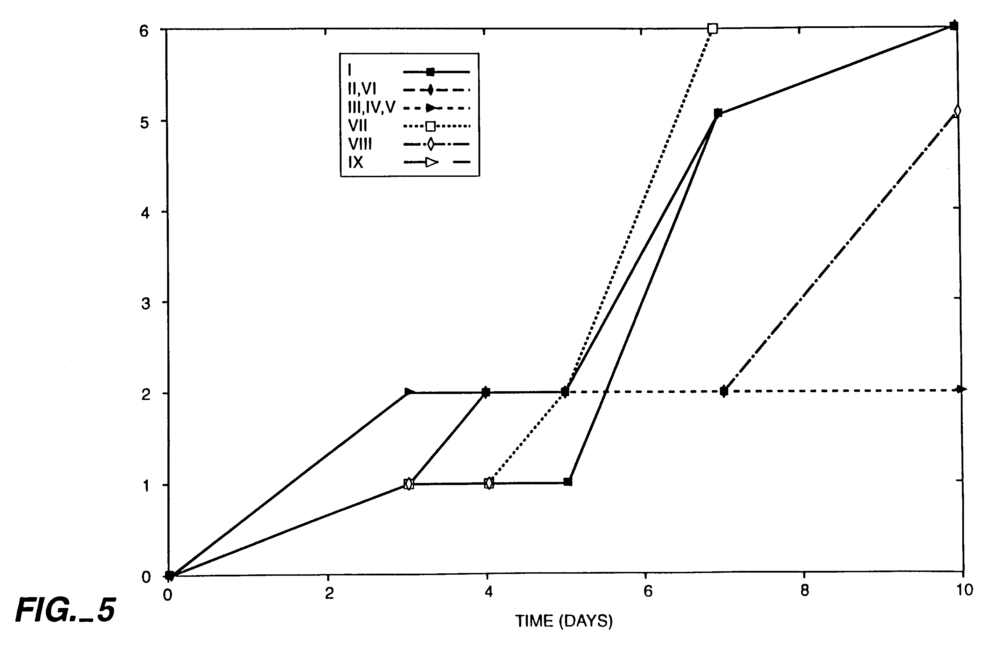

Figure 5 illustrates the effect of argon at different temperatures on the rennet/skin milk system. Temperatures of 30°C, 35°C and 45°C were used.

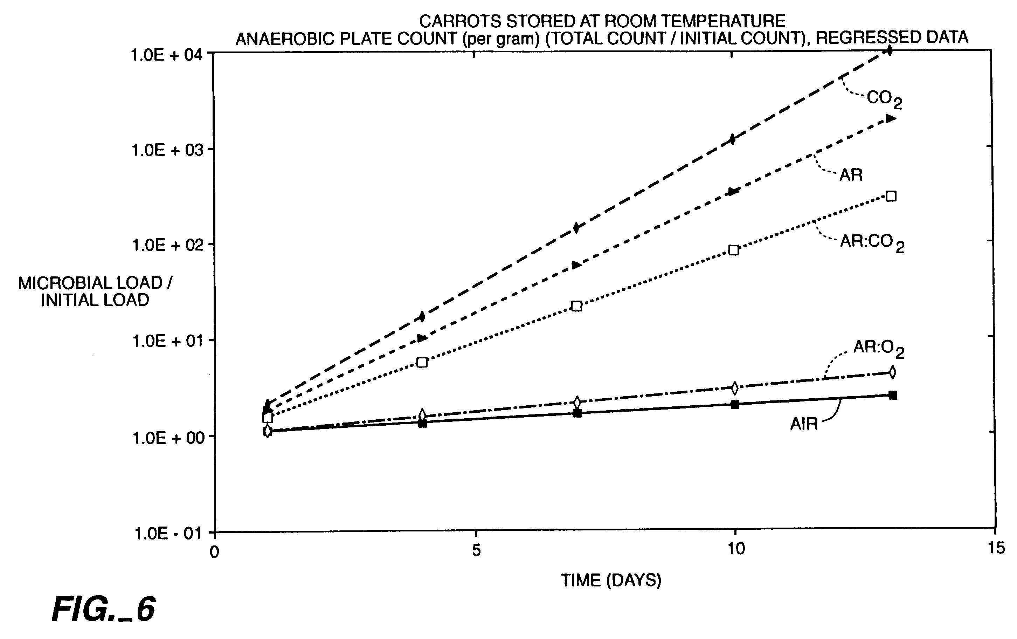

Figure 6 illustrates the effect of oxygen at different temperatures on the rennet/skim milk system. Temperatures of 30°C, 35°C and 45°C were used.

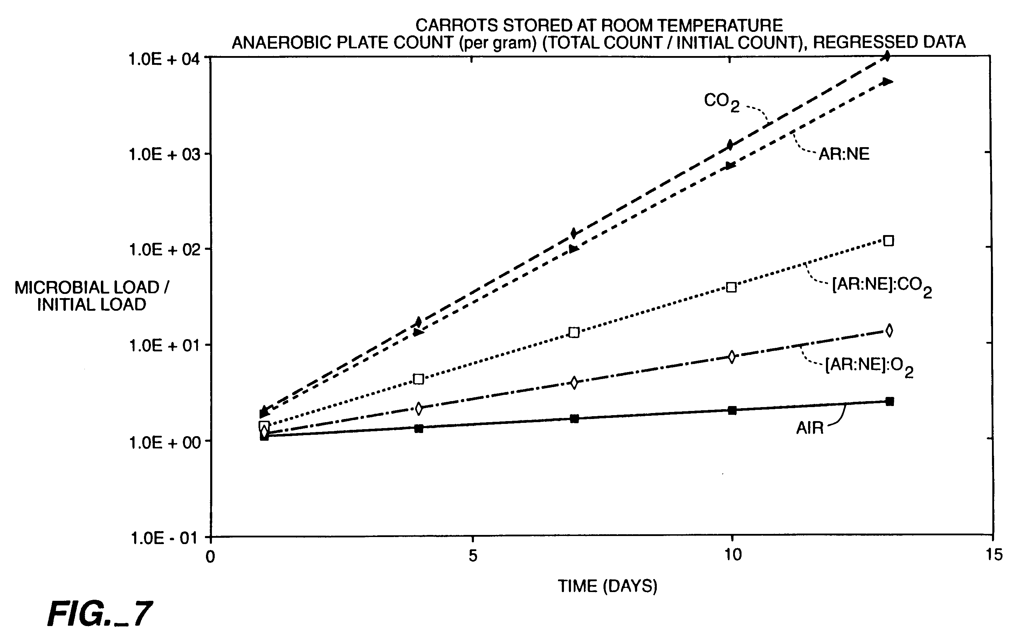

Figure 7 illustrates the effect of nitrogen at different temperatures on the rennet/skim milk system. Temperatures of 30°C, 35°C and 45°C were used.

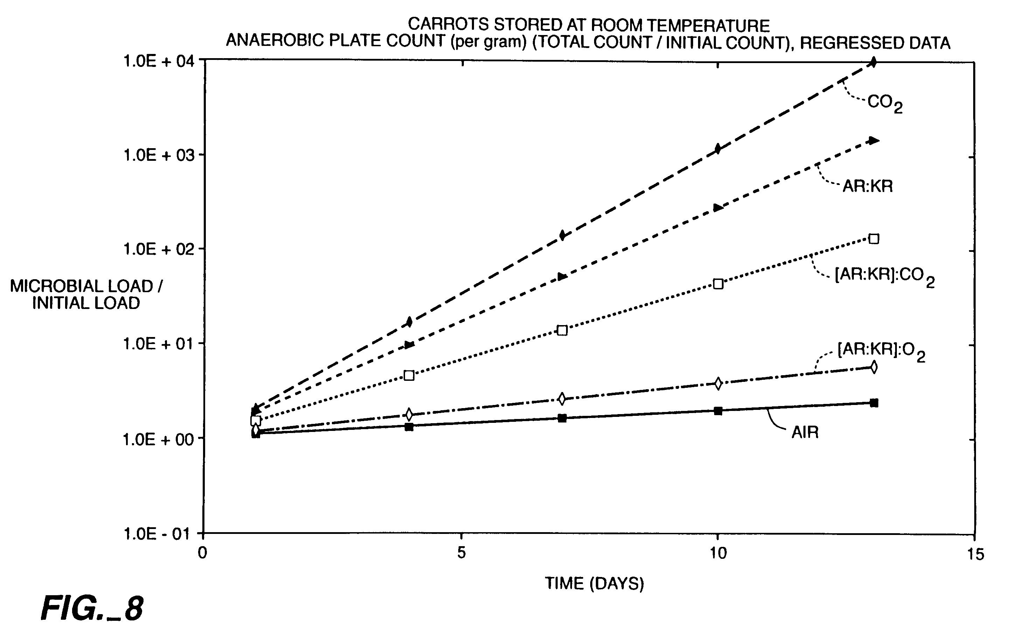

Figure 8 illustrates the relative effects of various gases on the rennet/skim milk system at 30°C.

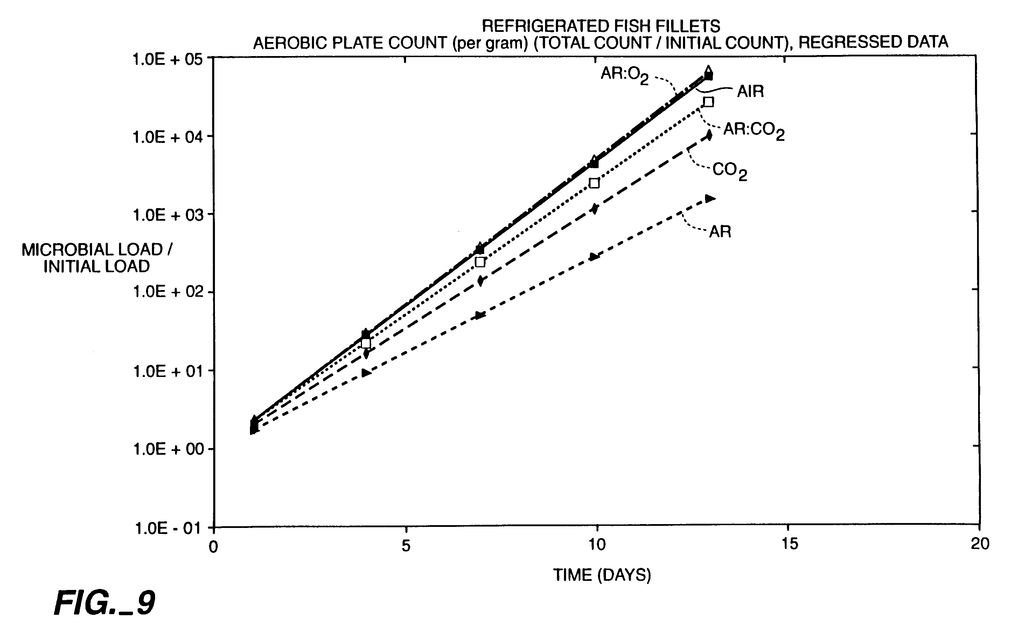

Figure 9 illustrates the relative effects of various gases on the rennet/skim milk system at 35°C.

Generally, the noble gases and gas mixtures containing the same as described above have an effect at each of the four stages of : 1) acidification, 2) coagulation, 3) ripening and 4) packaging. The processes may be controlled by temperature and pressure and the present gases exhibit surprisingly good effects in normal process ranges. Further, the effect of the present invention is particularly useful when the process is being run at less than optimal ranges of operating conditions.

Moreover, the effect of argon is quite adequate, and argon is economically advantageous for use in steps 1) and 2) and preferred therefor, however not for step 3) as the gas volumes would generally be too large. For smaller volume applications for step 3) and for step 4), it is usually preferred to use argon containing 1-30% Kr or Xe or Ne or any combination of the same.

Obviously, numerous modifications and variations of the present invention are possible in light of the above teachings. It is therefore to be understood that within the scope of the appended claims, the invention may be practiced otherwise than as specifically described herein.

Generally, any of the methods of the present invention may utilize a noble gas, mixture of noble gases or mixture containing at least one noble gas also containing one or more other gases, such as nitrogen, oxygen, air, carbon dioxide, nitrous oxide or carbon monoxide or any condition thereof.

Further, the present invention specifically contemplates the use of offstream gas mixtures, such as about 90:10(Kr/Xe).

Also, the present invention also specifically contemplates the use of mixtures of deoxygenated air, i.e., having generally less than about 15% by volume, preferably less than about 10% by volume, of air and at least one noble gas in an amount sufficient to offset the oxidizing effect of the oxygen therein.

Generally, the present gases and gas mixtures exhibit an improved food shelf-life at ambient, refrigeration, freezing or cooking temperatures, such as from about -190°C to about 260°C.

Moreover, the present gases and gas mixtures are advantageously used to increase the shelf-life of fresh horticultural commodities, such as fruits and vegetables or fresh poultry such as chicken, and related products, such as eggs. Additionally, the present invention may be used to advantage to increase the shelf-life of baked and par-baked bakery products, such as bread and doughs, and even of flavorings, spices, and fragrances, including extracts, leaf and ground spices.

Furthermore, the present invention may be used to advantage in enhancing the shelf-life in storage of fermented food products, such as cheese, yoghurts and yeasts and of dairy products, such as milk, cheese and butter.

The present gases and gas mixtures are also advantageously used in increasing the shelf-life of processed and ready-to-eat foods, such as pizza, potato chips, pretzels, nuts and other so-called snack foods.

Moreover, the effects of the present invention may be used to increase shelf-life of any food, regardless of whether the atmosphere is added during and/or after cooking.

Moreover, the effect of the present invention may be obtained in conjunction with vacuum packaging with the atmosphere added thereafter.

The present gases or gas mixtures are demonstrated to increase shelf-life of these products when processed under high pressure of these atmospheres and then stabilized at 1 atm.

The present gases or gas mixtures are effective when the noble gas or mixture of gases is dissolved in liquid before, during or after processing.

The present gases or gas mixtures are effective when the noble gas or mixture is added as a liquid, especially as during a freezing under liquefied gas.

The present gases or gas mixtures act to control the activity of enzymes important in food product degradation, including enzymes endogenous in the food, endogenous to microbial metabolism, exogenously applied during processing of the food, and exogenously secreted by the microorganism.

The present gases or gas mixtures act to control oxidation of food products.

The present gases or gas mixtures act to increase the shelf-life of food products whether these are fresh, unprocessed, processed, cooked, smoked, canned, or salted.

The present invention is effective using any means allowing contact between the gas and the food product including: flushing; injecting; sparging; application of vacuum followed by gas flushing; pressurization; introduction into an impermeable or semipermeable film covered or formed container containing product and sealed; having gas continuously flushed through, on, or around a food product; under septic or sterile conditions; wherein the container is pressurized or not; wherein the container is of a bulk, shipping, or individual serving type; wherein the container is a formable pouch, injectable pouch, sealable pouch, formable tray, vacuum formable tray or pouch, heat formable tray or pouch, or film covered tray; wherein the container is frozen, refrigerated or kept at ambient temperature, or later cooked.

Generally, the present invention provides a process for controlling the enzymes which cause microbe to grow in food and/or food by contacting said food with noble gas and/or mixtures of noble gases and/or noble gas-containing mixtures.

A process for controlling the enzymes "produced by the food itself which cause degradation of said food by contacting said food with a noble gas and/or mixtures of noble gas-containing mixtures.

A process for controlling enzymes secreted by spoilage microorganisms in and/or on food by contacting said food with a noble gas and/or mixtures of noble gases and/or noble gas-containing mixtures.

A process for controlling enzymes in and/or on food by contacting said food with a noble gas and/or mixtures of noble gases and/or noble gas-containing mixtures.

A process for preserving color and/or appearance of a food product by contacting said food with a noble gas and/or mixtures of noble gases and/or gas-containing mixtures.

A process for controlling the non-enzymatic chemical oxidation reactions of a food product by contacting said food with a noble gas and/or mixtures of noble gases and/or gas-containing mixtures.

Having described the present invention it will now be apparent to one of ordinary skill in the art that many changes and modifications may be made to the above-described embodiments without departing from the spirit and the scope of the present invention.

## Claims

1. A method of preserving a food which comprises contacting said food with a noble gas, a mixture of noble gases or a mixture containing at least one noble gas, with the exception of food comprising only vegetables.

2. The method of claim 1, wherein said preservation comprises inhibiting oxidation of said food.

3. The method of claim 1, wherein said preservation comprises inhibiting growth rates of microbial organisms on said food.

4. The method of claim 1, wherein said preservation comprises inhibiting discoloration of the food.

5. A method according to one of claims 1 to 4, wherein said food is comprised of fruits to control the ripening of the same.

6. A method according to one of claims 1 to 5, wherein chemical oxidation or enzymatic degradation of said food is delayed to inhibit spoilage of the same.

7. A method according to one of claims 1 to 6, wherein the color of the food is substantially preserved.

8. The method of claim 7, wherein said color is selected from the group consisting of red, green, yellow and orange.

9. The method of claim 7, wherein said red color is caused by anthocyanins.

10. The method of claim 7, wherein said yellow and/or orange colors is caused by cartenoids.

11. The method of claim 7, wherein said green coloir is caused by chlorophyll.

12. A method according to one of claims 1 to 11, wherein said food is chocolate.

13. A method according to one of claims 1 to 11, wherein said food is cheese.

14. A method according to one of claims 1 to 11, wherein said food comprises fruits, meat, fish, sea food, pasta or bread.

15. A gas mixture to preserve food or the like comprising at least one noble gas or noble gas mixture, said noble gas being selected from the group consisting of argon, krypton, neon, xeon or mixtures thereof.

16. A gas mixture according to claim 15 comprising a carrier gas selected from the group consisting of air, nitrogen, nitrous oxide, helium, carbon dioxide or mixtures thereof.

17. A gas mixture according to claim 16 comprising less than 50%, preferably less than 20% oxygen, carbon dioxide or a mixture thereof.

18. A gas mixture according to claim 17 comprising less than 10% oxygen, carbon dioxide or a mixture thereof.

19. A gas mixture according to claim 17 or 18 comprising essentially argon as noble gas.

20. A gas mixture according to one of claims 15 to 19 comprising a mixture of Ar and Kr or Ar and Ne in relative amount of 80-95% Ar and 5-20% Kr or, Ne or mixture thereof.

21. A gas mixture according to claim 20 comprising 5-12% $CO_2$.

TOMATOES AT ROOM TEMPERATURE

FIG._1

WEIGHT CHANGE DUE
TO GAS UPTAKE (mg)

GAS USED

FIG._2

MICROBIAL GROWTH UNDER NOBLE GAS ATMOSPHERES
A. ALTERNATA - - AIR

AREA COVERED (cm²)

DAYS POST - INOCULATION

FIG._3

EP 0 815 745 A1

MICROBIAL GROWTH UNDER NOBLE GAS ATMOSPHERES
E. COLI - - AIR

FIG._4

FIG._5

TIME (DAYS)

CARROTS STORED AT ROOM TEMPERATURE
ANAEROBIC PLATE COUNT (per gram) (TOTAL COUNT / INITIAL COUNT), REGRESSED DATA

FIG._6

CARROTS STORED AT ROOM TEMPERATURE
ANAEROBIC PLATE COUNT (per gram) (TOTAL COUNT / INITIAL COUNT), REGRESSED DATA

FIG._7

CARROTS STORED AT ROOM TEMPERATURE
ANAEROBIC PLATE COUNT (per gram) (TOTAL COUNT / INITIAL COUNT), REGRESSED DATA

FIG._8

REFRIGERATED FISH FILLETS
AEROBIC PLATE COUNT (per gram) (TOTAL COUNT / INITIAL COUNT), REGRESSED DATA

FIG._9

EP 0 815 745 A1

FIG._10

162

REFRIGERATED GREEN BEANS
AEROBIC PLATE COUNT (per ml) (TOTAL COUNT / INITIAL COUNT), REGRESSED DATA

FIG._11

FIG._12

REFRIGERATED GREEN BEANS
MOLDS(per ml) (TOTAL COUNT / INITIAL COUNT), REGRESSED DATA

AIR

$CO_2$

[AR:KR]:$O_2$

AR:KR

[AR:KR]:$CO_2$

MICROBIAL LOAD /
INITIAL LOAD

TIME (DAYS)

FIG._13

GREEN BEANS STORED AT ROOM TEMPERATURE
ANAEROBIC PLATE COUNT(per ml) (TOTAL COUNT / INITIAL COUNT), REGRESSED DATA

FIG._14

GREEN BEANS STORED AT ROOM TEMPERATURE
YEAST(per ml) (TOTAL COUNT / INITIAL COUNT), REGRESSED DATA

*FIG._15*

EP 0 815 745 A1

LETTUCE STORED AT ROOM TEMPERATURE
ANAEROBIC PLATE COUNT(per gram) (TOTAL COUNT / INITIAL COUNT), REGRESSED DATA

FIG._16

LETTUCE STORED AT ROOM TEMPERATURE
MOLDS(per gram) (TOTAL COUNT / INITIAL COUNT), REGRESSED DATA

FIG._17

REFRIGERATED MIXED SALAD
AEROBIC PLATE COUNT(per gram) (TOTAL COUNT / INITIAL COUNT), REGRESSED DATA

FIG._18

REFRIGERATED SHRIMP
AEROBIC PLATE COUNT(per gram) (TOTAL COUNT / INITIAL COUNT), REGRESSED DATA

FIG._19

EP 0 815 745 A1

REFRIGERATED SHRIMP
AEROBIC PLATE COUNT(per gram) (TOTAL COUNT / INITIAL COUNT), REGRESSED DATA

MICROBIAL LOAD /
INITIAL LOAD

TIME (DAYS)

*FIG._20*

REFRIGERATED SMELT
AEROBIC PLATE COUNT(per gram) (TOTAL COUNT / INITIAL COUNT), REGRESSED DATA

FIG._21

FIG._22

STRAWBERRIES AT ROOM TEMPERATURE
ANAEROBIC PLATE COUNT(per ml) (TOTAL COUNT / INITIAL COUNT), REGRESSED DATA

FIG._23

STRAWBERRIES AT ROOM TEMPERATURE
YEASTS(per ml) (TOTAL COUNT / INITIAL COUNT)

FIG._24

SLICED TOMATOES AT ROOM TEMPERATURE
YEASTS(per gram) (TOTAL COUNT / INITIAL COUNT), REGRESSED DATA

FIG._25

RAW MILK AND CREAM STORAGE

PASTEURIZATION

STARTER → BLEND MILK AND CREAM

RENNET →

COAGULATION

DRAINAGE

→ WHEY

MOULD CURD INTO BLOCKFORMS

16 HR "RESTING PERIOD" COOL TO 15°C → WHEY

BRINE BATH

SPRAY WITH WHITE MOLD

RIPENING AND PIERCING

PACKING AND STORAGE

## FIG._26

RAW MILK AND CREAM STORAGE

PASTEURIZATION →

STARTER → BLEND MILK AND CREAM

RENNET →

COAGULATION

SCALDING

DRAINAGE → WHEY

MILLING AND COOLING

WEIGHING AND SALTING

MOULDING AND PRESSING

DRY OFF

WRAPPING AND STORAGE

*FIG._27*

FIG._28

FIG._29

FIG._30

EP 0 815 745 A1

FIG._31

EP 0 815 745 A1

FIG._32

FIG._33

FIG._34

EP 0 815 745 A1

| | European Patent Office | EUROPEAN SEARCH REPORT | Application Number EP 97 20 1846 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 3 183 171 A (SCHREINER)<br><br>* the whole document *<br>--- | 1,3,6, 15-18 | A23L3/3445<br>A23L3/3409<br>A23B7/152<br>A23B4/16 |
| X | DE 34 46 829 A (WESTFÄLISCHE FLEISCHWARENFABRIK)<br>* example 3 *<br>--- | 1,4,7,8, 14-19 | A23G1/02<br>A23G1/18<br>A23C19/10<br>A23C19/05 |
| X | EP 0 346 201 A (L'AIR LIQUIDE)<br><br>* claims; examples *<br>--- | 1,3,6, 14-17 | A23C9/152 |
| X | COLLOMB ET AL.: "Optimisation des conditions d'entreposage des öchantillons de fromage en laboratoire à l'aide d'analyses chimiques"<br>SCHWEIZERISCHE MILCHWIRTSCHAFTLICHEFORSCHUNG,<br>vol. 21, no. 1, 1992,<br>pages 6-11, XP000390973<br>* the whole document *<br>--- | 1-4,6-8, 10,13, 15-19 | |
| X | DATABASE WPI<br>Derwent Publications Ltd., London, GB;<br> AN 85-181496<br>XP002044478<br>& JP 60 110 663 A (KUREHA CHEM. IND. KK) ,<br>17 June 1985<br>* abstract *<br>--- | 1,3, 13-16 | TECHNICAL FIELDS SEARCHED (Int.Cl.6)<br><br>A23L<br>A23B<br>A23G<br>A23C |
| X | DATABASE WPI<br>Derwent Publications Ltd., London, GB;<br> AN 88-363951<br>XP002044479<br>& JP 63 273 435 A (DAIO KK) , 10 November 1988<br>* abstract *<br>---<br><br>-/-- | 1,4,7, 15,16 | |

The present search report has been drawn up for all claims

| Place of search | Date of completion of the search | Examiner |
|---|---|---|
| THE HAGUE | 24 October 1997 | Lepretre, F |

EPO FORM 1503 03.82 (P04C01)

**European Patent Office**

**EUROPEAN SEARCH REPORT**

Application Number

EP 97 20 1846

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DATABASE WPI<br>Derwent Publications Ltd., London, GB;<br> AN 77-73631<br>XP002044480<br>& JP 52 105 232 A (TEIKOKU SANSO KK) , 3 September 1977<br>* abstract * | 1,3,14, 15,17 | |
| X | PATENT ABSTRACTS OF JAPAN<br>vol. 8, no. 30 (C-209), 8 February 1984<br>& JP 58 193651 A (KAWAI MASO), 11 November 1983,<br>* abstract * | 1,12,15 | |
| X | DATABASE WPI<br>Derwent Publications Ltd., London, GB;<br> AN 79-65468<br>XP002044481<br>& JP 54 094 779 A (TOKYO SHIBAURA ELECTRIC CO.) , 26 July 1979<br>* abstract * | 15,20 | |
| X | DATABASE WPI<br>Derwent Publications Ltd., London, GB;<br> AN 78-73421<br>XP002044482<br>& JP 53 100 681 A (TOKYO SHIBAURA ELECTRIC CO) , 2 September 1978<br>* abstract * | 15,20 | TECHNICAL FIELDS SEARCHED (Int.Cl.6) |

The present search report has been drawn up for all claims

| Place of search | Date of completion of the search | Examiner |
|---|---|---|
| THE HAGUE | 24 October 1997 | Lepretre, F |